(19) Europäisches Patentamt
European Patent Office
Office européen des brevets

(11) **EP 2 833 634 A1**

(12) **EUROPEAN PATENT APPLICATION**
published in accordance with Art. 153(4) EPC

(43) Date of publication:
**04.02.2015 Bulletin 2015/06**

(51) Int Cl.:
***H04N 7/32*** *(0000.00)*  ***H04N 13/04*** *(2006.01)*

(21) Application number: **13769892.4**

(22) Date of filing: **21.03.2013**

(86) International application number:
**PCT/JP2013/057993**

(87) International publication number:
**WO 2013/146507 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2012 JP 2012082533**

(71) Applicant: **Sony Corporation Tokyo 108-0075 (JP)**

(72) Inventors:
• **KOTAKA Naohiko**
**Tokyo 108-0075 (JP)**
• **YOSHIHARA Yoshikazu**
**Tokyo 108-0075 (JP)**
• **MATSUKURA Kentaro**
**Tokyo 108-0075 (JP)**

(74) Representative: **Meldrum, David James et al D Young & Co LLP 120 Holborn London EC1N 2DY (GB)**

(54) **IMAGE PROCESSING DEVICE AND METHOD, AND RECORDING MEDIUM**

(57) Provided is an image processing device including a transform unit configured to transform a coding parameter used in coding of a first image into a coding parameter of a second image which is different from the first image and is of substantially the same time as the first image, and a second-image coding unit configured to code the second image using the coding parameter of the second image obtained through the transform by the transform unit.

**FIG.2**

## Description

Technical Field

The present disclosure relates to an image processing device and method and a recording medium, and particularly to an image processing device and method and a recording medium that enable suppression of an increase of a load of image coding.

Background Art

In recent years, content that includes a plurality of moving images such as multi-viewpoint images for stereoscopic view has become widespread. As one coding scheme of such content that includes a plurality of moving images, for example, there is an MVC (Multi-view Video Coding) standard which is an expansion of the MPEG (Moving Picture Experts Group) 4 AVC (Advanced Video Coding) H.264 standard (H.264/AVC standard). In the MVC standard, a video stream called a base view video stream and a video stream called a dependent view video stream are defined (for example, refer to Patent Literature 1).

In the MVC standard, various processes relating to coding, for example, intra-prediction, inter-prediction, an orthogonal transform, quantization, lossless coding, rate control, and the like are performed for each image.

Citation List

Patent Literature

Patent Literature 1: JP 2011-216965A

Summary of Invention

Technical Problem

Although such a plurality of moving images are generally highly likely to have high correlativity, independent coding processes are performed for each of the moving images in the case of a coding scheme of the related art, and in each of the processes, various coding parameters are elicited.

The processes relating to elicitation of the various coding parameters are all processes accompanied by large processing amounts and high loads, and are redundantly executed as described above, and thus there is concern of the load of a coding process unnecessarily increasing.

The present disclosure is proposed taking the above circumstance into consideration, and aims to enable suppression of an increase of a load of image coding.

Solution to Problem

According to an aspect of the present disclosure, there is provided an image processing device including a transform unit configured to transform a coding parameter used in coding of a first image into a coding parameter of a second image which is different from the first image and is of substantially the same time as the first image, and a second-image coding unit configured to code the second image using the coding parameter of the second image obtained through the transform by the transform unit.

The coding parameter may include one or two or more of a GMV (Global Motion Vector), a rate control parameter, a motion vector, and an intra-prediction mode.

In a case in which the coding parameter includes the rate control parameter, the rate control parameter may be a target bit or a delta Q value.

In a case in which the coding parameter is the intra-prediction mode, the transform unit may shift the intra-prediction mode.

In a case in which the coding parameter is the intra-prediction mode, the transform unit may limit candidate prediction directions for an intra-prediction mode of the second image according to the intra-prediction mode of the first image.

In a case in which the coding parameter is the intra-prediction mode, the transform unit may process the intra-prediction mode only for some blocks.

The coding unit may code a plurality of images in a time division scheme.

A first image coding unit configured to code the first image may be further included.

An eliciting unit configured to elicit a coding parameter of the first image may be further included, and the transform unit may transfonn the coding parameter of the first image elicited by the eliciting unit into the coding parameter of the second image.

The transform unit may transform the coding parameter of the first image elicited by the eliciting unit into the coding parameter of the second image of the same timing as the timing at which the first image is elicited.

The transform units and the coding units may each be included for a plurality of images other than the first image, each transform unit may transform the coding parameter of the first image into a coding parameter of each image corresponding to each transform unit, and each coding unit may code each image corresponding to each coding unit using the coding parameter of the image.

The transform unit may transform the coding parameter using image information of the first image and image information of the second image.

The image information may be an angle of view, and the transform unit may transform the coding parameter using a ratio of the angles of view of the first image and the second image.

The image information may be an image size, and the transform unit may transform the coding parameter using a ratio of the image sizes of the first image and the second image.

The image information may be a frame rate, and the transform unit may transform the coding parameter using a ratio of the frame rates of the first image and the second image.

The image information may be a bit rate, and the transform unit may transform the coding parameter using a ratio of the bit rates of the first image and the second image.

A first image information acquisition unit configured to acquire the image information of the first image and a second image information acquisition unit configured to acquire the image information of the second image may be further included.

An image information acquisition unit configured to acquire the image information of the first image and the image information of the second image in a time division scheme may be further included.

According to another aspect of the present disclosure, there is provided an image processing method of an image processing device, including transforming, by a transform unit, a coding parameter used in coding of a first image into a coding parameter of a second image which is different from the first image and is of substantially the same time as the first image, and coding, by a second-image coding unit, the second image using the coding parameter of the second image obtained through the transforming.

According to another aspect of the present disclosure, there is provided a computer-readable recording medium on which a program is recorded, the program for causing a computer to function as a transform unit configured to transform a coding parameter used in coding of a first image into a coding parameter of a second image which is different from the first image and is of substantially the same time as the first image, and a second-image coding unit configured to code the second image using the coding parameter of the second image obtained through the transform by the transform unit.

According to another aspect of the present disclosure, a coding parameter used in coding of a first image is transformed into a coding parameter of a second image which is different from the first image and is of substantially the same time as the first image, and the second image is coded using the coding parameter of the second image obtained from the transforming.

Advantageous Effects of Invention

According to the present disclosure, an image can be processed. Particularly, an increase of a load of image coding can be suppressed.

Brief Description of Drawings

[FIG. 1] FIG. 1 is a block diagram showing a main configuration example of an image coding device of the related art.
[FIG. 2] FIG. 2 is a block diagram showing a main configuration example of an image coding device of the present disclosure.
[FIG. 3] FIG. 3 is a block diagram showing another configuration example of the image coding device of the present disclosure.
[FIG. 4] FIG. 4 is a block diagram showing a main configuration example of a first coding unit.
[FIG. 5] FIG. 5 is a block diagram showing a main configuration example of a second coding unit.
[FIG. 6] FIG. 6 is a flowchart showing an example of the flow of a plural image coding process.
[FIG. 7] FIG. 7 is a flowchart showing an example of the flow of a coding process.

[FIG. 8] FIG. 8 is a flowchart showing an example of the flow of an inter-motion prediction process on a coding parameter provision side.

[FIG. 9] FIG. 9 is a flowchart describing an example of the flow of a GMV elicitation process.

[FIG. 10] FIG. 10 is a flowchart showing an example of the flow of an inter-notion prediction process on the coding parameter provision side.

[FIG. 11] FIG. 11 is a flowchart showing an example of the flow of a GMV conversion process.

[FIG. 12] FIG. 12 is a diagram illustrating an example of a feedforward state.

[FIG. 13] FIG. 13 is a diagram illustrating an example of different image information between moving images.

[FIG. 14] FIG. 14 is a diagram illustrating an example of different image information between moving images.

[FIG. 15] FIG. 15 is a block diagram showing another configuration example of the first coding unit.

[FIG. 16] FIG. 16 is a block diagram showing another configuration example of the second coding unit.

[FIG. 17] FIG. 17 is a flowchart describing another example of the flow of the coding process.

[FIG. 18] FIG. 18 is a flowchart describing an example of the flow of a rate control process on the coding parameter provision side.

[FIG. 19] FIG. 19 is a flowchart describing an example of the flow of a rate control process on a coding parameter acquisition side.

[FIG. 20] FIG. 20 is a flowchart describing another example of the flow of the rate control process on the coding parameter provision side.

[FIG. 21] FIG. 21 is a flowchart describing another example of the flow of the rate control process on the coding parameter acquisition side.

[FIG. 22] FIG. 22 is a diagram illustrating an example of a feedforward state.

[FIG. 23] FIG. 23 is a block diagram showing still another configuration example of the first coding unit.

[FIG. 24] FIG. 24 is a block diagram showing still another configuration example of the second coding unit.

[FIG. 25] FIG. 25 is a block diagram showing a main configuration example of an MV elicitation unit of the related art.

[FIG. 26] FIG. 26 is a block diagram showing a main configuration example of an MV elicitation unit and an MV conversion unit.

[FIG. 27] FIG. 27 is a flowchart showing another example of the flow of the inter-motion prediction process on the coding parameter provision side.

[FIG. 28] FIG. 28 is a flowchart showing an example of the flow of a motion vector search process on the coding parameter provision side.

[FIG. 29] FIG. 29 is a flowchart showing another example of the flow of the inter-motion prediction process on the coding parameter acquisition side.

[FIG. 30] FIG. 30 is a flowchart showing an example of the flow of the motion vector search process on the coding parameter acquisition side.

[FIG. 31] FIG. 31 is a block diagram showing still another configuration example of the first coding unit.

[FIG. 32] FIG. 32 is a block diagram showing still another configuration example of the second coding unit.

[FIG. 33] FIG. 33 is a block diagram showing main configuration examples of intra prediction units.

[FIG. 34] FIG. 34 is a diagram illustrating an example of a shift of an intra prediction mode.

[FIG. 35] FIG. 35 is a flowchart describing still another example of the flow of the coding process.

[FIG. 36] FIG. 36 is a flowchart describing an example of the flow of an intra-prediction process on the coding parameter provision side.

[FIG. 37] FIG. 37 is a flowchart describing an example of the flow of an intra-prediction process on the coding parameter acquisition side.

[FIG. 38] FIG. 38 is a flowchart describing an example of the flow of an intra-transform process.

[FIG. 39] FIG. 39 is a flowchart describing another example of the flow of the intra-transform process.

[FIG. 40] FIG. 40 is a flowchart describing still another example of the flow of the intra-transform process.

[FIG. 41] FIG. 41 is a flowchart describing still another example of the flow of the intra-transform process.

[FIG. 42] FIG. 42 is a flowchart describing still another example of the flow of the intra-transform process.

[FIG. 43] FIG. 43 is a block diagram showing a main configuration example of an image decoding device of the present disclosure.

[FIG. 44] FIG. 44 is a block diagram showing a main configuration example of a first decoding unit.

[FIG. 45] FIG. 45 is a block diagram showing a main configuration example of a second decoding unit.

[FIG. 46] FIG. 46 is a flowchart describing an example of the flow of a plural image decoding process.

[FIG. 47] FIG. 47 is a flowchart describing an example of the flow of a decoding process.

[FIG. 48] FIG. 48 is a flowchart describing an example of the flow of a prediction process.

[FIG. 49] FIG. 49 is a block diagram showing a main configuration example of a computer.

Description of Embodiments

Hereinafter, embodiments for implementing the present disclosure (hereinafter referred to as embodiments) will be described. Note that description will be provided in the following order.

1. First embodiment (Image coding device: Coding parameter)
2. Second embodiment (Image coding device: GMV)
3. Third embodiment (Image coding device: Rate control parameter)
4. Fourth embodiment (Image coding device: MV)
5. Fifth embodiment (Image coding device: Intra-prediction mode)
6. Sixth embodiment (Image decoding device: Intra-prediction mode)
7. Seventh embodiment (Computer)

<1. First embodiment>

[Coding parameter]

In the related art, there is an image coding device that codes content having a plurality of moving images.

(1) Image coding device of the related art

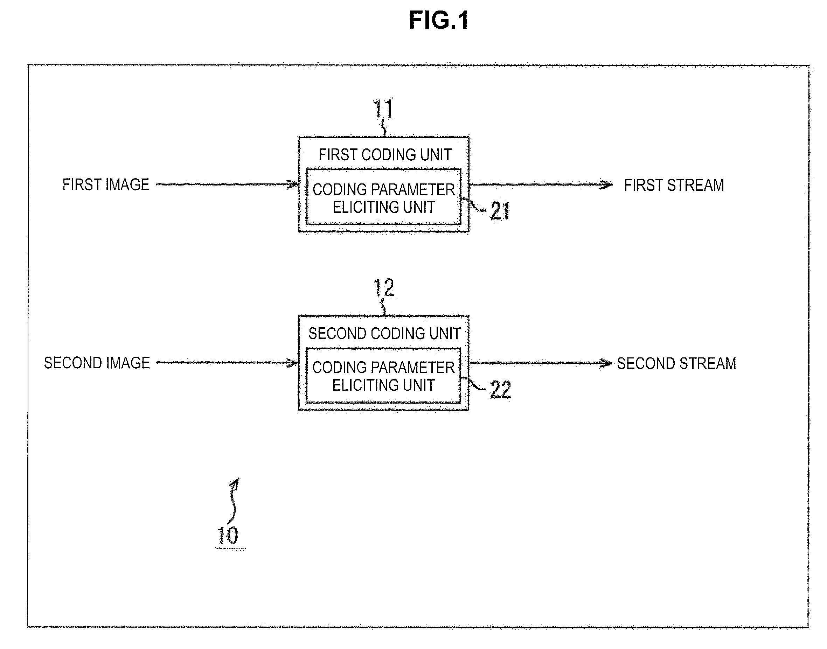

FIG. 1 shows a main configuration example of the image coding device of the related art which codes two moving images. In the case of the image coding device 10 of the related art, each of the moving images (first image and second image) included in the content is acquired, and each image is coded and then output as a bit stream (first bit stream and second bit stream).
As shown in FIG. 1, the image coding device 10 has a first coding unit 11 and a second coding unit 12. The first coding unit 11 codes a first image, thereby generating a first stream. The second coding unit 12 codes a second image, thereby generating a second stream.
The first coding unit 11 has a coding parameter eliciting unit 21. The coding parameter eliciting unit 21 elicits various coding parameters to be used by the first coding unit 11.
The second coding unit 12 has a coding parameter eliciting unit 22. The coding parameter eliciting unit 22 elicits various coding parameters to be used by the second coding unit 12.
The first coding unit and the second coding unit are basically the same, and perform the same processes. In addition, the first image and the second image are moving images of the same content and thus have high correlativity. That is to say, a coding parameter elicited by the coding parameter eliciting unit 21 also has high correlativity with a coding parameter elicited by the coding parameter eliciting unit 22.
The image coding device 10 of the related art, however, elicits encoding parameters mutually independently for each of the first image and the second image as described above. Accordingly, the process includes many redundant portions, and thus is inefficient. In other words, there is concern that eliciting coding parameters for each of images unnecessarily intensifies a load of a coding process.

(2) Image coding device (Two viewpoints)

Therefore, in order to suppress such an unnecessary increase of a load of a coding process for a plurality of images, a coding parameter generated for a certain image is also set to be usable in a coding process for another image.

(2-1) Configuration

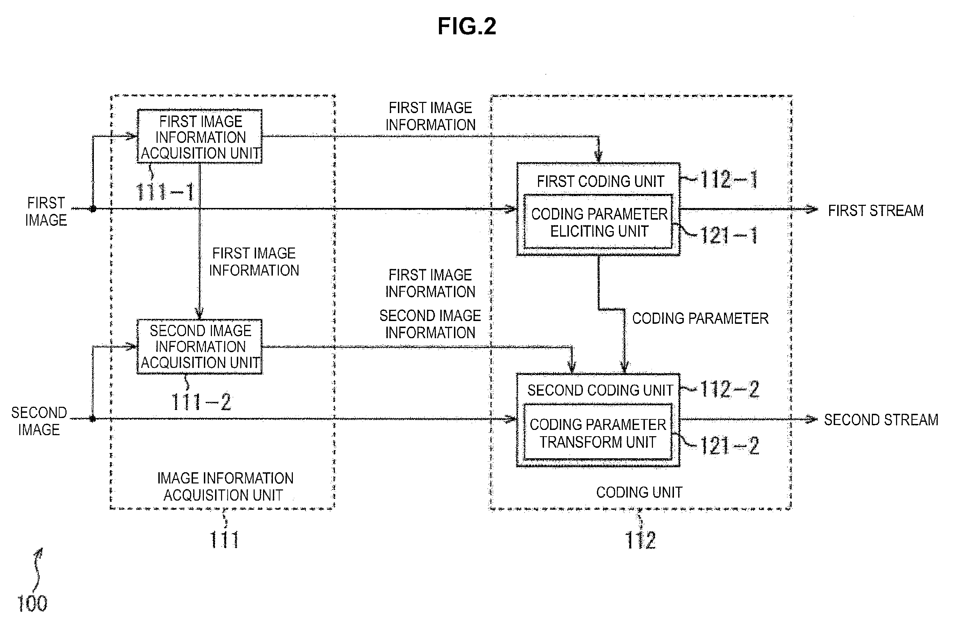

FIG. 2 is a block diagram showing an example of a configuration of an image coding device 100 according to an embodiment of the present disclosure. The image coding device 100 shown in FIG. 2 is an image processing device to which the present technology is applied.
The image coding device 100 codes each of input moving images (a first image and a second image) of two systems as the image coding device 10 does, and outputs obtained coded data (a first stream and a second stream) of two systems.
As shown in FIG. 2, the image coding device 100 has a first image information acquisition unit 111-1, a second image information acquisition unit 111-2, a first coding unit 112-1, and a second coding unit 112-2.
The first image information acquisition unit 111-1 acquires first image information that is information relating to the input first image, for example, an angle of view, an image size, a frame rate, information relating to parallax, a bit rate, a signal component, an imaging condition, and the like. Note that pieces of content of the first image information are arbitrary as long as they relate to the first image, and the number thereof is also arbitrary. Thus, for example, information included in the first image information is not limited to the above example, and may only be a part of the above-described example.

The first image information acquisition unit 111-1 extracts the first image information from, for example, the header of the input first image. In addition, the first image information acquisition unit 111-1 can also acquire the first image information by performing communication with, for example, a camera (not illustrated) that images a subject, thereby acquiring the first image. An acquisition source or an acquisition method of the first image information is of course arbitrary, and the first image information acquisition unit 111-1 can acquire the first image information from a location other than that described above using a method other than that described above. For example, the first image information acquisition unit 111-1 can also acquire the first image information from a plurality of locations using different methods.

The first image information acquisition unit 111-1 supplies the acquired first image information to the first coding unit 112-1. The first image information acquisition unit 111-1 can also supply the acquired first image information to the second image information acquisition unit 111-2.

The second image information acquisition unit 111-2 acquires second image information that is information relating to the input second image, for example, an angle of view, an image size, a frame rate, information relating to parallax, a bit rate, a signal component, an imaging condition, and the like. Note that pieces of content of the second image information are arbitrary as long as they relate to the second image, and the number thereof is also arbitrary. Thus, for example, information included in the second image information is not limited to the above example, and may only be a part of the above-described example.

The second image information acquisition unit 111-2 extracts the second image information from, for example, the header of the input second image. In addition, the second image information acquisition unit 111-2 can also acquire the second image information by performing communication with, for example, a camera (not illustrated) that images a subject to acquire the second image. An acquisition source or an acquisition method of the second image information is of course arbitrary, and the second image information acquisition unit 111-2 can acquire the second image information from a location other than that described above using a method other than that described above. For example, the second image information acquisition unit 111-2 can also acquire the second image information from a plurality of locations using different methods.

The second image information acquisition unit 111-2 supplies the acquired second image information to the second coding unit 112-2. In addition, the second image information acquisition unit 111-2 supplies the first image information supplied from the first image information acquisition unit 111-1 to the second image information acquisition unit 111-2.

The first coding unit 112-1 codes the first image by appropriately using the first image information supplied from the first image information acquisition unit 111-1, and outputs the generated first stream to the outside of the image coding device 100.

The first coding unit 112-1 has a coding parameter eliciting unit 121-1. The coding parameter eliciting unit 121-1 elicits (generates) at least one or more coding parameters necessary for coding the first image. The coding parameter eliciting unit 121-1 can elicit an arbitrary number of and arbitrary types of coding parameters. As examples of coding parameters, for example, there are a GMV (Global Motion Vector), an MV (Motion Vector), a target bit, a Q value, and an intra-prediction mode. The coding parameter eliciting unit 121-1 can of course elicit other coding parameters.

The first coding unit 112-1 (coding parameter eliciting unit 121-1) can supply at least any one of coding parameters elicited (generated) by the coding parameter eliciting unit 121-1 to the second coding unit 112-2.

The second coding unit 112-2 codes the second image by appropriately using the first image information and the second image information supplied from the second image information acquisition unit 111-2, and outputs the generated second stream to the outside of the image coding device 100.

The second coding unit 112-2 has a coding parameter conversion unit 121-2. The coding parameter conversion unit 121-2 acquires the coding parameter supplied from the first coding unit 112-1 (coding parameter eliciting unit 121-1).

The coding parameter is elicited for coding the first image information, and thus is set to be a value appropriate for the first image. Thus, the coding parameter conversion unit 121-2 converts the value of the acquired coding parameter into a value appropriate for the second image information using the first image information and the second image information.

The second coding unit 112-2 codes the second image using the coding parameter whose value has been converted by the coding parameter conversion unit 121-2.

As described above, the image coding device 100 can divert the coding parameter generated for coding of the first image also to coding of the second image. Thus, the image coding device 100 can reduce the process of eliciting the coding parameter that causes a heavy load. In other words, the image coding device 100 can reduce redundant processes and thus can suppress an increase of a load unnecessary for image coding.

Note that a coding scheme of the first coding unit 112-1 and the second coding unit 112-2 is arbitrary. The first coding unit 112-1 and the second coding unit 112-2, however, are set to perform coding using the same coding scheme. The first coding unit 112-1 and the second coding unit 112-2 can of course be designed to perform coding using different coding schemes, but by making the units use the same coding scheme, diversion of a coding parameter as described above becomes easy.

Note that the first image information acquisition unit 111-1 and the second image information acquisition unit 111-2 can also be designed to be one image information acquisition unit 111. In such a case, the image information acquisition unit 111 performs both acquisition of the first image information and acquisition of the second image information in, for example, a time division manner.

In addition, for example, the first coding unit 112-1 and the second coding unit 112-2 can also be designed to be one coding unit 112. In such a case, the coding unit 112 performs both coding operations of the first image and coding of the second image in, for example, a time division manner.

The image coding device 100 may of course be designed to code moving images of one system using a plurality of coding units, or to acquire image information using a plurality of image information acquisition units. That is to say, the numbers of image information acquisition units and coding units that the image coding device 100 has are arbitrary.

Note that, when input image information of the first image and the second image has already been given, for example, the image information acquisition unit 111 (first image information acquisition unit 111-1 and second image information acquisition unit 111-2) can also be omitted. When, for example, the image coding device 100 performs coding based on the MVC (Multi-view Video Coding) standard, parallax between images is given, and thus the image information acquisition unit 111 (first image information acquisition unit 111-1 and second image information acquisition unit 111-2) can be omitted.

(2-2) Image

Herein, moving images processed by the image coding device 100 will be described.

The first image and the second image input to the image coding device 100 are a moving image set that can be provided as one piece of content. Each of the first image and the second image may be any type of moving image.

For example, generation methods of each of the first image and the second image are arbitrary. The images may be, for example, moving images obtained by a camera or the like imaging subjects, moving images generated by editing other images, or moving images such as computer graphics or animations generated through methods other than imaging.

In addition, in the case of imaging, the first image and the second image may be imaged by the same camera, or imaged by different cameras. In addition, subjects of the first image and the second image may be completely or substantially the same or may be different from each other.

Content of graphics of the first image and the second image may be different from each other, but high correlativity between the images is desirable for easy diversion of a coding parameter. The first image and the second image, however, are not completely the same image, and have at least one or more pieces of different image information.

Kinds of image information are arbitrary. For example, the image information may include an angle of view, an image size, a frame rate (fps), parallax, resolution, a bit rate, and the like. In addition, the image information may be, for example, imaging conditions including an environment at the time of imaging (for example, brightness, temperature, humidity, time, place, and the like) or setting of a camera (for example, exposure, shutter speed, device information of the camera or a memory, and the like), editing conditions including an application used in editing or content of editing, information representing a progressive or interlace scheme, or the like. The image information may of course be information other than that described above.

Since the first image and the second image are not completely the same but have high correlativity, the images may be, for example, moving images obtained by imaging substantially the same subject at substantially the same time. In this case, imaging timings of frames (or fields) may be the same or different, but can generally be regarded as practically the same in all cases.

Display methods of the first image and the second image are arbitrary. For example, such moving images may be displayed in parallel (practically at the same time). In this case, image display timings of frames (or fields) may be the same or different, but can generally be regarded as practically the same in all cases.

(3) Image coding device (N viewpoints)

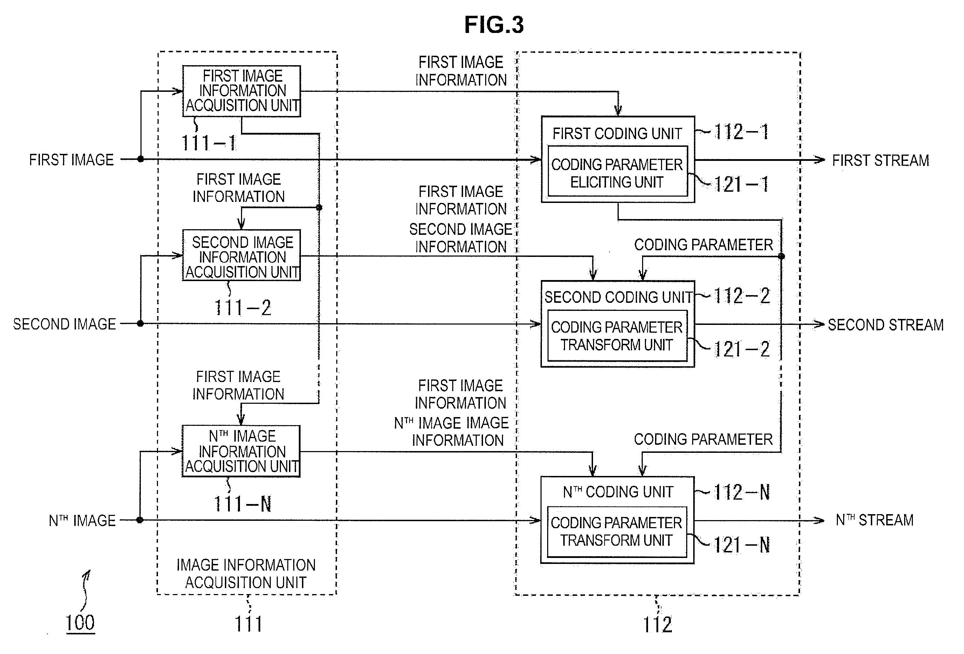

Note that the number of systems of moving images to be processed is arbitrary. For example, the image coding device 100 may be set to code images of N systems (first image to $N^{th}$ image) as shown in FIG. 3. In this case, image acquisition units and coding units for each system of moving images may be provided as shown in FIG. 3, but one image acquisition unit and coding unit may be set to process moving images of a plurality of systems in a time division manner.

In that case, a coding parameter eliciting unit provided in any one or more coding unit elicits a coding parameter. A coding parameter conversion unit is provided in another coding unit, and converts the coding parameter elicited by the coding parameter eliciting unit for use.

The image coding device 100 accordingly can omit a process for eliciting a coding parameter that causes a heavy load. In other words, the image coding device 100 can reduce redundant processes and thus can suppress an increase of a load unnecessary for image coding.

Hereinbelow, a specific example of a coding parameter will be described. Note that a case in which the image coding device 100 processes moving images of two systems (i.e., the example of FIG. 2) will be described hereinbelow. The description, however, can also be applied to a case in which the image coding device 100 processes moving images of three or more systems (i.e., the example of FIG. 3) as long as there is no contradiction.

<2. Second embodiment>

[GMV]

As an example of a coding parameter, a GMV (Global Motion Vector) will be described. A GMV is a motion vector indicating a motion of all pictures. To be more specific, a GMV is a motion vector with a highest frequency within pictures, for example, among motion vectors generated for each macroblock.

The GMV is used as one origination of search for motion vectors in motion prediction of a frame or a field to be processed later in terms of time than a frame or a field elicited by the GMV. In other words, the GMV is for predicting motion vectors with a certain degree of accuracy at the time of starting motion prediction. As the GMV is used in that manner, search of motion vectors can be expected to be performed more efficiently.

A histogram of motion vectors is aggregated for an entire picture, and a motion vector having a highest frequency is selected as a GMV. In such a GMV elicitation process, generation of a histogram, search of a motion vector having a high frequency, and the like cause a heavy load.

The image coding device 100 uses the GMV elicited in the first coding unit 112-1 in the coding process of the second coding unit 112-2 as described above, and thereby can omit the processes relating to elicitation of the GMV that causes a heavy load. Accordingly, the image coding device 100 can realize suppression of an increase of a load.

(1) Coding unit

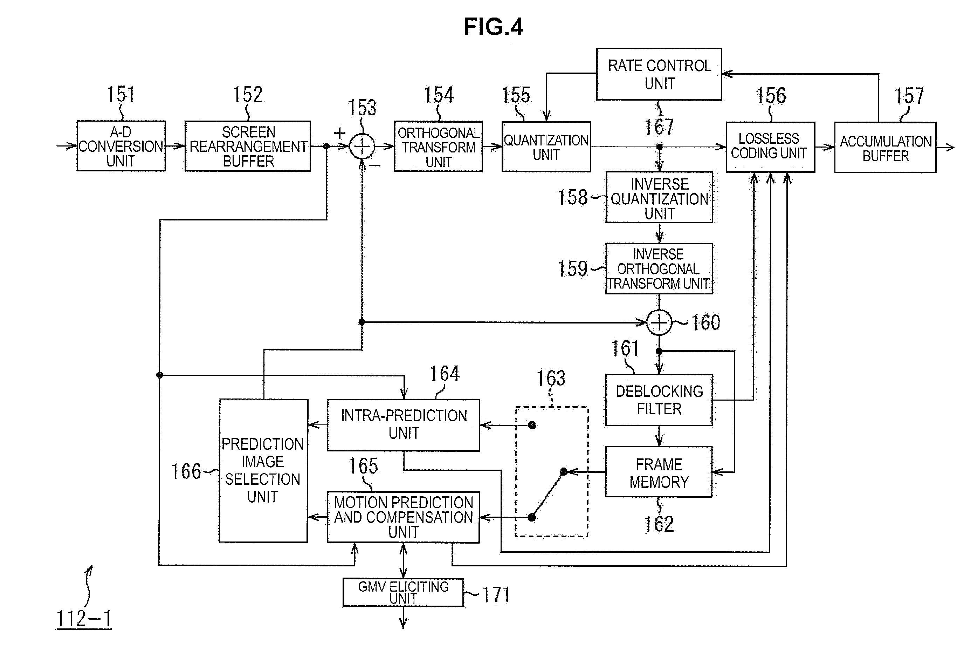

FIG. 4 is a block diagram showing a main configuration example of the first coding unit 112-1 of this case.

The first coding unit 112-1 shown in FIG. 4 codes image data using a prediction process as in the coding scheme of H.264 and MPEG (Moving Picture Experts Group) 4 Part 10 (AVC (Advanced Video Coding)).

The first coding unit 112-1 has an A-D conversion unit 151, a screen rearrangement buffer 152, a computation unit 153, an orthogonal transform unit 154, a quantization unit 155, a lossless coding unit 156, and an accumulation buffer 157 as shown in FIG. 4. In addition, the first coding unit 112-1 has an inverse quantization unit 158, an inverse orthogonal transform unit 159, a computation unit 160, a deblocking filter 161, a frame memory 162, a selection unit 163, an intra-prediction unit 164, a motion prediction and compensation unit 165, a prediction image selection unit 166, and a rate control unit 167.

The first coding unit 112-1 further has a GMV eliciting unit 171.

The A-D conversion unit 151 performs A-D conversion for input image data, and supplies the converted image data (digital data) to the screen rearrangement buffer 152 to be stored therein. The screen rearrangement buffer 152 rearranges images of frames in a stored display order in a frame order of for coding according to GOP (Group of Picture), and supplies the images rearranged in the frame order to the computation unit 153. In addition, the screen rearrangement buffer 152 also supplies the images rearranged in the frame order to the intra-prediction unit 164 and the motion prediction and compensation unit 165.

The computation unit 153 subtracts a prediction image supplied from the intra-prediction unit 164 or the motion prediction and compensation unit 165 via the prediction image selection unit 166 from an image read from the screen rearrangement buffer 152, and then outputs the differential information to the orthogonal transform unit 154.

In the case of an image for which inter-coding is to be performed, for example, the computation unit 153 subtracts a prediction image supplied from the motion prediction and compensation unit 165 from the image read from the screen rearrangement buffer 152.

The orthogonal transform unit 154 performs an orthogonal transform such as a discrete cosine transform or a Karhunen-Loeve transform for the differential information supplied from the computation unit 153. Note that a method of the orthogonal transform is arbitrary. The orthogonal transform unit 154 supplies a transform coefficient thereof to the quantization unit 155.

The quantization unit 155 quantizes the transform coefficient supplied from the orthogonal transform unit 154.

The quantization unit 155 sets a quantization parameter based on information relating to a target value of a code amount supplied from the rate control unit 167 and then performs quantization. Note that a method of the quantization is arbitrary. The quantization unit 155 supplies the quantized transform coefficient to the lossless coding unit 156.

The lossless coding unit 156 codes the transform coefficient quantized in the quantization unit 155 in an arbitrary coding scheme. Since the coefficient data is quantized under control of the rate control unit 167, a code amount thereof is a target value (or approximates the target value) set by the rate control unit 167.

In addition, the lossless coding unit 156 acquires information representing an intra-prediction mode or the like from the intra-prediction unit 164, and acquires information representing an inter-prediction mode, motion vector information, and the like from the motion prediction and compensation unit 165. Furthermore, the lossless coding unit 106 acquires a filter coefficient or the like used in the deblocking filter 161.

The lossless coding unit 156 codes various kinds of information in an arbitrary coding scheme to set such information as part of header information of coded data (multiplexing). The lossless coding unit 156 supplies the coded data obtained through the coding to the accumulation buffer 157 to be accumulated therein.

As a coding scheme of the lossless coding unit 156, for example, variable-length coding, arithmetic coding, or the like is exemplified. As the variable-length coding, for example, CAVLC (Context-Adaptive Variable Length Coding) defined in the H.264/AVC scheme or the like is exemplified. As the arithmetic coding, for example, CABAC (Context-Adaptive Binary Arithmetic Coding) or the like is exemplified.

The accumulation buffer 157 temporarily retains the coded data supplied from the lossless coding unit 156. The accumulation buffer 157 outputs the retained coded data to, for example, a recording device (recording medium) in the later stage, which is not illustrated, a transmission line, or the like as a bit stream at a predetermined timing.

In addition, the transform coefficient quantized in the quantization unit 155 is also supplied to the inverse quantization unit 158. The inverse quantization unit 158 performs inverse quantization on the quantized transform coefficient using a method corresponding to the quantization by the quantization unit 155. The method of the inverse quantization may be any method as long as the method corresponds to the quantization process performed by the quantization unit 155. The inverse quantization unit 158 supplies the obtained transform coefficient to the inverse orthogonal transform unit 159.

The inverse orthogonal transform unit 159 performs an inverse orthogonal transform on the transform coefficient supplied from the inverse quantization unit 158 using a method corresponding to the orthogonal transform process performed by the orthogonal transform unit 154. The method of the inverse orthogonal transform may be any method as long as the method corresponds to the orthogonal transform process performed by the orthogonal transform unit 154. An output that has undergone an inverse orthogonal transform (restored differential information) is supplied to the computation unit 160.

The computation unit 160 adds the prediction image supplied from the intra-prediction unit 164 or the motion prediction and compensation unit 165 via the prediction image selection unit 166 to the inverse orthogonal transform result supplied from the inverse orthogonal transform unit 159, i.e., the restored differential information, thereby obtaining a partially decoded image (decoded image). The decoded image is supplied to the deblocking filter 161 or the frame memory 162.

The deblocking filter 161 performs a deblocking filtering process on the decoded image supplied from the computation unit 160 to remove block distortion of the decoded image. The deblocking filter 161 can also supply information such as a filter coefficient used in the filtering process to the lossless coding unit 156 so as to code the information if necessary.

The deblocking filter 161 supplies the filtering process result (decoded image after the filtering process) to the frame memory 162. Note that, as described above, the decoded image output from the computation unit 160 can be supplied to the frame memory 162 without passing the deblocking filter 161. In other words, the filtering process that is performed by the deblocking filter 161 can be omitted.

The frame memory 162 stores the supplied decoded image, and supplies the stored decoded image to the selection unit 163 as a reference image at a predetermined timing.

The selection unit 163 selects a supply destination of the reference image supplied from the frame memory 162. For example, in the case of inter-prediction, the selection unit 163 supplies the reference image supplied from the frame memory 162 to the motion prediction and compensation unit 165.

The intra-prediction unit 164 performs intra-prediction (in-screen prediction) for generating prediction images using a pixel value within a process target picture that is the reference image supplied from the frame memory 162 via the selection unit 163. The intra-prediction unit 164 performs the intra-prediction in a plurality of modes (intra-prediction modes) prepared in advance.

The intra-prediction unit 164 generates prediction images in all candidate intra-prediction modes, evaluates a cost function value of each of the prediction images using the input image supplied from the screen rearrangement buffer 152, and then selects an optimum mode. When the optimum intra-prediction mode is selected, the intra-prediction unit 164 supplies a prediction image generated in the optimum mode to the prediction image selection unit 166.

In addition, as described above, the intra-prediction unit 164 appropriately supplies intra-prediction mode information representing the employed intra-prediction mode or the like to the lossless coding unit 156 to be coded.

The motion prediction and compensation unit 165 performs motion prediction (inter-prediction) using the input image supplied from the screen rearrangement buffer 152 and the reference image supplied from the frame memory 162 via the selection unit 163, performs a motion compensation process according to detected motion vectors, and thereby generates prediction images (inter-prediction image information). The motion prediction and compensation unit 165 performs such inter-prediction in a plurality of modes (inter-prediction modes) prepared in advance.

The motion prediction and compensation unit 165 generates the prediction images in all candidate inter-prediction modes, evaluates a cost function value of each of the prediction images, and then selects an optimum mode. When the optimum inter-prediction mode is selected, the motion prediction and compensation unit 165 supplies a prediction image generated in the optimum mode to the prediction image selection unit 166.

In addition, the motion prediction and compensation unit 165 supplies information representing the employed inter-prediction mode, information necessary for performing a process in the inter-prediction mode when coded data is decoded, or the like to the lossless coding unit 156 to be coded.

The prediction image selection unit 166 selects a supply source of the prediction images to be supplied to the computation unit 153 and the computation unit 160. In the case of inter-coding, for example, the prediction image selection unit 166 selects the motion prediction and compensation unit 165 as a supply source of the prediction images, and supplies the prediction images supplied from the motion prediction and compensation unit 165 to the computation unit 153 and the computation unit 160.

The rate control unit 167 controls a rate of a quantization operation of the quantization unit 155 based on a code amount of the coded data accumulated in the accumulation buffer 157 so that no overflow or underflow occurs.

The GMV eliciting unit 171 elicits a GMV used as an origin of search in motion prediction of the motion prediction and compensation unit 165. To be more specific, the GMV eliciting unit 171 acquires motion vectors of each of macroblocks searched in the motion prediction and compensation unit 165, and aggregates the motion vectors, thereby generating a histogram. When the histogram for one picture is generated, the GMV eliciting unit 171 selects a motion vector with a highest frequency among the motion vectors as a GMV.

The GMV eliciting unit 171 supplies the elicited GMV to the motion prediction and compensation unit 165. The motion prediction and compensation unit 165 performs motion search having the GMV supplied from the GMV eliciting unit 171 as one origin.

In addition, the GMV eliciting unit 171 supplies the elicited GMV to the second coding unit 112-2.

In this example, a coding parameter is the GMV. In other words, the GMV eliciting unit 171 corresponds to the coding parameter eliciting unit 121-1 of FIG. 2.

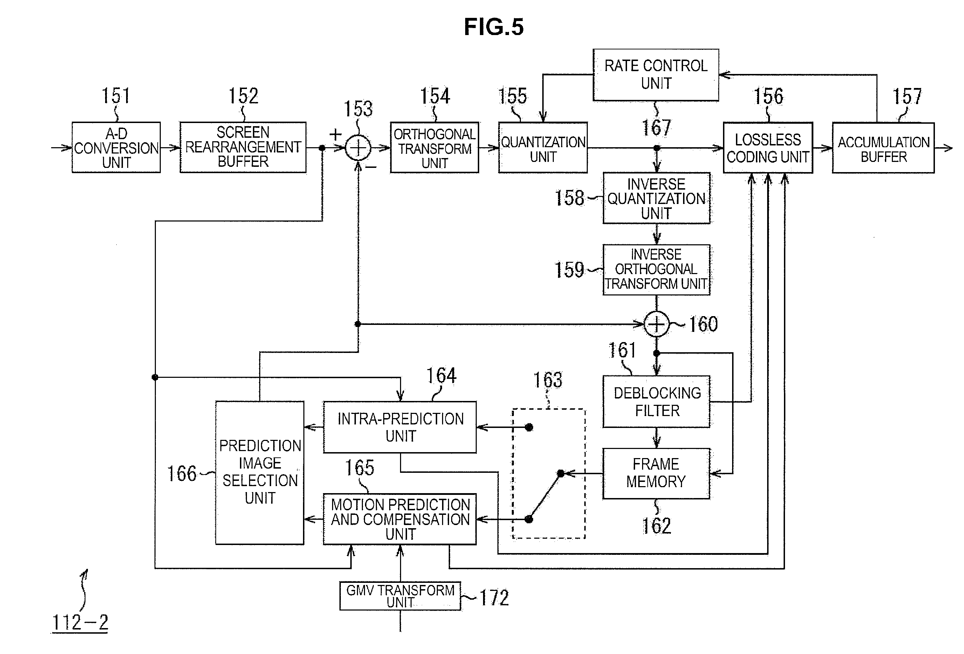

FIG. 5 is a block diagram showing a main configuration example of the second coding unit 112-2. As shown in FIG. 5, the second coding unit 112-2 has the same basic configuration as the first coding unit 112-1 (of FIG. 4), and performs the same processes.

The second coding unit 112-2, however, has a GMV transform unit 172 instead of the GMV eliciting unit 171 of the first coding unit 112-1.

The GMV transform unit 172 acquires the GMV supplied from the GMV eliciting unit (of FIG. 4), and transforms the GMV into a value for the second image based on the first image information and the second image information supplied from the second image information acquisition unit 111-1 (of FIG. 2). The GMV transform unit 172 supplies the transformed GMV to the motion prediction and compensation unit 165. The motion prediction and compensation unit 165 performs motion search having the GMV as one origin.

Thus, the second coding unit 112-2 can omit processes relating to elicitation of the GMV that cause a heavy load. Accordingly, the image coding device 100 can reduce redundant processes, and thus can suppress an increase of a load unnecessary for image coding.

(2) Process flow

Next, the flow of a process executed by the image coding device 100 as above will be described.

(2-1) Plural image coding process

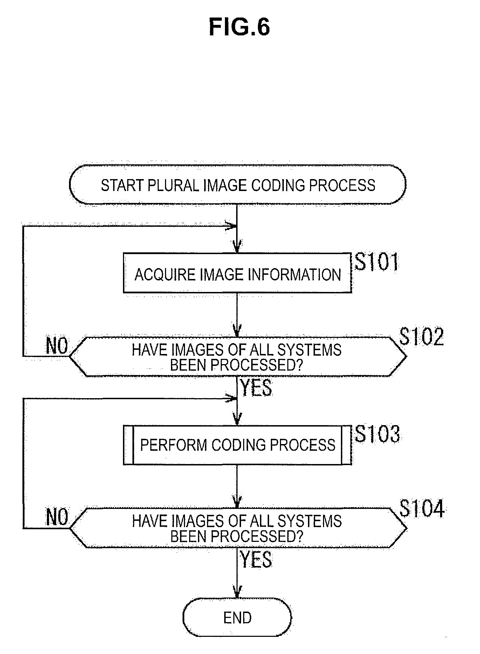

An example of the flow of a plural image coding process executed by the image coding device 100 will be described with reference to the flowchart of FIG. 6.

The image information acquisition units 111 (first image information acquisition unit 111-1 and second image information acquisition unit 111-2) of the image coding device 100 perform the processes of Step S101 and Step S102 to acquire image information of respective images.

The coding units 112 (first coding unit 112-1 and second coding unit 112-2) perform the processes of Step S103 and Step S104 to code respective images.

(2-2) Coding process

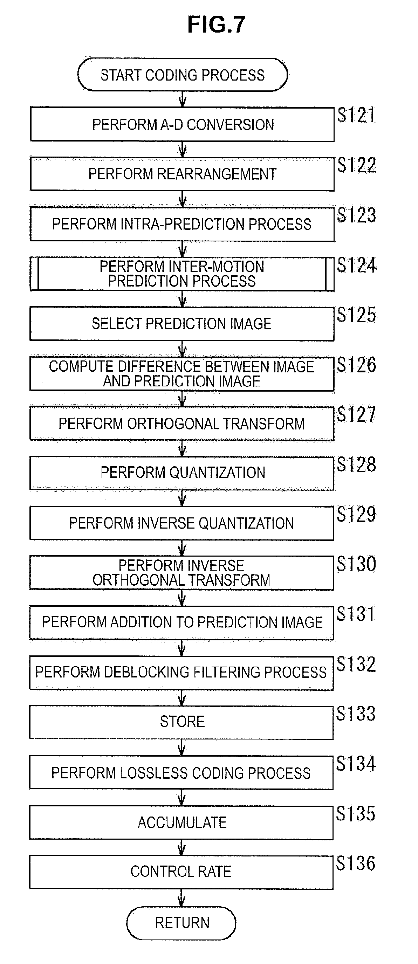

An example of the flow of a coding process of the images executed in Step S103 of FIG. 6 will be described with reference to the flowchart of FIG. 7. This process is performed for moving images of each system. In other words, the first coding unit 112-1 and the second coding unit 112-2 each perform this coding process.

In Step S121, the A-D conversion unit 151 performs A-D conversion for input images. In Step S122, the screen rearrangement buffer 152 stores the A-D-converted images, and rearranges the images from a picture display order to a coding order.

In Step S123, the intra-prediction unit 164 performs an intra-prediction process in an intra-prediction mode. In Step S124, the motion prediction and compensation unit 165 performs an inter-motion prediction process to perform motion prediction and motion compensation in an inter-prediction mode.

In Step S125, the prediction image selection unit 166 decides an optimum prediction mode based on each cost function value output from the intra-prediction unit 164 and the motion prediction and compensation unit 165. In other words, the prediction image selection unit 166 selects one of a prediction image generated by the intra-prediction unit 164 and a prediction image generated by the motion prediction and compensation unit 165.

In Step S126, the computation unit 153 computes the difference between each image rearranged in the process of Step S122 and the prediction image selected in the process of Step S125. The data amount of the difference data is reduced more than that of the original image data. Thus, the data amount can be further compressed in comparison to the case in which the image is coded as is.

In Step S127, the orthogonal transform unit 154 orthogonally transforms the differential information generated in the process of Step S126. To be specific, the orthogonal transform such as a discrete cosine transform or a Karhunen-Loeve transform is performed, and a transform coefficient is output. In Step S128, the quantization unit 155 quantizes the orthogonal transform coefficient obtained in the process of Step S127.

The differential information quantized in the process of Step S128 is partially decoded as follows. In other words, in Step S129, the inverse quantization unit 158 performs inverse quantization for the orthogonal transform coefficient quantized in the process of Step S128 using a method that corresponds to the quantization of Step S128. In Step S130, the inverse orthogonal transform unit 159 performs an inverse orthogonal transform for the orthogonal transform coefficient obtained in the process of Step S129 using a method that corresponds to the process of Step S127.

In Step S131, the computation unit 160 adds the prediction image to the partially decoded differential information, thereby generating a partially decoded image (an image that corresponds to the input to the computation unit 153). In Step S132, the deblocking filter 161 performs a deblocking filtering process for the image generated in the process of Step S131. Accordingly, block distortion or the like is removed.

In Step S133, the frame memory 162 stores the image in which the block distortion or the like has been removed in the process of Step S132. Note that an image that has not undergone the filtering process by the deblocking filter 161 is also supplied to the frame memory 162 from the computation unit 160 and stored therein. The images stored in the frame memory 162 are used in the processes of Step S123 and Step S 124.

In Step S134, the lossless coding unit 156 codes the transform coefficient quantized in the process of Step S128, thereby generating coded data. In other words, lossless coding such as variable-length coding or arithmetic coding is performed for a differential image (a second-order differential image in the case of inter-coding).

Note that the lossless coding unit 156 codes information relating to the prediction mode of the prediction image selected in the process of Step S125, and adds the information to the coded data obtained by coding the differential image. For example, when the intra-prediction mode is selected, the lossless coding unit 156 codes intra-prediction mode information. In addition, when the inter-prediction mode is selected, for example, the lossless coding unit 156 codes inter-prediction mode information. The information is added to the coded data as, for example, header information or the like (multiplexing).

In Step S135, the accumulation buffer 157 accumulates the coded data generated in the process of Step S134. The coded data accumulated in the accumulation buffer 157 is appropriately read and transmitted to a device on a decoding side via an arbitrary transmission line (including not only a communication line but also a storage medium or the like).

In Step S 136, the rate control unit 167 controls a rate of the quantization operation of the quantization unit 155 based on the compressed image accumulated in the accumulation buffer 157 in the process of Step S135 so that an overflow or an underflow does not occur.

When the process of Step S 136 ends, the coding process ends.

(2-3) Inter-motion prediction process

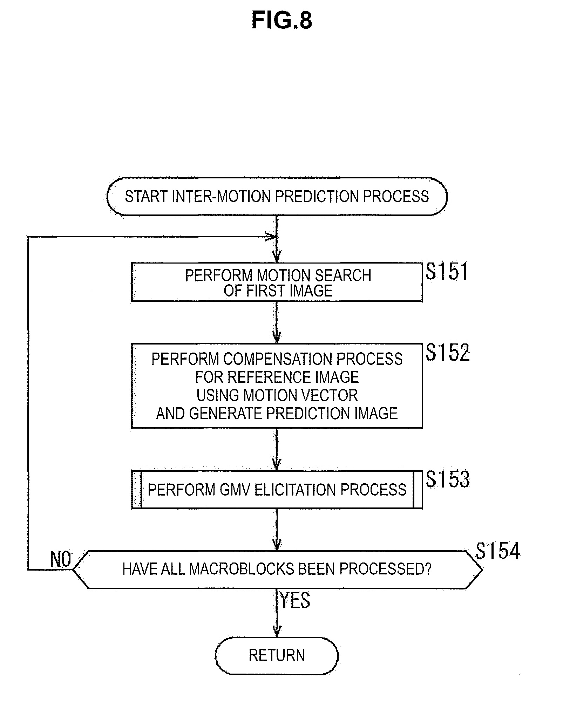

An example of the flow of the inter-motion prediction process executed in Step S124 of FIG. 7 will be described with reference to the flowchart of FIG. 8. This process is executed when the first coding unit 112-1 executes the coding process of FIG. 7 for the first image.

The motion prediction and compensation unit 165 of the first coding unit 112-1 searches motions of the first image in Step S151 to detect motion vectors of each of macroblocks. The motion prediction and compensation unit 165 performs a compensation process for a reference image using the motion vector in Step S152, thereby generating a prediction image.

In Step S153, the GMV eliciting unit 171 performs a GMV elicitation process using the motion vectors of each of the macroblocks detected in Step S 151.

The motion prediction and compensation unit 165 repeats the processes of Step S151 to Step S 154 to perform the process for all macroblocks.

(2-4) GMV elicitation process

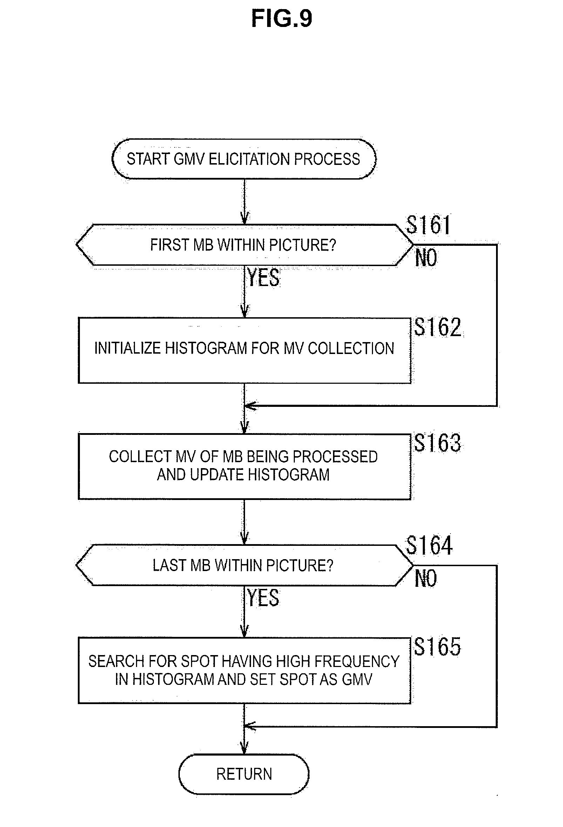

An example of the flow of the GMV elicitation process executed in Step S153 of FIG. 8 will be described with reference to the flowchart of FIG. 9.

When a first macroblock (MB) within pictures is set to be a processing target, the GMV eliciting unit 171 initializes a histogram for motion vector (MV) collection by executing the processes of Step S161 and Step S162.

The GMV eliciting unit 171 collects motion vectors of the macroblock being processed from the motion prediction and compensation unit 165 in Step S163, and updates the histogram for motion vector collection.

The GMV eliciting unit 171 collects motion vectors of the last macroblock within the pictures by executing the processes of Step S164 and Step S165, then searches for a spot having a high frequency in the histogram, and sets a motion vector thereof as a GMV. The GMV eliciting unit 171 supplies the GMV elicited as above to the second coding unit 112-2.

(2-5) Inter-motion prediction process

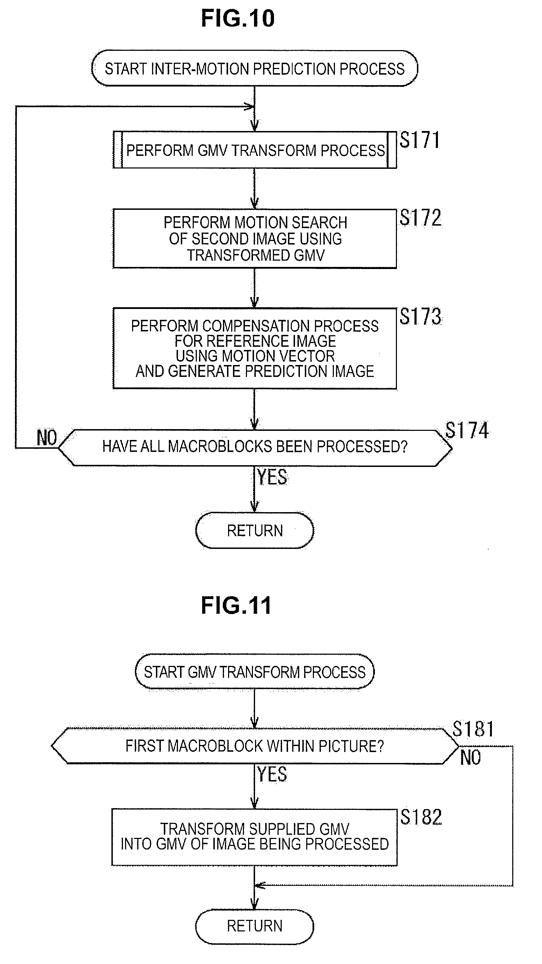

An example of the flow of the inter-motion prediction process executed in Step S 124 of FIG. 7 will be described with reference to the flowchart of FIG. 10. This process is executed when the second coding unit 112-2 executes the coding process of FIG. 7 for the second image.

The GMV transform unit 172 of the second coding unit 112-2 acquires the GMV supplied from the GMV eliciting unit 171, and performs a GMV transform process for transforming the GMV into one for the second image.

The motion prediction and compensation unit 165 of the second coding unit 112-2 searches motions of the second image in Step S172 using the GMV for the second image generated in the GMV transform process of Step S 171 to detect motion vectors of each of macroblocks. The motion prediction and compensation unit 165 performs a compensation process for the reference image using the motion vectors in Step S173, thereby generating a prediction image.

The motion prediction and compensation unit 165 repeats the processes of Step S171 to Step S174 to perform the process for all macroblocks.

(2-6) GMV elicitation process

An example of the flow of the GMV elicitation process executed in Step S 171 of FIG. 10 will be described with reference to the flowchart of FIG. 11.

When the first macroblock (MB) within pictures is set to be a processing target, the GMV transform unit 172 transforms the GMV supplied from the GMV eliciting unit 171 into the GMV for the second image being processed using, for example, the first image information and the second image information supplied from the second image information acquisition unit 111-2 by executing the processes of Step S181 and Step S182.

By executing each of the processes described above, the image coding device 100 can use the GMV generated for the first image in coding of another image (for example, the second image). In other words, the image coding device 100 can reduce redundant processes and thus can suppress an increase of a load unnecessary for image coding.

(3) Feedforward

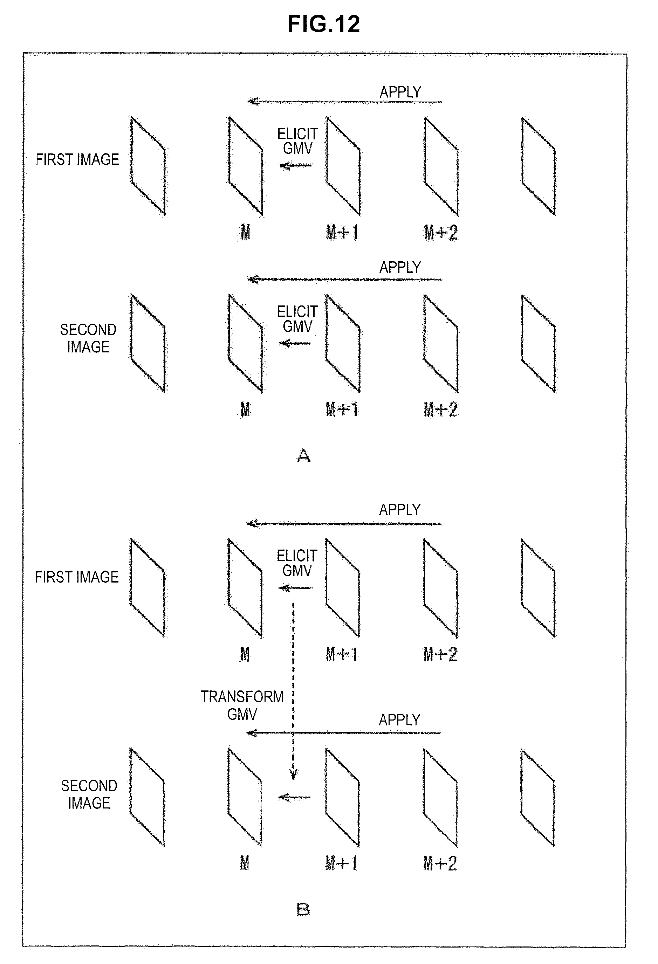

It should be noted that, when a GMV is elicited for each moving image, the GMV is used in a frame later than the elicitation timing as in the related art. As shown in A of FIG. 12, for example, a GMV elicited in a frame (M+1) is used in a frame (M+2). In other words, feedback control is performed. Thus, since the timings of the elicitation and use of the GMV are different, there is concern of accuracy of the GMV deteriorating.

On the other hand, when a GMV elicited in another moving image is used, the GMV can be used in a frame of the same timing as the frame from which the GMV is elicited as described above. As shown in B of FIG. 12, for example, a GMV elicited in a frame (M+1) of the first image can be used in a frame (M+1) of the second image. In other words, feedforward control is possible. Thus, since the timings of elicitation and use of the GMV are the same or more approximate, the image coding device 100 can improve accuracy of the GMV.

(4) Image information

Next, a more specific example will be described.

(4-1) Angle of view

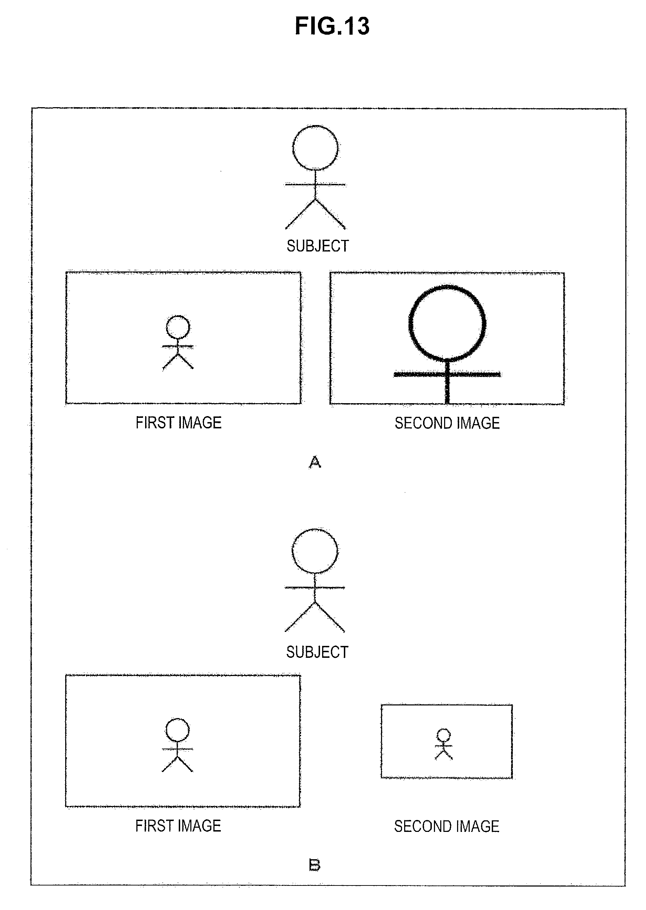

A piece of image information that is different between the first image and the second image is assumed to be an angle of view. As shown in A of FIG. 13, for example, the first image is assumed to be on the wide side and the second image is assumed to be on the telephoto side. In this case, subjects of the first image and the second image are basically the same, but the first image has a wider angle of view.

The angle of view of the first image acquired by the first image information acquisition unit 111-1 is set to an angle of view [1] and the angle of view of the second image acquired by the second image information acquisition unit 111-2 is set to an angle of view [2]. In addition, a GMV of the first image elicited by the GMV eliciting unit 171 is set to a GMV [1]. The GMV transform unit 172 can easily obtain a GMV [2] of the second image as shown by formula (1) below.

$$\text{GMV}\,[2] = \text{Angle of view}\,[2]/\text{Angle of view}\,[1] \times \text{GMV}\,[1] \dots (1)$$

(4-2) Image size

Another piece of image information that is different between the first image and the second image is assumed to be an image size. As shown in B of FIG. 13, for example, the image size of the first image is assumed to be greater than that of the second image. In this case, subjects of the first image and the second image are basically the same, but the first image is a larger image.

The image size of the first image acquired by the first image information acquisition unit 111-1 is set to an image size [1] and the image size of the second image acquired by the second image information acquisition unit 111-2 is set to an image size [2]. In addition, a GMV of the first image elicited by the GMV eliciting unit 171 is set to a GMV [1]. The GMV transform unit 172 can easily obtain a GMV [2] of the second image as shown by formula (2) below.

$$\text{GMV}\,[2] = \text{Image size}\,[2]/\text{Image size}\,[1] \times \text{GMV}\,[1] \dots (2)$$

(4-3) FPS

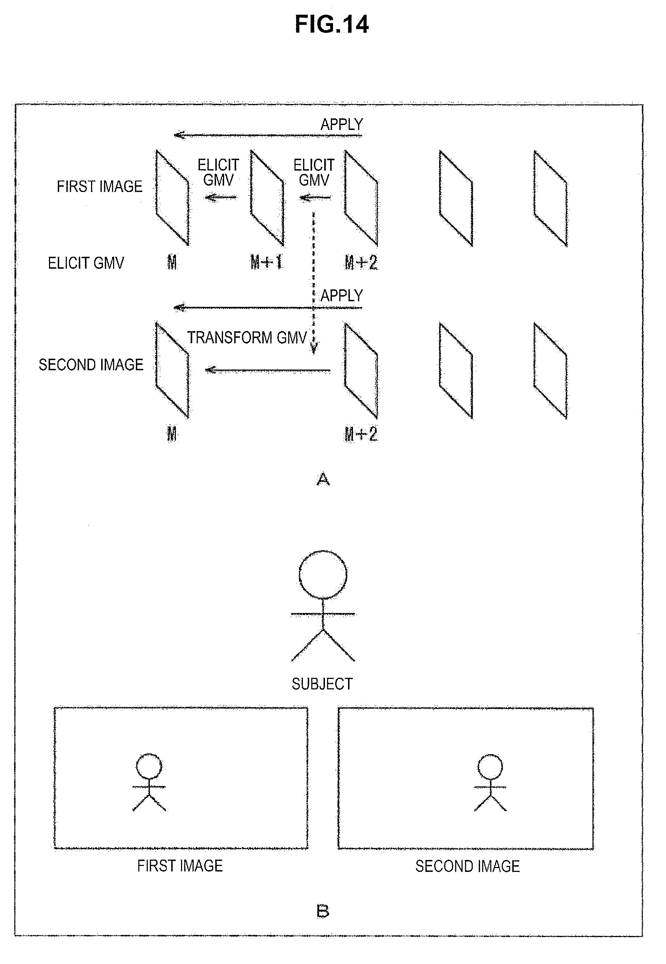

Another piece of image information that is different between the first image and the second image is assumed to be a frame rate (FPS). As shown in A of FIG. 14, for example, the frame rate of the first image is assumed to be two times that of the second image. In this case, images of the first image and the second image are the same, but there is not the frame of the timing of "M+1" in the second image.

The frame rate of the first image acquired by the first image information acquisition unit 111-1 is set to fps [1] and the frame rate of the second image acquired by the second image information acquisition unit 111-2 is set to fps [2]. In addition, a GMV of the frame "M+2" of the first image elicited by the GMV eliciting unit 171 is set to a GMV [1, M+2]. The GMV transform unit 172 can easily obtain a GMV [2, M+2] of the frame "M+2" of the second image as shown by formula (3) below.

$$\text{GMV}\,[2, \text{M+2}] = \text{fps}\,[2]/\text{fps}\,[1] \times \text{GMV}\,[1, \text{M+2}] \dots (3)$$

When the fps [1] = 60i and fps [2] = 30p are set, for example, the GMV transform unit 172 can obtain the GMV [2, M+2] as follows.

$$\text{GMV } [2, \text{M+2}] = \text{GMV } [1, \text{M+2}]$$

(4-4) Parallax

There is assumed to be parallax between the first image and the second image as in, for example, an image of MVC. As shown in B of FIG. 14, for example, the first image is assumed to be a left-eye image and the second image is assumed to be a right-eye image. In this case, subjects of the first image and the second image are substantially the same, but parallax arises between the first image and the second image.

In this case, a difference of the images caused by parallax is very slight, and the first image and the second image can be regarded as substantially the same. Thus, the GMV transform unit 172 can easily obtain the GMV [2] of the second image using the GMV [1] of the first image as shown by formula (4) below.

$$\text{GMV } [2] = \text{GMV } [1] \ldots (4)$$

In other words, the GMV of the first image can be applied to the second image without change.

Note that the feedforward control can be performed for any piece of the image information.

In addition, a piece of the image information that is different between the first image and the second image may be one other than the above examples. In addition, there may be a plurality of pieces of image information that are different between the first image and the second image.

<3. Third embodiment>

[Rate control parameter]

A coding parameter used for another moving image may be one other than the GMV. It may be, for example, a parameter used in rate control (rate control parameter). To be more specific, it may be, for example, a target bit of each frame, or a Q value (quantization parameter).

For example, a target bit is elicited in units of pictures, and used in rate control of a frame or a field to be processed later in terms of time than a frame or a field from which the target bit is elicited. A method for eliciting a target bit is defined by, for example TM 5 (Test Model 5) in the case of MVC, and the elicitation of the target bit (Step 1 of the TM 5) causes a heavy load.

The image coding device 100 can omit processes relating to the elicitation of the target bit which cause a heavy load by using the target bit elicited by the first coding unit 112-1 in the coding process of the second coding unit 112-2. Accordingly, the image coding device 100 can realize suppression of an increase of the load.

In addition, the Q value is computed for each macroblock. The TM5 defines computation of a delta Q value that is the difference from the predetermined Q value (Step 3). A load of this process is also heavy.

The image coding device 100 can omit processes relating to the elicitation of the delta Q value which cause a heavy load by using the delta Q value elicited by the first coding unit 112-1 in the coding process of the second coding unit 112-2. Accordingly, the image coding device 100 can realize suppression of an increase of the load.

(1) Coding unit

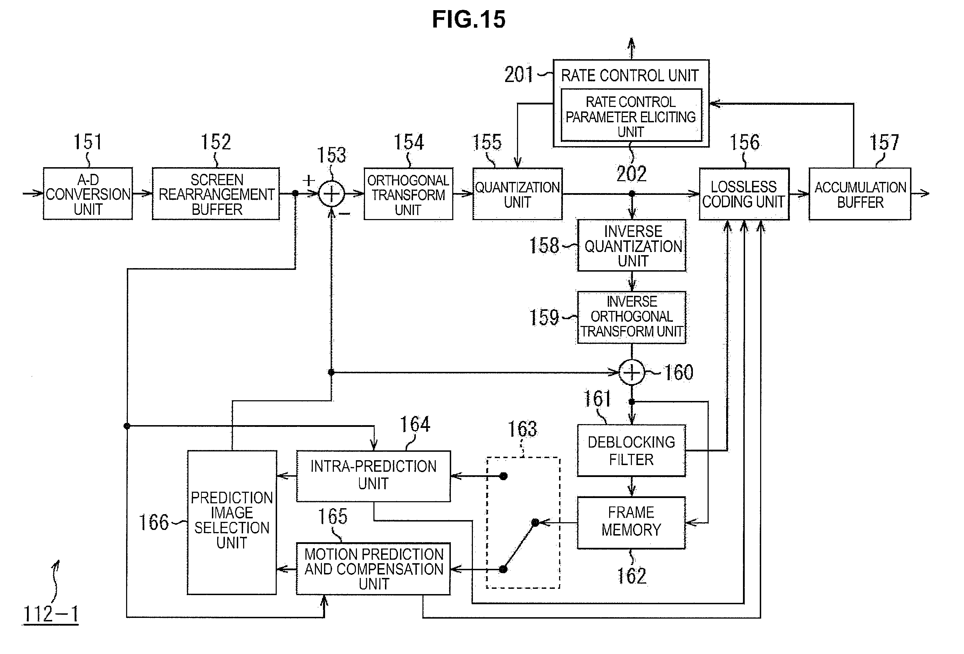

FIG. 15 is a block diagram showing a main configuration example of the first coding unit 112-1 of this case.

In the case of the example of FIG. 15, the first coding unit 112-1 also has the same basic configuration as the example of FIG. 4, but in FIG. 15, the GMV eliciting unit 171 is omitted, and a rate control unit 201 is included instead of the rate control unit 167.

The rate control unit 201 is basically the same processing unit as the rate control unit 167, but has a rate control parameter eliciting unit 202.

The rate control parameter eliciting unit 202 generates a coding parameter (rate control parameter) relating to rate control, for example, a target bit, a delta Q value, or the like. The rate control unit 201 performs rate control using the rate control parameter elicited by the rate control parameter eliciting unit 202. In addition, the rate control unit 201 (rate control parameter eliciting unit 202) supplies the elicited rate control parameter, for example, the target bit, the delta Q value, and the like, to the second coding unit 112-2.

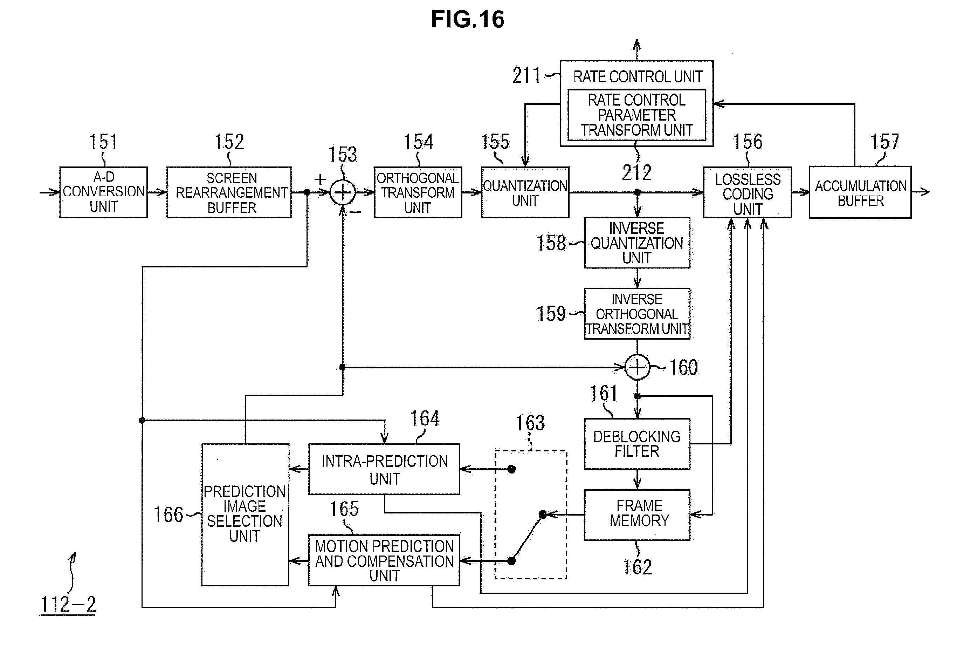

FIG. 16 is a block diagram showing a main configuration example of the second coding unit 112-2. As shown in FIG. 16, the second coding unit has the same basic configuration as the first coding unit 112-1 (of FIG. 15), and performs the same process.

The second coding unit 112-2, however, has a rate control unit 211 instead of the rate control unit 201 of the first coding unit 112-1.

The rate control unit 211 is a processing unit that performs the same rate control as the rate control unit 201, but has a rate control parameter transform unit 212.

The rate control parameter transform unit 212 transforms the rate control parameter, for example, the target bit, the delta Q value, or the like supplied from the rate control unit 201 (rate control parameter eliciting unit 202) (of FIG. 15), into a parameter for the second image based on the first image information and the second image information supplied from the second image information acquisition unit 111-1 (of FIG. 2). The rate control unit 211 performs rate control of second image coding using the transformed rate control parameter.

In the above manner, the second coding unit 112-2 can omit processes relating to the elicitation of the rate control parameter which cause a heavy load. Accordingly, the image coding device 100 can reduce redundant processes, and thus can suppress an increase of a load unnecessary for image coding.

(2) Process flow

Next, the flows of the processes executed by the image coding device 100 will be described. A plural image coding process is executed in the same manner as in the example of FIG. 6.

(2-1) Coding process

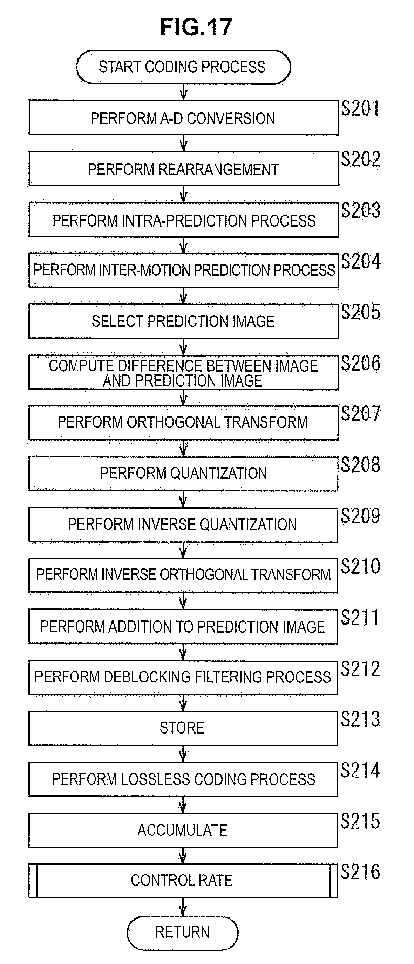

An example of the flow of the coding process of this case is shown in FIG. 17. As shown in FIG. 17, the coding process of this case is executed in the same manner as in the case of FIG. 7. In other words, the processes of Step S201 to Step S216 are executed basically in the same manner as the processes of Step S121 to Step S136 of FIG. 7, respectively. In the example of FIG. 17, however, elicitation or a transform of a coding parameter is performed at the time of rate control of Step S216, rather than in the inter-motion prediction process of Step S204.

The coding process shown in FIG. 17 is also performed for moving images of each system as in the case of FIG. 7. In other words, the first coding unit 112-1 and the second coding unit 112-2 each perform the coding process.

(2-2) Rate control process

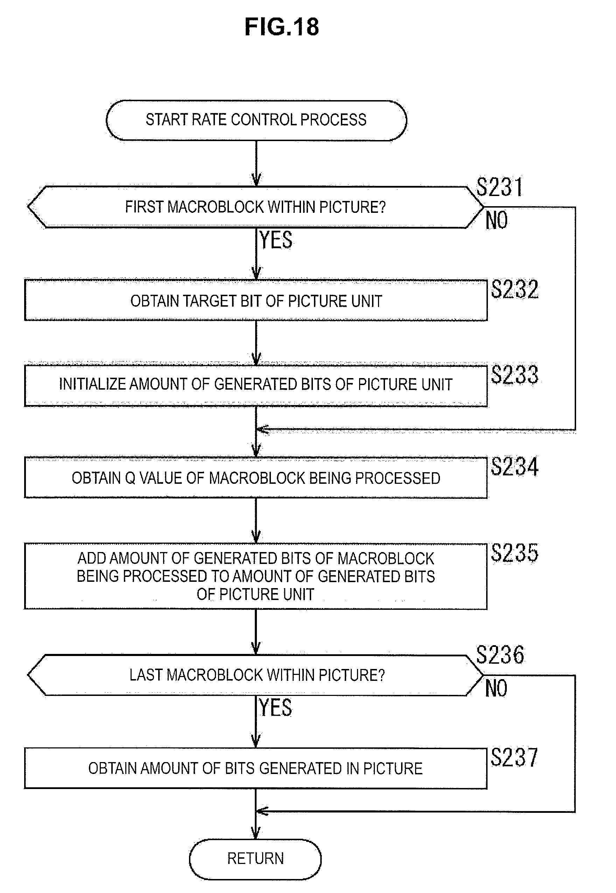

An example of the flow of the rate control process executed by the first coding unit 112-1 in Step S216 of the coding process of FIG. 17 will be described with reference to the flowchart of FIG. 18.

The rate control parameter eliciting unit 202 of the first coding unit 112-1 executes the processes of Step S231 to Step S233 to obtain target bits in units of pictures as rate control parameters during processing of the first macroblock within pictures, and then initializes an amount of generated bits of a picture unit.

The rate control parameter eliciting unit 202 obtains the Q value (delta Q value of Step 3 of TM 5) of a macroblock being processed as a rate control parameter in Step S234.

The rate control parameter eliciting unit 202 adds the amount of generated bits of the macroblock being processed to the amount of generated bits of a picture unit in Step S235.

The rate control parameter eliciting unit 202 executes the processes of Step S236 and Step S237 to obtain the amount of bits generated in pictures during processing of the final macroblock within the pictures. The rate control unit 201 performs rate control using the rate control parameters.

(2-3) Rate control process: Target bit

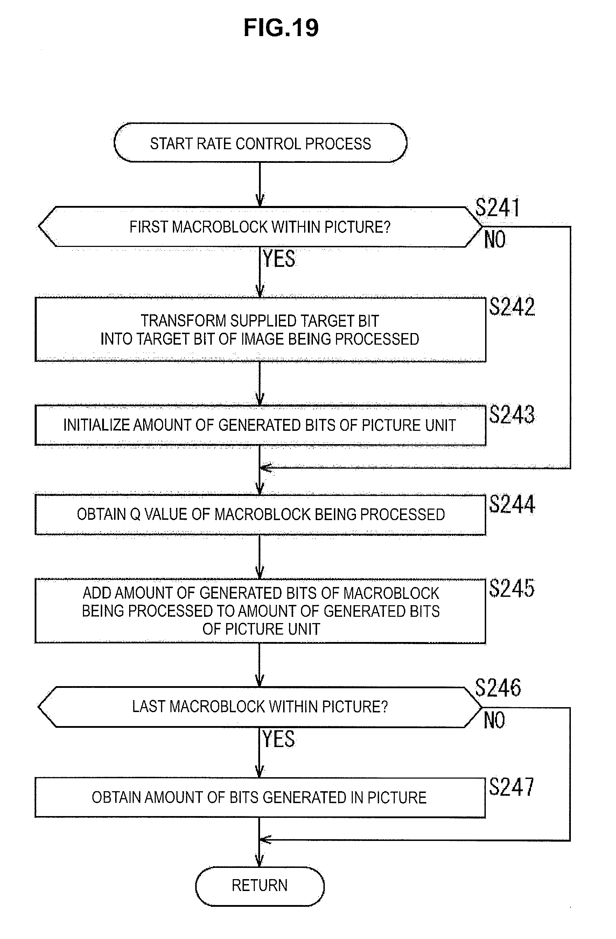

An example of the flow of the rate control process executed by the second coding unit 112-2 in Step S216 of the coding process of FIG. 17 when the rate control parameter is the target bit will be described with reference to the flowchart of FIG. 19.

The rate control parameter transform unit 212 executes the processes of Step S241 to Step S243 to transform the target bit that is a rate control parameter supplied from the rate control parameter eliciting unit 202 at the time of processing the first macroblock within the pictures into a target bit of the second image being processed, and then initializes the amount of generated bits of a picture unit.

The rate control unit 211 obtains the Q value (delta Q value of Step 3 of the TM 5) of the macroblock being processed in Step S244, adds the amount of generated bits of the macroblock being processed to the amount of generated bits of the picture unit in Step S245, and then obtains the amount of bits generated in the pictures through the processes of Step S246 and Step S247 at the time of processing the final macroblock within the pictures.

In other words, the rate control parameter eliciting unit 202 elicits the target bit [1] of each picture of the first image, and transfers the target bit to the rate control parameter transform unit 212. The rate control parameter transform unit 212 acquires a bit rate [1] of the first image as first image information, and acquires a bit rate [2] of the second image as second image information. Using the image information, the rate control parameter transform unit 212 can easily obtain a target bit [2] of each picture of the second image from the target bit [1] of each picture of the first image as shown by formula (5) below.

$$\text{Target bit } [2] = \text{Bit rate } [2]/\text{Bit rate } [1] \times \text{Target bit } [1] \ldots (5)$$

Accordingly, the target bit [2] can be elicited without necessity of the second coding unit 112-2 for eliciting a target bit of the pictures (Step 1) that causes a heavy load.

(2-4) Rate control process: Delta Q value

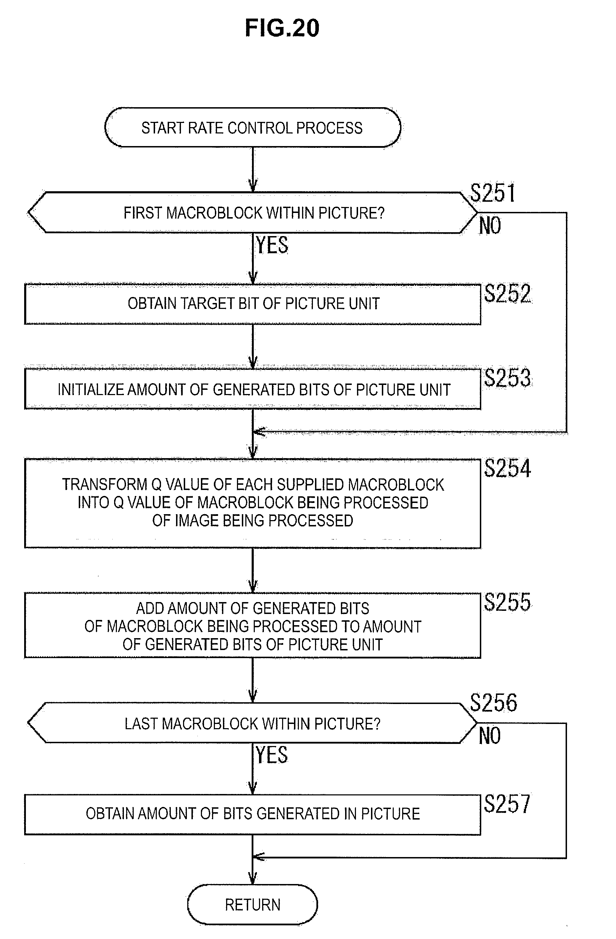

An example of the flow of the rate control process executed by the second coding unit 112-2 in Step S216 of the coding process of FIG. 17 when the rate control parameter is the delta Q value will be described with reference to the flowchart of FIG. 20.

The rate control unit 211 executes the processes of Step S251 to Step S253 to elicit a target bit of a picture unit and initializes the amount of generated bits of the picture unit at the time of processing the first macroblock within the pictures.

The rate control parameter transform unit 212 transforms the delta Q value (delta Q value of Step 3 of the TM 5) that is a rate control parameter of the macroblock being processed supplied from the rate control parameter eliciting unit 202 into the delta Q value (delta Q value of Step 3 of the TM 5) of the macroblock being processed of the second image that is an image being processed in Step S254.

The rate control unit 211 adds the amount of generated bits of the macroblock being processed to the amount of generated bits of the picture unit in Step S255, and obtains the amount of bits generated in the pictures through the processes of Step S256 and Step S257 at the time of processing the final macroblock within the pictures.

In other words, the rate control parameter eliciting unit 202 elicits the delta Q value [1] of Step 3 for each macroblock of the first image, and transfers the delta Q value to the rate control parameter transform unit 212.

The rate control parameter transform unit 212 acquires an angle of view [1] of the first image as first image information, and acquires an angle of view [2] of the second image as second image information. Using the image information, the rate control parameter transform unit 212 can easily obtain the delta Q value [2] of Step 3 of the macroblock being processed of the second image from the delta Q value [1] of Step 3 of the macroblock being processed of the first image as shown by formula (6) below.

$$\text{Delta Q value } [2] \text{ of Step } 3 = \text{Angle of view } [2]/\text{Angle of view } [1] \times \text{Delta Q}$$
$$\text{value } [1] \text{ of Step } 3 \ldots (6)$$

Accordingly, the second coding unit 112-2 can omit the process of Step 3 while Step 2 is performed using each MB in the same manner as in the related art. In other words, the delta Q value of each macroblock can be elicited without necessity for performing the process of Step 3 for each macroblock that causes a heavy load.

(2-5) Rate control process: Feedforward

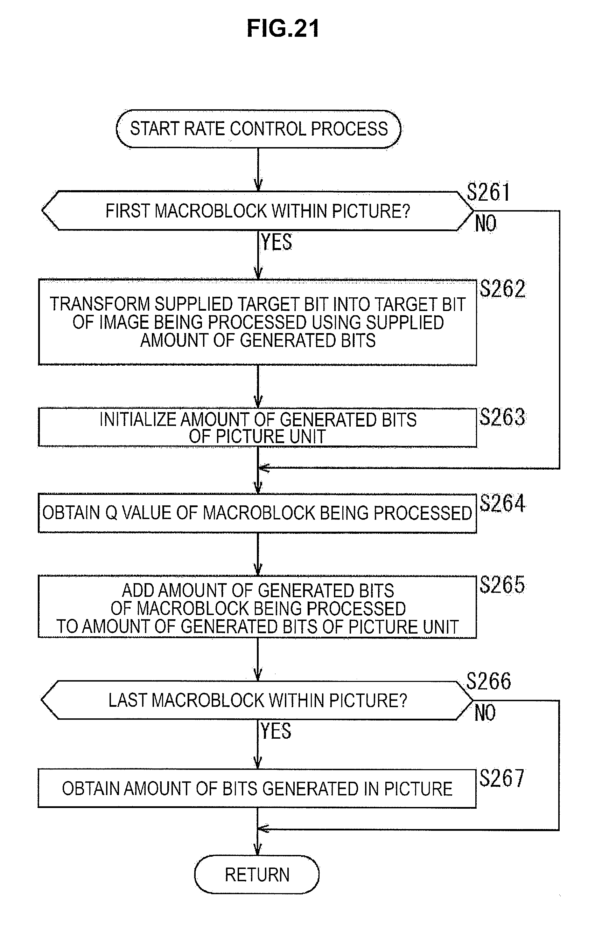

An example of the flow of the rate control process executed by the second coding unit 112-2 in Step S216 of the coding process of FIG. 17 when a rate control parameter is a target bit will be described with reference to the flowchart of FIG. 21. In the case of the example of FIG. 21, control of the target bit is performed in feedforward control.

The rate control parameter transform unit 212 executes the processes of Step S261 to Step S263 to transform the target bit that is the rate control parameter supplied from the rate control parameter eliciting unit 202 at the time of processing of the first macroblock within pictures into a target bit of the second image that is an image being processed using an amount of generated bits and to initialize the amount of generated bits of a picture unit.

The processes of Step S264 to Step S267 are executed in the same manner as the processes of Step S244 to Step S247 of FIG. 19, respectively.

In other words, the rate control parameter eliciting unit 202 elicits the target bit [1] and the amount of generated bits [1] of each picture of the first image, and transfers the data to the rate control parameter transform unit 212. The rate control parameter transform unit 212 acquires a bit rate [1] of the first image as first image information and acquires a bit rate [2] of the second image as second image information. The rate control parameter transform unit 212 can easily obtain a target bit [2] of each picture of the second image from the target bit [1] and the amount of generated bits [1] of each picture of the first image using the image information as shown by formula (7) below.

$$\text{Target bit } [2] = \text{Bit rate } [2]/\text{Bit rate } [1]\times(\text{Target bit } [1]+\alpha \text{ (The amount of generated bits } [1]-\text{Target bit } [1]) \ldots (7)$$

Accordingly, the target bit [2] can be elicited without necessity for the second coding unit 112-2 to perform elicitation of the target bit (Step 1) of each picture, which causes a heavy load.

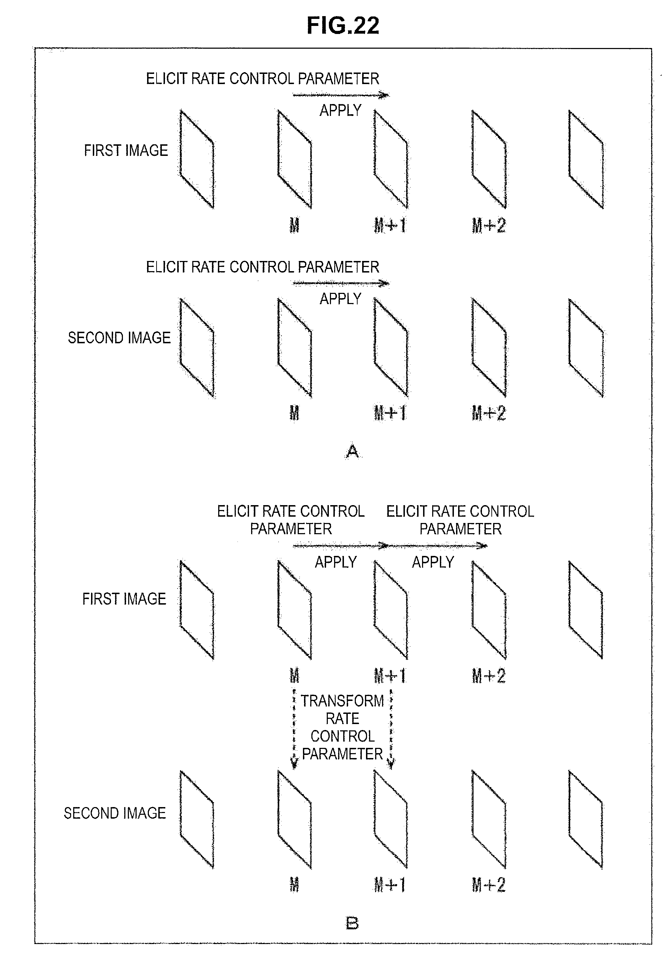

In addition, there was feedback control in the related art as shown in A of FIG. 22, however, after the above operation is performed, the result of a picture M of the first image can be applied to a picture M of the second image as shown in B of FIG. 22, and accordingly, a feedforward process is possible, which brings an effect of image quality improvement.

The elicitation of a target bit in units of pictures, the process of Step 3 for each MB, and the feedforward process described above can be arbitrarily combined.

(2-6) Rate control process: Image size

Note that image information used in transforming a rate control parameter is arbitrary, and is not limited to the above-described example. When a delta Q value of Step 3 is transformed, for example, an image size may be used.

A flowchart of such a case is the same as the example shown in FIG. 20.

In other words, the rate control parameter eliciting unit 202 elicits the delta Q value [1] of Step 3 for each macroblock of the first image, and then transfers the value to the rate control parameter transform unit 212.

The rate control parameter transform unit 212 acquires an image size [1] of the first image as first image information and acquires an image size [2] of the second image as second image information. The rate control parameter transform unit 212 can easily obtain a delta Q value [2] of Step 3 of macroblocks being processed of the second image from the delta Q value [1] of Step 3 of macroblocks being processed of the first image using the image information as shown by formula (8) below.

$$\text{Delta Q value } [2] \text{ of Step } 3 = \text{Image size } [2]/\text{Image size } [1]\times\text{Delta Q value } [1] \text{ of Step } 3 \ldots (8)$$

Accordingly, the second coding unit 112-2 can omit the process of Step 3 while performing Step 2 for each MB in the same manner as in the related art. In other words, the delta Q value of each macroblock can be elicited without necessity for performing the process of Step 3 for each macroblock, which causes a heavy load.

(2-7) Rate control process: Frame rate

Note that image information used in transforming a rate control parameter is arbitrary, and is not limited to the above-described example. When a target bit is transformed, for example, a frame rate (fps) may be used.

The flowchart of such a case is the same as the example shown in FIG. 19.

In other words, the rate control parameter eliciting unit 202 elicits a target bit [1, M] of each picture, an amount of picture-generated bits [1, M], a target bit [1, M+1] of each picture, and an amount of picture-generated bits [1, M+1] of the first image, and transfers the data to the rate control parameter transform unit 212. The rate control parameter transform unit 212 acquires an fps [1] of the first image as first image information and acquires an fps [2] of the second image as second image information. The rate control parameter transform unit 212 can easily obtain a target bit [2, M] of each picture of the second image using the image information as shown by formula (9) below.

$$\text{Target bit } [2, M] = \text{fps } [2]/\text{fps } [1] \times (\text{Target bit } [1, M] + \text{Target bit } [1, M+1]) \dots$$

$$(9)$$

Note that when feedforward control is performed, the rate control parameter transform unit 212 can easily obtain the target bit [2, M] of each picture of the second image as shown by formula (10) below.

$$\text{Target bit } [2, M] = \text{fps } [2]/\text{fps } [1] \times (\text{Target bit } [1, M] + \text{Target bit } [1, M+1]) + \alpha$$

$$(\text{The amount of generated bits } [1, M] + \text{The amount of generated bits } [1, M+1] - \text{Target}$$

$$\text{bit } [1, M] + \text{Target bit } [1, M+1])) \dots (10)$$

The elicitation of a target bit in units of pictures, the process of Step 3 for each MB, and the feedforward process described above can be arbitrarily combined.

In addition, the process of the delta Q value of Step 3 can be omitted in the second coding unit 112-2 as when bit rates are used as image information.

Note that image information used in transforming a rate control parameter is not limited to the above-described example. In addition, the number of pieces of image information used in transforming a rate control parameter is also arbitrary. For example, a plurality of pieces of image information such as a bit rate, an angle of view, an image size, and fps can also be used in a combined manner.

Furthermore, a rate control parameter may be set to be transformed using parallax between the first image and the second image as in the case of the MVC standard. In such a case, the first image and the second image are set to be substantially the same image with only slight parallax. For this reason, the images can be processed in the same manner as when bit rates are used as image information. Accordingly, the elicitation process of the target bit can be reduced, the elicitation of the delta Q value of Step 3 can be reduced, and image quality can be improved through the feedforward process.

<4. Fourth embodiment>

[MV]

A coding parameter used for another moving image may be, for example, a motion vector. Motion prediction by the motion prediction and compensation unit 165 is usually performed a plurality of times with an integer accuracy, a fraction accuracy, or the like, which results in a heavy load.

The image coding device 100 can omit processes relating to eliciting motion vectors which cause a heavy load by using motion vectors elicited by the first coding unit 112-1 in the coding process of the second coding unit 112-2. Accordingly, the image coding device 100 can realize suppression of an increase of a load.

(1) Coding unit

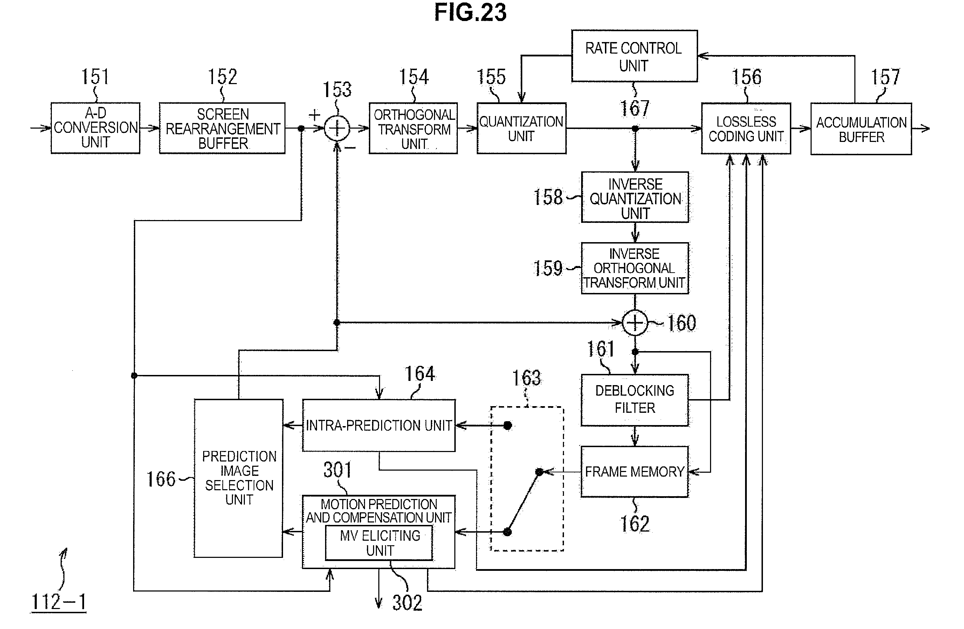

FIG. 23 is a block diagram showing a main configuration example of the first coding unit 112-1 of this case.

In the case of the example of FIG. 23, the first coding unit 112-1 also has the same basic configuration as in the example of FIG. 4, but in the case of FIG. 23, the GMV eliciting unit 171 is omitted. In addition, in the case of FIG. 23, the first coding unit 112-1 has a motion prediction and compensation unit 301. The motion prediction and compensation unit 301 is the same processing unit as the motion prediction and compensation unit 165. The motion prediction and compensation unit 301 has an MV eliciting unit 302 that elicits motion vectors of the first image.

The MV eliciting unit 302 performs motion search in inter-prediction of the first image coded by the first coding unit 112-1 using an image of a coded part of the first image to elicit motion vectors of the current portion.

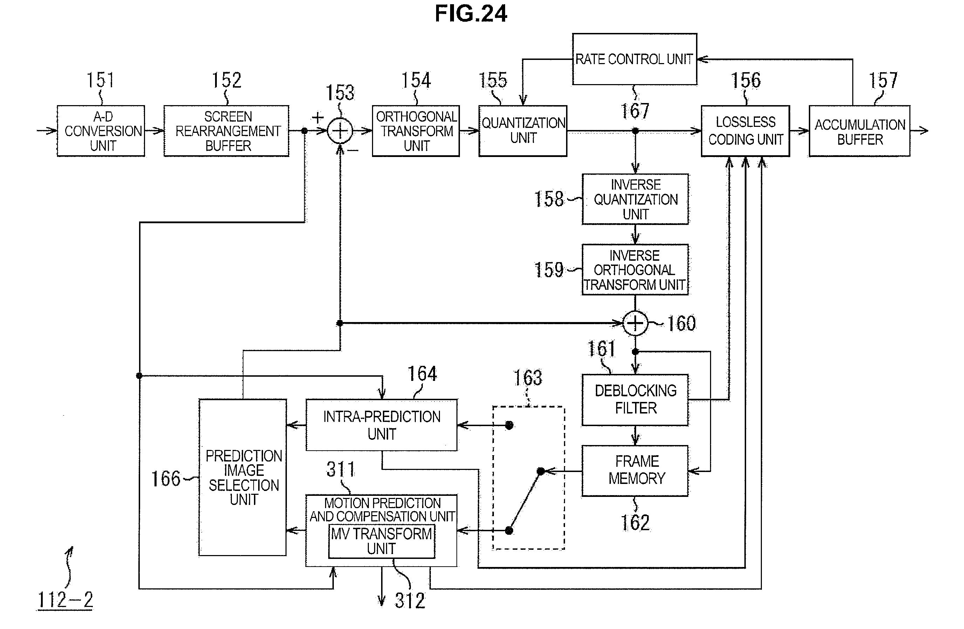

FIG. 24 is a block diagram showing a main configuration example of the second coding unit 112-2 of this case.

In the case of the example of FIG. 24, the second coding unit 112-2 also has the same basic configuration as in the example of FIG. 5, but in the case of FIG. 24, the GMV determining unit 172 is omitted. In addition, in the case of FIG. 24, the second coding unit 112-2 has a motion prediction and compensation unit 311 instead of the motion prediction and compensation unit 165. The motion prediction and compensation unit 311 has an MV transform unit 312 instead of the MV eliciting unit.

The MV transform unit 312 transforms the motion vectors of the first image elicited by the MV eliciting unit 302 to elicit motion vectors of the second image.

(2) MV eliciting unit and transform unit

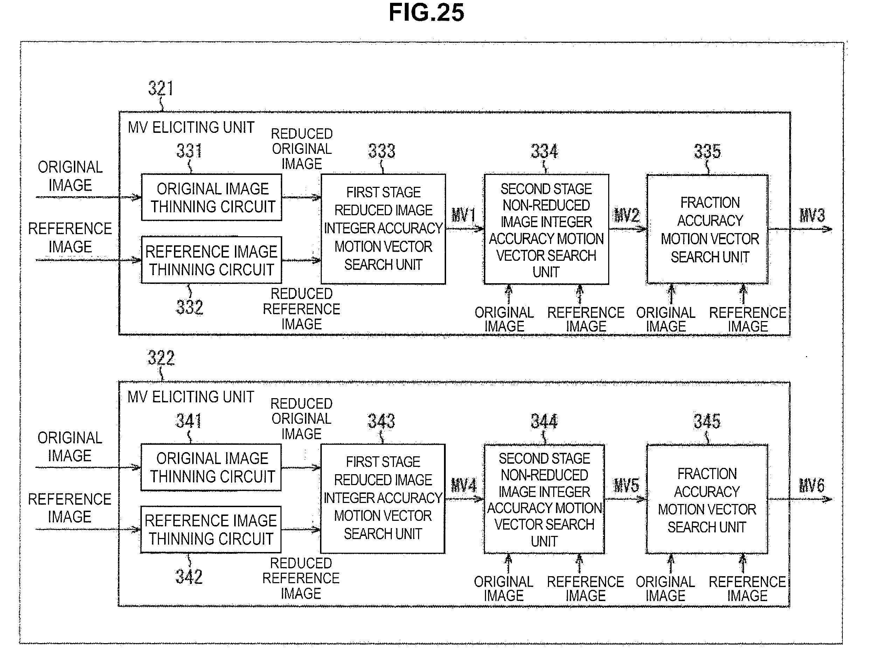

In the related art, an MV eliciting unit 321 is provided in the first coding unit 112-1 and an MV eliciting unit 322 is provided in the second coding unit 112-2 as shown in FIG. 25. That is to say, MVs are elicited independently of each other.

The MV eliciting unit 321 has an original image thinning circuit 331, a reference image thinning circuit 332, a first stage reduced image integer accuracy motion vector search unit 333, a second stage non-reduced image integer accuracy motion vector search unit 334, and a fraction accuracy motion vector search unit 335.

The original image thinning circuit generates a reduced original image by thinning out the original image. The reference image thinning circuit 332 generates a reduced reference image by thinning out the reference image.

The first stage reduced image integer accuracy motion vector search unit 333 generates a reduced image integer accuracy motion vector MV1 using the reduced original image supplied from the original image thinning circuit and the reduced reference image supplied from the reference image thinning circuit 332.

The second stage non-reduced image integer accuracy motion vector search unit 334 transforms the reduced image integer accuracy motion vector MV1 into a non-reduced image integer accuracy motion vector MV2 using the original image and the reference image which are not reduced.

The fraction accuracy motion vector search unit 335 transforms the non-reduced image integer accuracy motion vector MV2 into a fraction accuracy motion vector MV3 using the original image and the reduced image thereof. The fraction accuracy motion vector MV3 is supplied to the motion prediction and compensation unit 301.

The MV eliciting unit 322 has an original image thinning circuit 341, a reference image thinning circuit 342, a first stage reduced image integer accuracy motion vector search unit 343, a second stage non-reduced image integer accuracy motion vector search unit 344, and a fraction accuracy motion vector search unit 345.

The original image thinning circuit 341 to the fraction accuracy motion vector search unit 345 respectively correspond to the original image thinning circuit 331 to the fraction accuracy motion vector search unit 335, and thus perform the same processes.

In other words, redundant processes are executed with respect to generation of motion vectors in the related art.

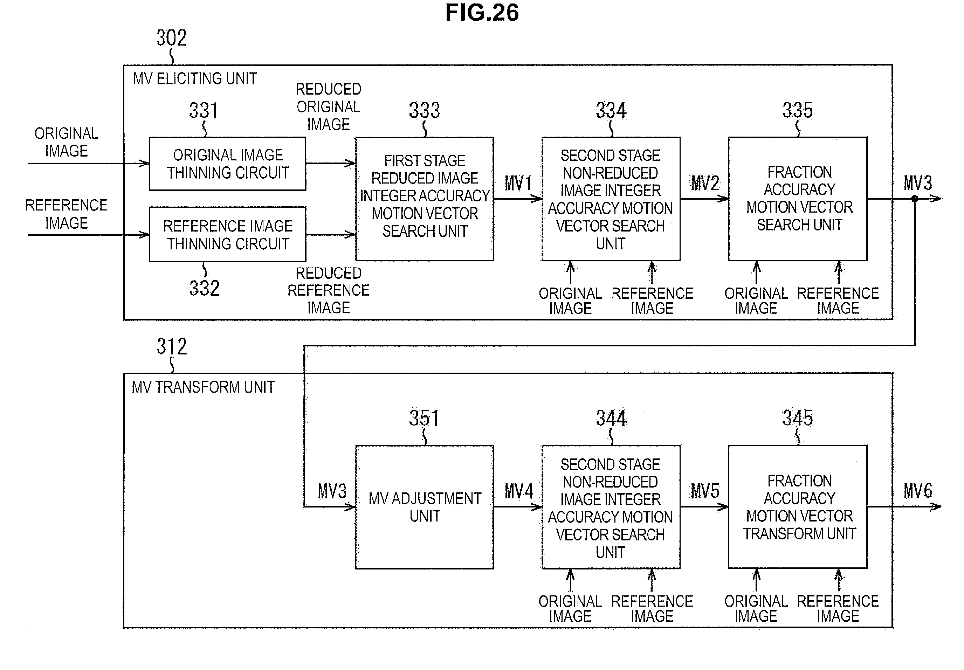

On the other hand, the first coding unit 112-1 (motion prediction and compensation unit 301) has the MV eliciting unit 302, and the second coding unit 112-2 (motion prediction and compensation unit 311) has the MV transform unit 312. Main configuration examples of the MV eliciting unit 302 and the MV transform unit 312 are shown in FIG. 26.

As shown in FIG. 26, the MV eliciting unit 302 has the original image thinning circuit 331 to the fraction accuracy motion vector search unit 335 as in the related art. The MV transform unit 312 has an MV adjustment unit 351 instead of the original image thinning circuit 341 to the first stage reduced image integer accuracy motion vector search unit 343.

The MV adjustment unit 351 acquires the fraction accuracy motion vector MV3 generated by the MV eliciting unit 302. The MV adjustment unit 351 transforms the supplied fraction accuracy motion vector MV3 using the first image information, the second image information, and the like to elicit a reduced image integer accuracy motion vector MV4. The reduced image integer accuracy motion vector MV4 corresponds to the reduced image integer accuracy motion vector MV1.

In the same manner as in the case of the GMV described above, the MV adjustment unit 351 elicits the reduced image integer accuracy motion vector MV4 by multiplying the ratio of the first image information and the second image information with regard to, for example, an angle of view, an image size, a frame rate, or the like, by the fraction accuracy motion vector MV3. In other words, the reduced image integer accuracy motion vector MV4 is elicited as shown by, for example, one of formula (1) to formula (4).

Then, as in the related art, the second stage non-reduced image integer accuracy motion vector search unit 344 elicits a non-reduced image integer accuracy motion vector MV5, and then the fraction accuracy motion vector search unit 345 elicits a fraction accuracy motion vector MV6. The fraction accuracy motion vector MV6 is output to the outside of the MV transform unit 312.

With the above operation, the processes of the original image thinning circuit 331, the reference image thinning circuit 332, and the first stage reduced image integer accuracy motion vector search unit 333 are omitted in the motion prediction and compensation unit 311. In other words, since execution of redundant processes is suppressed, the image coding device 100 can realize suppression of an increase of a load.

(3) Process flow

A plural image coding process is executed in the same manner as in the example of FIG. 6. A coding process is executed in the same manner as in the example of FIG. 7.

(3-1) Inter-motion prediction process

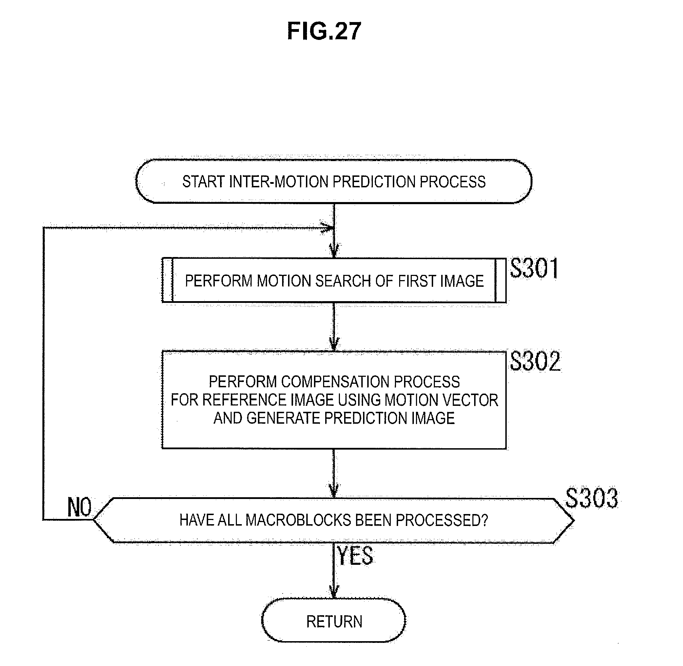

An example of the flow of an inter-motion prediction process performed in Step S124 of FIG. 7 of this case will be described with reference to the flowchart of FIG. 27. This process is executed when the first coding unit 112-1 executes the coding process of FIG. 7 for the first image.

In Step S301, the MV eliciting unit 302 performs motion search of the first image.

In Step S302, the motion prediction and compensation unit 301 performs a compensation process for the reference image using a motion vector, and thereby generating a prediction image. Each of the processes of Step S301 to Step S303 is repeated until all macroblocks are processed.

(3-2) Motion vector search process

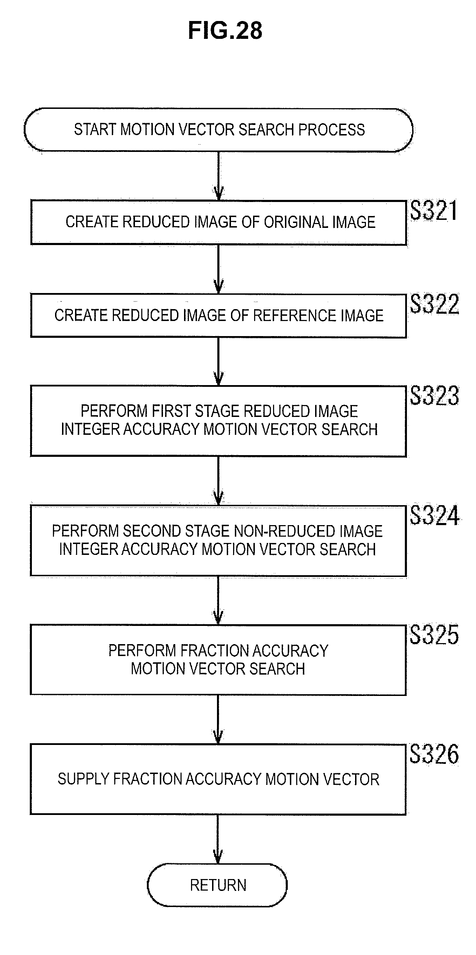

An example of the motion vector search process executed in Step S301 of FIG. 27 will be described with reference to the flowchart of FIG. 28.

In Step S321, the original image thinning circuit 331 creates a reduced image of the original image. In Step S322, the reference image thinning circuit 332 creates a reduced image of the reference image.

In Step S323, the first stage reduced image integer accuracy motion vector search unit 333 performs first stage reduced image integer accuracy motion vector search, thereby eliciting the reduced image integer accuracy motion vector MV1.

In Step S324, the second stage non-reduced image integer accuracy motion vector search unit 334 performs second stage non-reduced image integer accuracy motion vector search using the original image, the reference image, and the reduced image integer accuracy motion vector MV1, thereby eliciting the non-reduced image integer accuracy motion vector MV2.

In Step S325, the fraction accuracy motion vector search unit 335 performs fraction accuracy motion vector search using the original image, the reference image, and the non-reduced image integer accuracy motion vector MV2, thereby generating the fraction accuracy motion vector MV3.

In Step S326, the fraction accuracy motion vector search unit 335 outputs the fraction accuracy motion vector MV3 to the outside of the MV eliciting unit 302 and also supplies the vector to the MV transform unit 312.

(3-3) Inter-motion prediction process

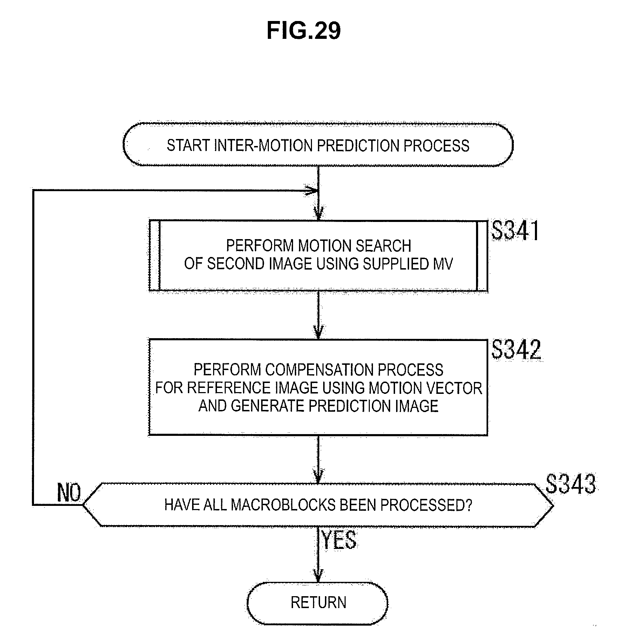

An example of the flow of the inter-motion prediction process executed in Step S124 of FIG. 7 of this case will be described with reference to the flowchart of FIG. 29. This process is executed when the second coding unit 112-2 executes the coding process of FIG. 7 for the second image.

In Step S341, the MV transform unit 312 performs motion search of the second image using the motion vector supplied from the MV eliciting unit 302.

In Step S342, the motion prediction and compensation unit 311 performs a compensation process for the reference image using the motion vector, and thereby generates a prediction image. Each of the processes of Step S341 to Step S343 is repeated until all macroblocks are processed.

(3-4) Motion vector search process

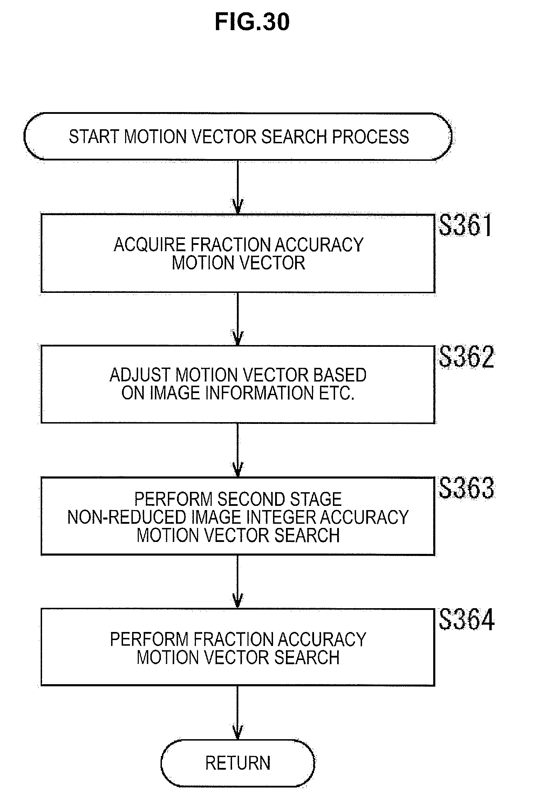

An example of the flow of the motion vector search process executed in Step S341 of FIG. 29 will be described with reference to the flowchart of FIG. 30.

In Step S361, the MV adjustment unit 351 acquires the fraction accuracy motion vector MV3 supplied from the MV eliciting unit 302. In Step S362, the MV adjustment unit 351 adjusts the motion vector based on the image information and the like, and thereby elicits the reduced image integer accuracy motion vector MV4.

In Step S363, the second stage non-reduced image integer accuracy motion vector search unit 334 performs second stage non-reduced image integer accuracy motion vector search using the original image, the reference image, and the reduced image integer accuracy motion vector MV4, and thereby elicits the non-reduced image integer accuracy motion vector MV5.

In Step S364, the fraction accuracy motion vector search unit 335 performs fraction accuracy motion vector search using the original image, the reference image, and the non-reduced image integer accuracy motion vector MV5, and thereby elicits the fraction accuracy motion vector MV6. The fraction accuracy motion vector search unit 345 outputs the generated fraction accuracy motion vector MV6 to the outside of the MV transform unit 312.

By performing each of the processes above, the image coding device 100 can use the MV generated for the first image in coding of another image (for example, the second image). In other words, the image coding device 100 can reduce redundant processes, and thus can suppress an increase of a load unnecessary for image coding.

Note that image information used for the MV adjustment unit 351 to elicit the reduced image integer accuracy motion vector MV4 is arbitrary, and may be information other than the examples described above.

In addition, it has been described above that the fraction accuracy motion vector MV3 generated by the MV eliciting unit 302 is adjusted to elicit the reduced image integer accuracy motion vector MV4, but it is not limited thereto, and the MV adjustment unit 351 may be set to adjust the fraction accuracy motion vector MV3 to elicit the non-reduced image integer accuracy motion vector MV5. With this configuration, the second stage non-reduced image integer accuracy motion vector search unit 344 can also be omitted.

Furthermore, the MV adjustment unit 351 may be set to adjust the fraction accuracy motion vector MV3 to elicit the fraction accuracy motion vector MV6. With this configuration, the fraction accuracy motion vector search unit 345 can also be omitted.

As the processes are omitted, however, accuracy of the motion vectors is lowered, and thus it is desirable to decide a process to be omitted within a practical range. Note that the MV adjustment unit 351 may be set to be able to select whether the fraction accuracy motion vector MV3 is to be transformed into one of the reduced image integer accuracy motion vector MV4 to the fraction accuracy motion vector MV6 according to a circumstance.

In addition, the fraction accuracy motion vector MV3 is described above as being supplied to the MV transform unit 312 from the MV eliciting unit 302, but it is not limited thereto, and the reduced image integer accuracy motion vector MV1 or the non-reduced image integer accuracy motion vector MV5 may be set to be supplied to the MV transform unit 312 from the MV eliciting unit 302. In addition, it may be set to be able to select which vector is to be supplied to the MV transform unit 312 from the MV eliciting unit 302.

<5. Fifth embodiment>

[Intra-prediction mode]

In the case of a stereoscopic moving image such as a moving image of the MVC standard, for example, right and left images (a first image and a second image) have predetermined parallax, but subjects are basically substantially the same, and content as a picture is substantially the same. For this reason, intra-prediction modes of the first image and the second image are substantially the same. Thus, it is redundant to independently elicit the intra-prediction mode for each moving image as in the related art, and thus there is concern of a load unnecessarily increasing.

Thus, the image coding device 100 uses the intra-prediction mode generated for a certain image in another image as in the other embodiments described above.

As described above, however, there is parallax between the first image and the second image. In other words, the first image and the second image deviate from each other in the horizontal direction and cause parallax. Thus, it is difficult to apply the intra-prediction mode of one side to the other side without change. Since the images, however, only deviate in the horizontal direction, the intra-prediction mode of one side can be applied to the other side by shifting the intra-prediction mode by the amount of deviation. Therefore, the intra-prediction mode of one side can be applied to the other side with ease.

(1) Coding unit

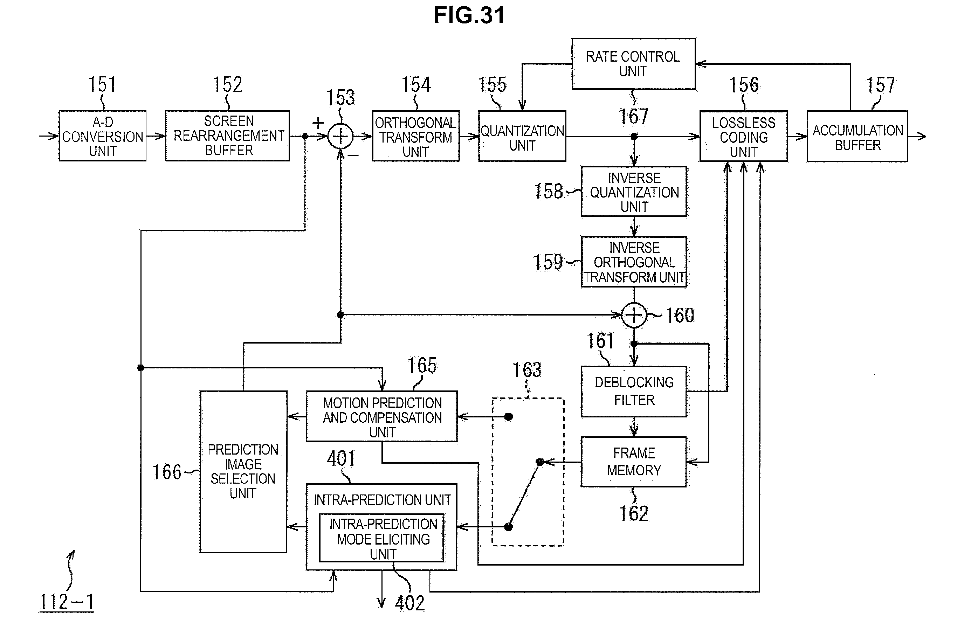

FIG. 31 is a block diagram showing a main configuration example of the first coding unit 112-1 of this case.

In the case of the example of FIG. 31, the first coding unit 112-1 also has the same basic configuration as in the case of the example of FIG. 4, but in the case of FIG. 31, the GMV eliciting unit 171 is omitted. An intra-prediction unit 401 shown in FIG. 31 is the same processing unit as the intra-prediction unit 164. The intra-prediction unit 401 has an intra-prediction mode eliciting unit 402 that elicits the intra-prediction mode of the first image.

The intra-prediction mode eliciting unit 402 performs prediction of a current portion using an image of a coded part of the first image coded by the first coding unit 112-1 to elicit the intra-prediction mode of the first image.

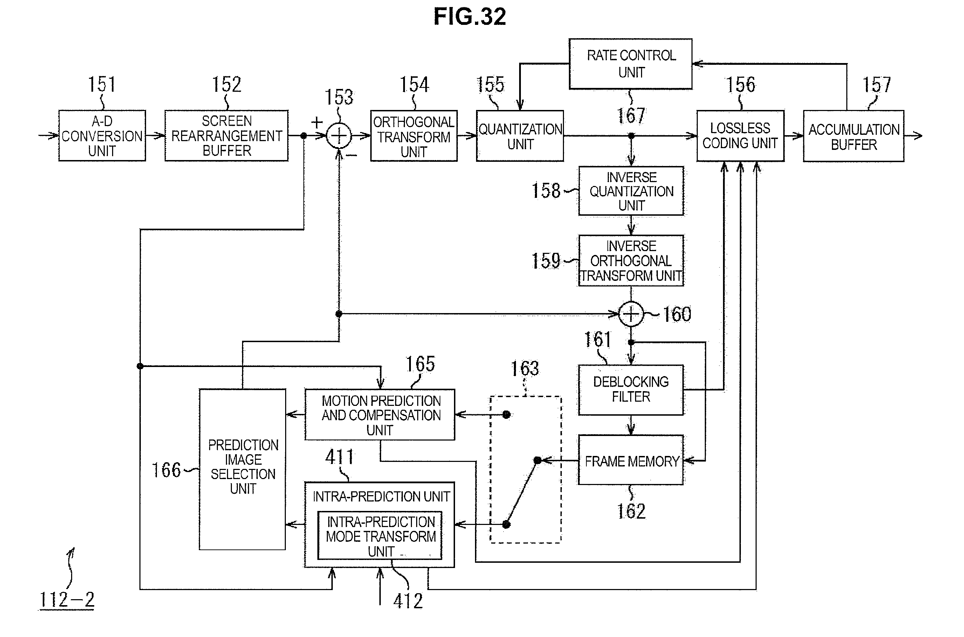

FIG. 32 is a block diagram showing a main configuration example of the second coding unit 112-2 of this case.

In the case of the example of FIG. 32, the second coding unit 112-2 also has the same basic configuration as in the case of the example of FIG. 5, but in the case of FIG. 32, the GMV determining unit 172 is omitted. In addition, in the case of the example of FIG. 32, the second coding unit 112-2 has an intra-prediction unit 411 instead of the intra-prediction unit 164. The intra-prediction unit 411 has an intra-prediction mode transform unit 412 instead of the intra-prediction mode eliciting unit.

The intra-prediction mode transform unit 412 transforms the intra-prediction mode of the first image elicited by the intra-prediction mode eliciting unit 402 to elicit an intra-prediction mode of the second image.

(2) Intra-prediction unit

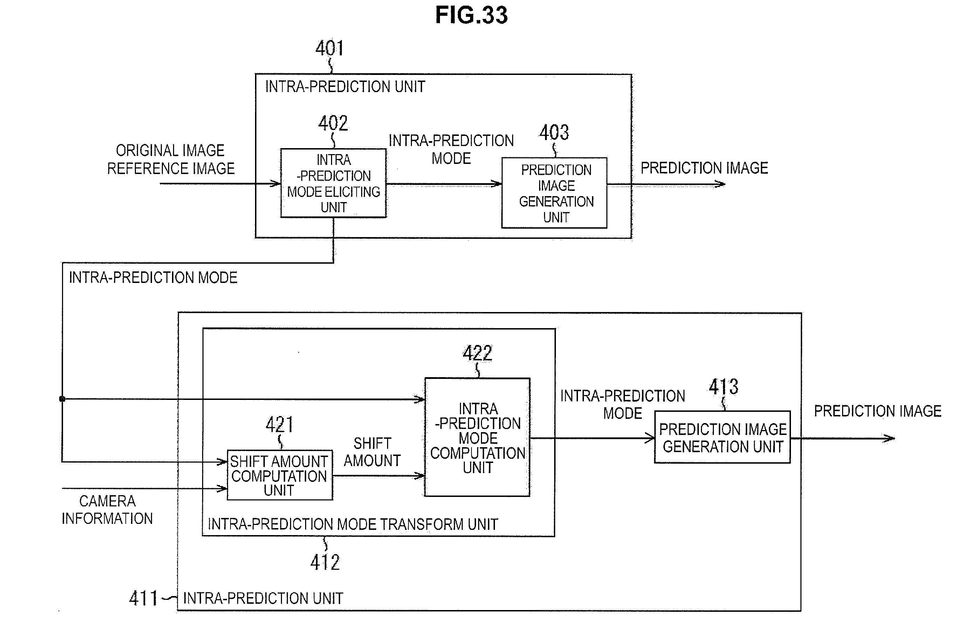

FIG. 33 is a block diagram showing main configuration examples of the intra-prediction unit 401 and the intra-prediction unit 411.

As shown in FIG. 33, the intra-prediction unit 401 has the intra-prediction mode eliciting unit 402 and a prediction image generation unit 403.

The intra-prediction mode eliciting unit 402 elicits the intra-prediction mode for the first image using the original image and reference image of the first image. The intra-prediction mode eliciting unit 402 supplies the elicited intra-prediction mode to the prediction image generation unit 403.

The prediction image generation unit 403 generates a prediction image using the supplied intra-prediction mode, and supplies the prediction image to the prediction image selection unit 166.

In addition, the intra-prediction mode eliciting unit 402 supplies the elicited intra-prediction mode of the first image to the intra-prediction mode transform unit 412 of the intra-prediction unit 411.

As shown in FIG. 33, the intra-prediction unit 411 has the intra-prediction mode transform unit 412 and a prediction image generation unit 413. In addition, the intra-prediction mode transform unit 412 has a shift amount computation unit 421 and an intra-prediction mode computation unit 422.

The shift amount computation unit 421 acquires the intra-prediction mode supplied from the intra-prediction mode eliciting unit 402 and camera information relating to imaging, for example, an imaging condition, setting information, and the like supplied from the outside. The shift amount computation unit 421 specifies the amount of parallax between the first image and the second image based on the above information and the first image information and the second image information and the like supplied from the second image information acquisition unit 111-2, elicits a shift amount of the intra-prediction mode, and then supplies the elicited amount of shift to the intra-prediction mode computation unit 422.

The intra-prediction mode computation unit 422 shifts the intra-prediction mode of the first image supplied from the intra-prediction mode eliciting unit 402 by the shift amount computed by the shift amount computation unit 421, and thereby elicits an intra-prediction mode of the second image. The intra-prediction mode computation unit 422 supplies the elicited intra-prediction mode of the second image to the prediction image generation unit 413.

The prediction image generation unit 413 generates a prediction image using the supplied intra-prediction mode, and then supplies the prediction image to the prediction image selection unit 166.

(3) Shift

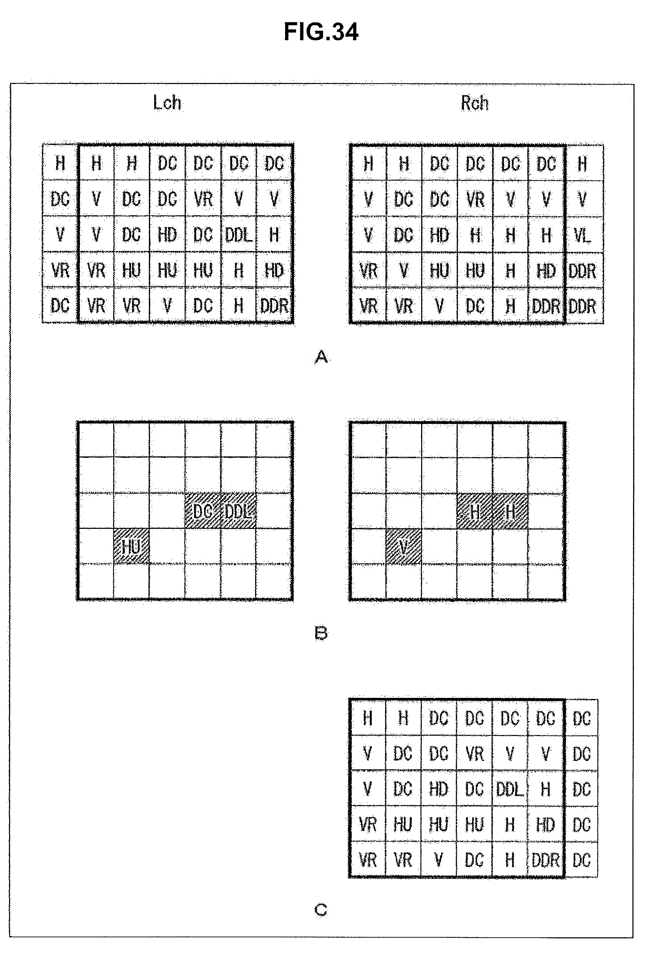

The intra-prediction mode of the first image (Lch) and the intra-prediction mode of the second image (Rch) are assumed to be in, for example, the state shown in A of FIG. 34. In this case, the portions of both images surrounded by the black frames are substantially the same as shown in B of FIG. 34.

Then, if the portion of the first image (Lch) surrounded by the black frame is shifted to the left by one macroblock and the macroblock on the right end is set to a DC mode, an intra-prediction mode which is substantially the same as the intra-prediction mode of the second image (Rch) of A of FIG. 34 is generated as shown in C of FIG. 34. In other words, by shifting the intra-prediction mode of the first image (Lch), the intra-prediction mode which is substantially the same as the intra-prediction mode of the second image (Rch) can be elicited.

In that manner, the image coding device 100 uses the intra-prediction mode elicited for a certain image for another image by using high correlativity between the images. Accordingly, the image coding device 100 can omit redundant processes relating to intra-prediction that causes a heavy load. Accordingly, the image coding device 100 can realize suppression of an increase of a load.

(4) Process Flow

Next, the flows of processes executed by the image coding device 100 described above will be described. A plural image coding process is executed in the same manner as in the example of FIG. 6.

(4-1) Coding process

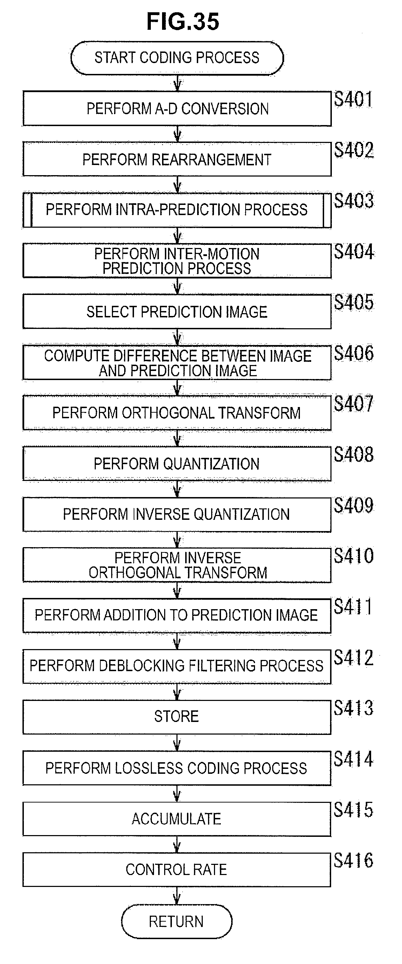

An example of the flow of a coding process of this case is shown in FIG. 35. As shown in FIG. 35, the coding process of this case is also executed in the same manner as the case of FIG. 7. In other words, the processes of Step S401 to Step S416 are executed basically in the same manner as the processes of Step S121 to Step S136 of FIG. 7, respectively. In the case of the example of FIG. 35, however, elicitation or a transform of a coding parameter is performed in the intra-prediction process of Step S403 rather than the inter-motion prediction process of Step S404.

The coding process shown in FIG. 35 is also performed for moving images of each system as in the case of FIG. 7. In other words, the first coding unit 112-1 and the second coding unit 112-2 each execute the coding process.

(4-2) Intra-prediction process

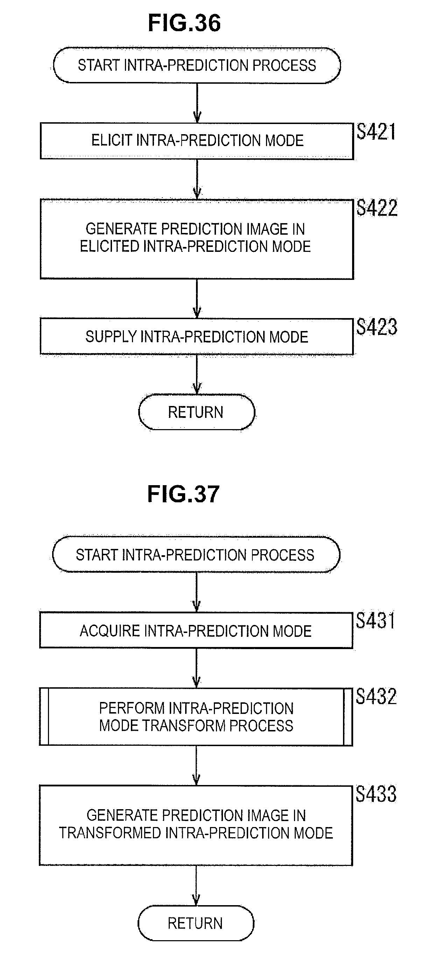

An example of the flow of the intra-prediction process executed by the intra-prediction unit 401 in Step S403 of FIG. 35 will be described with reference to the flowchart of FIG. 36.
In Step S421, the intra-prediction mode eliciting unit 402 elicits the intra-prediction mode. In Step S422, the prediction image generation unit 403 generates a prediction image in the elicited intra-prediction mode.
In Step S423, the intra-prediction mode eliciting unit 402 supplies the intra-prediction mode elicited in Step S421 to the intra-prediction mode transform unit 412.

(4-3) Intra-prediction process

An example of the flow of the intra-prediction process executed by the intra-prediction unit 411 in Step S403 of FIG. 35 will be described with reference to the flowchart of FIG. 37.
In Step S431, the intra-prediction mode transform unit 412 acquires the intra-prediction mode of the first image.
In Step S432, the intra-prediction mode transform unit 412 performs an intra-transform process for transforming the intra-prediction mode of the first image acquired in Step S431 into an intra-prediction mode of the second image.
In Step S433, the prediction image generation unit 413 generates a prediction image in the transformed intra-prediction mode.

(5) Intra-transform process

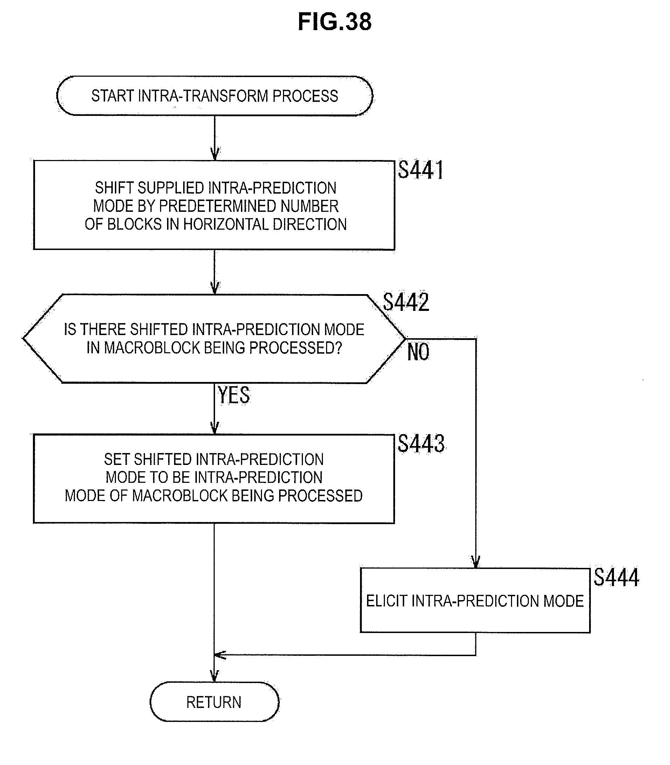

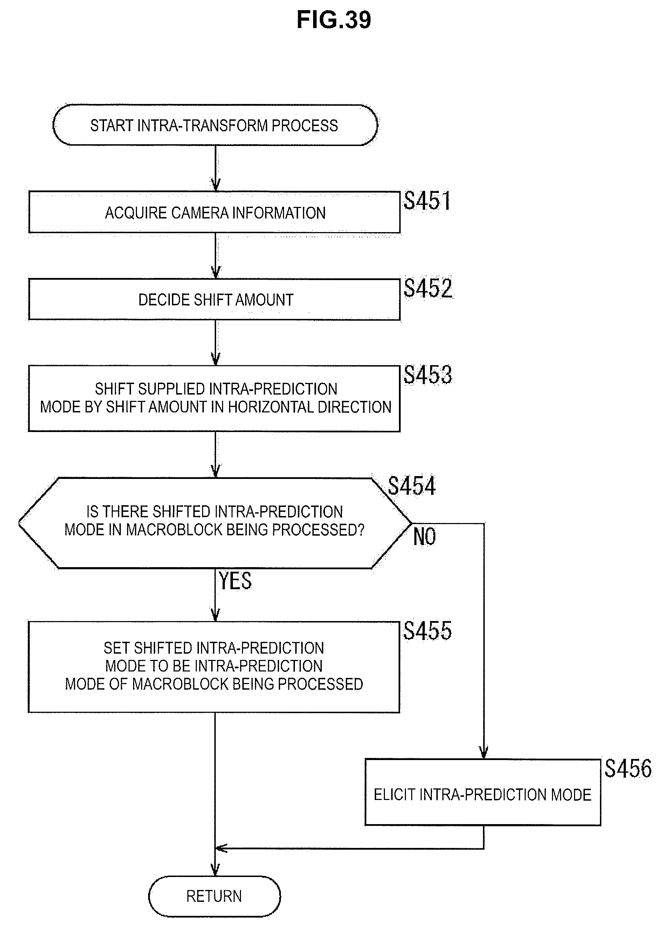

Next, the intra-transform process executed in Step S432 of FIG. 37 will be described. In the intra-transform process, the intra-prediction mode transform unit 412 decides a shift amount of the intra-prediction mode of the first image, and shifts the intra-prediction mode of the first image by the shift amount, thereby eliciting the intra-prediction mode of the second image.
The method for deciding the shift amount is arbitrary. For example, the shift amount may be known. In the case of the MVC standard, for example, parallax between images is decided in advance. Thus, an amount of the intra-prediction mode to be shifted is also a fixed value.
Thus, in such a case, the shift amount may be set to be a fixed value (for example, a predetermined number of blocks). In other words, in this case, the shift amount computation unit 421 can be omitted.
An example of the flow of the intra-transform process of this case will be described with reference to the flowchart of FIG. 38.
In Step S441, the intra-prediction mode computation unit 422 shifts the supplied intra-prediction mode of the first image in the horizontal direction by a predetermined number of blocks.
The intra-prediction mode computation unit 422 determines whether or not there is a shifted intra-prediction mode in the macroblock being processed in Step S442. When it is determined that there is the shifted intra-prediction mode, the process proceeds to Step S443, and the intra-prediction mode computation unit 422 sets the shifted intra-prediction mode as the intra-prediction mode of the macroblock being processed.
In addition, in Step S442, when it is determined that there is not the shifted intra-prediction mode in the macroblock being processed, the process proceeds to Step S444, and the intra-prediction mode computation unit 422 elicits the intra-prediction mode using an arbitrary method.
By setting a shift amount to be a fixed value as above, the image coding device 100 can more easily shift the intra-prediction mode.
The intra-prediction mode of macroblocks may be set to be, for example, the DC mode for all of them, or the intra-prediction mode of an adjacent macroblock may be set to be duplicated.
In addition, the shift amount computation unit 421 may be set to decide the shift amount of the intra-prediction mode based on camera information.
An example of the flow of the intra-transform process of this case will be described with reference to the flowchart of FIG. 39.
The shift amount computation unit 421 acquires camera information in Step S451, and decides a shift amount using the camera information in Step S452.
In Step S453, the intra-prediction mode computation unit 422 shifts the supplied intra-prediction mode by the shift amount decided in Step S452 in the horizontal direction.
The processes of Step S454 to Step S456 are executed in the same manner as Step S442 to Step S444 of FIG. 38.
By setting a shift amount to be changeable as above, the image coding device 100 can elicit a shift amount more accurately.

In addition, the shift amount computation unit 421 may be set to estimate a shift amount by computing the intra-prediction mode of the second image for some macroblocks and then comparing the intra-prediction of the second image to the intra-prediction mode of the first image. For example, the shift amount computation unit 421 elicits the intra-prediction mode of the second image for one macroblock, and compares the intra-prediction mode of the first image to the intra-prediction mode of the second image for one block line thereof. The shift amount computation unit 421 obtains the deviation between the first image and the second image based on the comparison result, and thereby decides the shift amount. The shift amount may be set to be elicited as above.

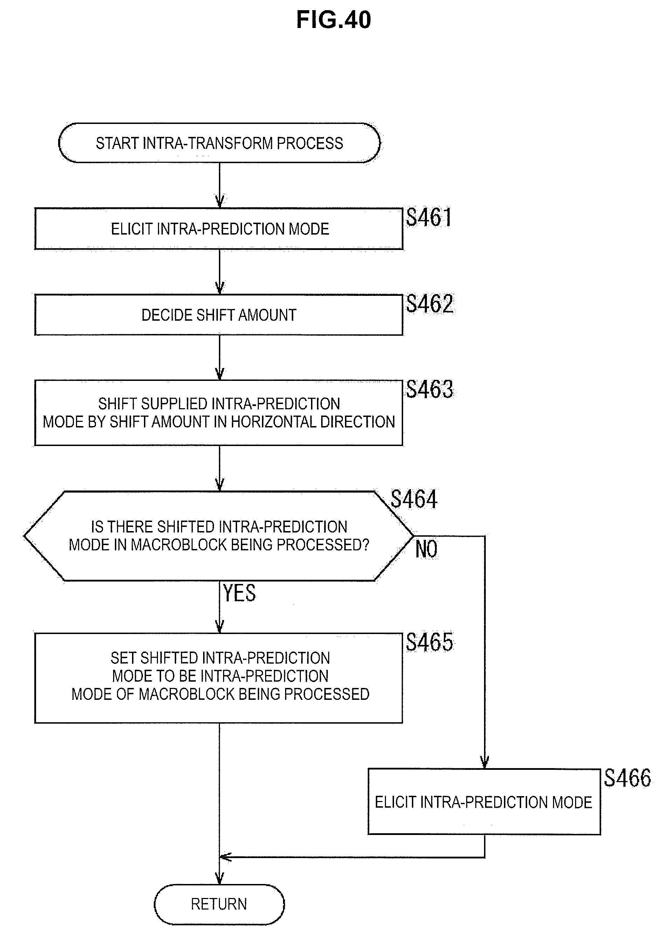

An example of the flow of the intra-transform process of this case will be described with reference to the flowchart of FIG. 40.

The shift amount computation unit 421 elicits the intra-prediction mode of the second image for some macroblocks in Step S461. In Step S462, the shift amount computation unit 421 compares the intra-prediction mode of the second image elicited in Step S461 to the intra-prediction mode of the first image, and then elicits the shift amount according to the comparison result.

The processes of Step S463 to Step S466 are executed in the same manner as the processes of Step S453 to Step S456, respectively.

By actually comparing the intra-prediction mode of the first image and the intra-prediction mode of the second image as above, the image coding device 100 can elicit the shift amount more accurately.

Note that the number of blocks for which the intra-prediction modes are compared is arbitrary. The accuracy improves as the number increases, but the merit of the reduction of a load deteriorates.

In addition, the comparison of the intra-prediction modes for deciding the shift amount has been described above, but the embodiment is not limited thereto, and it is possible to compare the first image to the second image and compute the shift amount based on the comparison result.

In addition, in all cases described above, a shift direction is arbitrary as long as the direction corresponds to the direction of the deviation between the first image and the second image. For example, a shift direction may be the vertical direction, an oblique direction, or a rotation direction. In addition, a shift direction may be a direction obtained by combining any two or more directions of the plurality of directions.

In addition, without performing shifting, candidate prediction directions may be set to be limited at the time of intra-prediction of the second image. For example, since correlativity between the first image and the second image is high, correlativity of the intra-prediction modes thereof is also expected to be high. In other words, the intra-prediction modes (prediction direction) of a certain macroblock are expected to be often similar in the first image and the second image.

Thus, prediction directions serving as candidates of intra-prediction for the second image may be set to be limited with reference to the intra-prediction mode of the first image. For example, a macroblock of which a prediction direction is the horizontal direction in the first image is highly likely to also have the horizontal direction as a prediction direction in the second image, and not likely to have the vertical direction. Thus, in intra-prediction for the macroblock of the second image, the vertical direction may be set to be excluded from the candidates for the prediction direction.

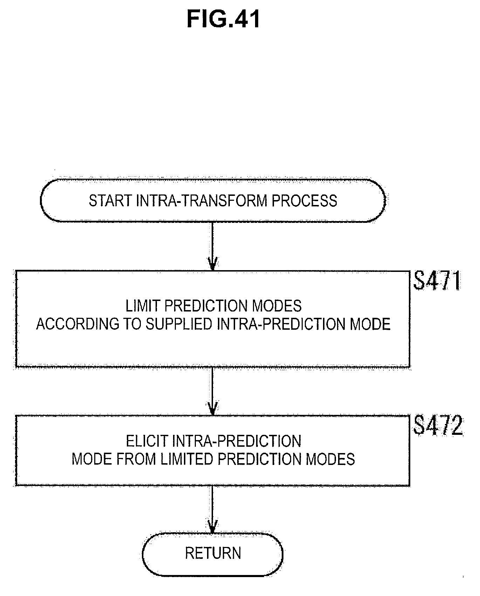

An example of the flow of the intra-transform process of this case will be described with reference to the flowchart of FIG. 41.

In Step S471, the intra-prediction mode computation unit 422 limits intra-prediction modes of the second image according to the supplied intra-prediction mode of the first image.

In Step S472, the intra-prediction mode computation unit 422 elicits an intra-prediction mode from the limited prediction modes.

By performing this operation, the image coding device 100 can reduce unnecessary candidates, and can reduce a load of the intra-prediction process of the second image.

Note that one can be selected from the plurality of methods described above.

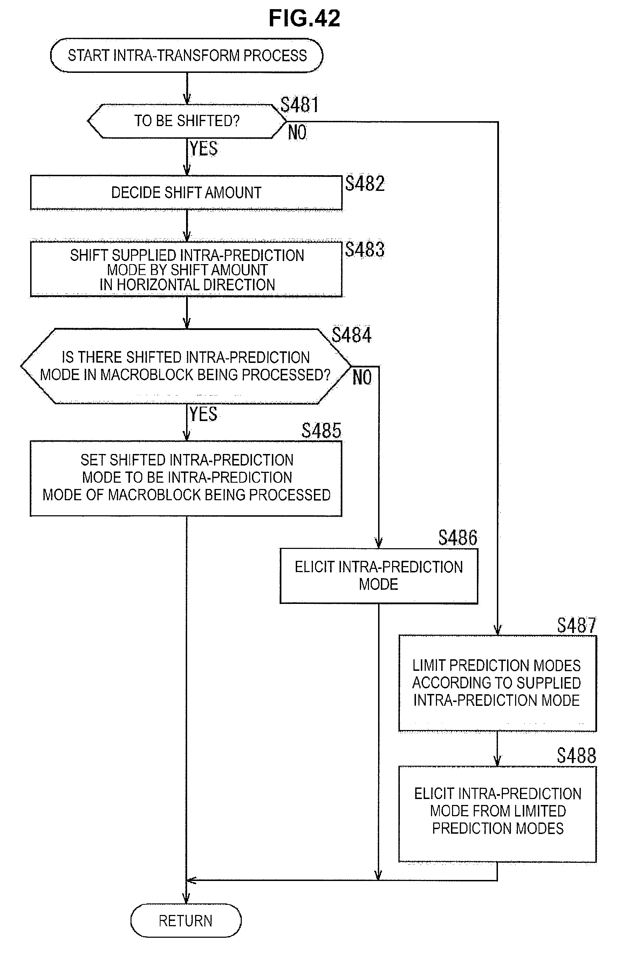

An example of the flow of the intra-transform process of that case will be described with reference to the flowchart of FIG. 42.

The shift amount computation unit 421 determines whether or not the intra-prediction mode of the first image is to be shifted to elicit the intra-prediction mode of the second image in Step S481. When it is determined to be shifted based on an arbitrary condition, the shift amount computation unit 421 advances the process to Step S482.

In Step S482, the shift amount computation unit 421 decides the shift amount using any method. The shift amount decision method is arbitrary. For example, it may be the method described above.

The processes of Step S483 to Step S486 are executed in the same manner as the processes of, for example, Step S463 to Step S466 of FIG. 40, respectively.

In addition, in Step S481, when it is determined not to be shifted, the intra-prediction mode computation unit 422 advances the process to Step S487. The processes of Step S487 and Step S488 are executed in the same manner as the processes of, for example, Step S471 and Step S472 of FIG. 41, respectively.

By performing the operation, there is a wide range of selections of the methods for eliciting the intra-prediction mode of the second image, and thus the image coding device 100 can elicit the intra-prediction mode of the second image using a more appropriate method.

<6. Sixth embodiment>

[Intra-prediction mode]

Note that such diversion of the intra-prediction mode as above can also be realized in an image decoding device that corresponds to the image coding device 100.
When, for example, the image coding device 100 performs intra-prediction of the second image using the intra-prediction mode of the first image as described above, the intra-prediction mode employed for the second image can also be obtained from the intra-prediction mode of the first image even in the image decoding device.
In other words, transmission of the intra-prediction mode of the second image can be omitted. By performing such an operation, the image coding device 100 can improve coding efficiency.

(1) Image decoding device

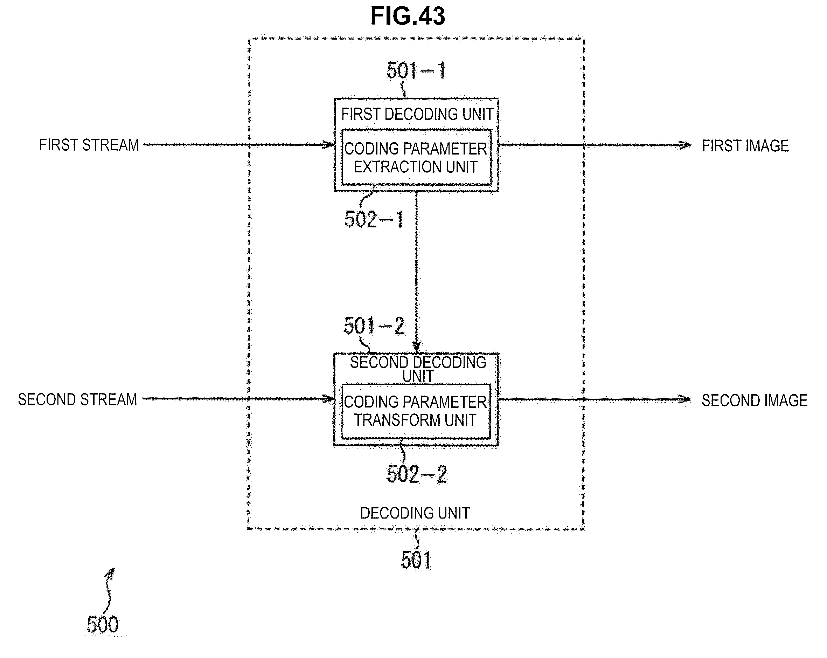

FIG. 43 is a block diagram showing a main configuration example of an image decoding device 500 that corresponds to the image coding device 100 shown in FIG. 2. The image decoding device 500 can correctly decode the histogram generated by the image coding device 100.
In other words, the image decoding device 500 decodes each of the input first stream and second stream generated by the image coding device 100, and thereby generates the first image and the second image.
As shown in FIG. 43, the image decoding device 500 has a decoding unit 501. The decoding unit 501 has a first decoding unit 501-1 that decodes the first stream and a second decoding unit 501-2 that decodes the second stream.
The first decoding unit 501-1 has a coding parameter extraction unit 502-1. The coding parameter extraction unit 502-1 extracts a coding parameter from the first stream. The first decoding unit 501-1 performs decoding of the first stream using the coding parameter extracted by the coding parameter extraction unit 502-1.
In addition, the first decoding unit 501-1 (coding parameter extraction unit 502-1) supplies the coding parameter extracted from the first stream to the second decoding unit 501-2.
The second decoding unit 501-2 performs decoding of the second stream. The second decoding unit 501-2 has a coding parameter transform unit 502-2. The coding parameter transform unit 502-2 acquires the coding parameter of the first image supplied from the first decoding unit 501-1 (coding parameter extraction unit 502-1) and then transforms the parameter into a coding parameter of the second image. The second decoding unit 501-2 performs decoding of the second stream using the transformed coding parameter.
As described above, the image decoding device 500 can divert the coding parameter for the first image extracted from the first stream also for decoding of the second stream. Thus, transmission of a coding parameter for the second image is not necessary. In other words, the image decoding device 500 can improve coding efficiency.
Note that the image decoding device 500 may also be set to be able to decode streams of three or more systems (of N channels) as in the example of FIG. 3.

(2) Decoding unit

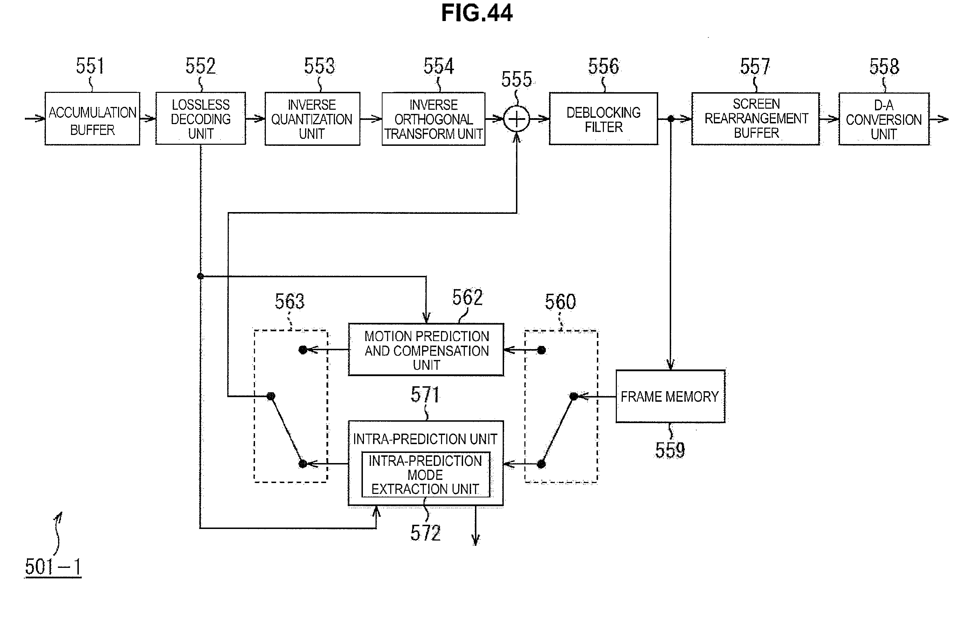

FIG. 44 is a block diagram showing a main configuration example of the first decoding unit 501-1 of this case.
The first decoding unit 501-1 has an accumulation buffer 551, a lossless decoding unit 552, an inverse quantization unit 553, an inverse orthogonal transform unit 554, a computation unit 555, a deblocking filter 556, a screen rearrangement buffer 557, and a D-A conversion unit 558 as shown in FIG. 44. In addition, the first decoding unit 501-1 has a frame memory 559, a selection unit 560, an intra-prediction unit 571, a motion prediction and compensation unit 562, and another selection unit 563.
The accumulation buffer 551 accumulates transmitted coded data, and supplies the coded data to the lossless decoding unit 552 at a predetermined timing. The lossless decoding unit 552 decodes the information coded by the lossless coding unit 156 and supplied by the accumulation buffer 551 in a scheme that corresponds to the coding scheme of the lossless coding unit 156. The lossless decoding unit 552 supplies coefficient data obtained by quantizing a differential image obtained from the decoding to the inverse quantization unit 553.
In addition, the lossless decoding unit 552 refers to information relating to an optimum prediction mode obtained from the decoding of the coded data to determine whether an intra-prediction mode has been selected or an inter-prediction mode has been selected for the optimum prediction mode. In other words, the lossless decoding unit 552 determines whether the prediction mode employed for the transmitted coded data is of intra-prediction or inter-prediction.

The lossless decoding unit 552 supplies information relating to the prediction mode to the intra-prediction unit 571 or the motion prediction and compensation unit 562 based on the determination result. When, for example, the intra-prediction mode is selected as the optimum prediction mode for the image coding device 100, the lossless decoding unit 552 supplies intra-prediction information that is information relating to the selected intra-prediction mode supplied from the coding side to the intra-prediction unit 571. In addition, when the inter-prediction mode is selected as the optimum prediction mode for the image coding device 100, for example, the lossless decoding unit 552 supplies inter-prediction information that is information relating to the selected inter-prediction mode supplied from the coding side to the motion prediction and compensation unit 562.

The inverse quantization unit 553 performs inverse quantization for the quantized coefficient data obtained from the decoding of the lossless decoding unit 552 in a scheme that corresponds to the quantization scheme of the quantization unit 155 (the same scheme as the inverse quantization unit 158). The inverse quantization unit 553 supplies the inverse-quantized coefficient data to the inverse orthogonal transform unit 554.

The inverse orthogonal transform unit 554 performs an inverse orthogonal transform on the coefficient data supplied from the inverse quantization unit 553 in a scheme that corresponds to the orthogonal transform scheme of the orthogonal transform unit 154. The inverse orthogonal transform unit 554 obtains a differential image that corresponds to the differential image before the orthogonal transform in the image coding device 100 through the inverse orthogonal transform process.

The differential image obtained from the inverse orthogonal transform is supplied to the computation unit 555. In addition, a prediction image is supplied from the intra-prediction unit 571 or the motion prediction and compensation unit 562 to the computation unit 555 via the selection unit 563.

The computation unit 555 adds the prediction image to the differential image, and thereby obtains a reconstructed image that corresponds to the image before the prediction image is subtracted therefrom by the computation unit 153 of the image coding device 100. The computation unit 555 supplies the reconstructed image to the deblocking filter 556.

The deblocking filter 556 performs a deblocking filtering process for the reconstructed image with regard to the supplied reconstructed image, and thereby removes block distortion.

The deblocking filter 556 supplies the decoded image that is the filtering process result to the screen rearrangement buffer 557 and the frame memory 559. Note that the filtering process by the deblocking filter 556 can be omitted. In other words, the output of the computation unit 555 can be stored in the frame memory 559 without passing through the filtering process. For example, the intra-prediction unit 571 uses a pixel value of a pixel included in the image as a pixel value of a peripheral pixel.

The screen rearrangement buffer 557 performs rearrangement of the supplied decoded image. In other words, the order of frames rearranged for the order of decoding by the screen rearrangement buffer 152 is rearranged in the order of original display. The D-A conversion unit 558 performs D-A conversion for the decoded image supplied from the screen rearrangement buffer 557, and then outputs the image to a display that is not illustrated to be displayed.

The frame memory 559 stores the supplied reconstructed image and decoded image. In addition, the frame memory 559 supplies the stored reconstructed image and decoded image to the intra-prediction unit 571 or the motion prediction and compensation unit 562 via the selection unit 560 at a predetermined timing or based on a request from the outside such as the intra-prediction unit 571 or the motion prediction and compensation unit 562.

The intra-prediction unit 571 performs basically the same process as the intra-prediction unit 164. The intra-prediction unit 571, however, performs intra-prediction only for a region from which the prediction image is generated through the intra-prediction at the time of coding.

In addition, the intra-prediction unit 571 has an intra-prediction mode extraction unit 572. The intra-prediction mode extraction unit 572 extracts information representing the intra-prediction mode of the first image from the information relating to the intra-prediction supplied from the lossless decoding unit 552. The intra-prediction unit 571 (intra-prediction mode extraction unit 572) supplies the intra-prediction mode of the first image to the second decoding unit 501-2.

In this example, the coding parameter is the intra-prediction mode. In other words, the intra-prediction mode extraction unit 572 corresponds to the coding parameter extraction unit 502-1 of FIG. 43.

In addition, the intra-prediction unit 571 performs intra-prediction for the first image (first stream) using the intra-prediction mode of the first image extracted by the intra-prediction mode extraction unit 572.

The motion prediction and compensation unit 562 performs inter-prediction (including motion prediction and motion compensation) based on the inter-prediction information supplied from the lossless decoding unit 552, and thereby generates a prediction image. Note that the motion prediction and compensation unit 562 performs inter-prediction only for a region in which inter-prediction has been performed during coding based on the inter-prediction information supplied from the lossless decoding unit 552.

The intra-prediction unit 571 and the motion prediction and compensation unit 562 supply the prediction image generated for each region in units of prediction processes to the computation unit 555 via the selection unit 563.

The selection unit 563 supplies the prediction image supplied from the intra-prediction unit 571 or the prediction image supplied from the motion prediction and compensation unit 562 to the computation unit 555.

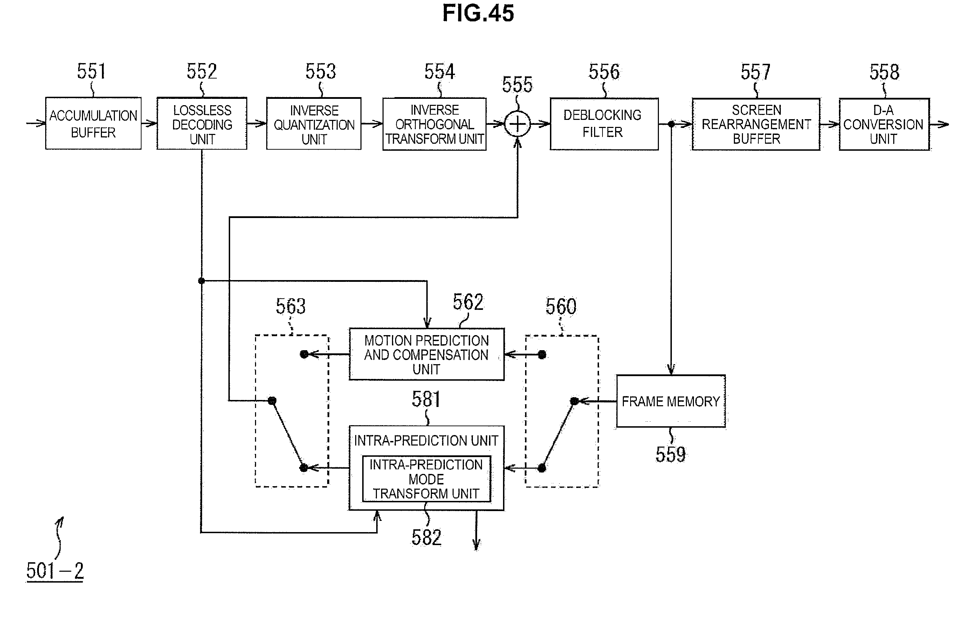

FIG. 45 is a block diagram showing a main configuration example of the second decoding unit 501-2. As shown in FIG. 45, the second decoding unit 501-2 has basically the same configuration as the first decoding unit 501-1 (of FIG. 44), and performs the same process.

The second decoding unit 501-2, however, has an intra-prediction unit 581 instead of the intra-prediction unit 571 of the first decoding unit 501-1.

The intra-prediction unit 581 has an intra-prediction mode transform unit 582. The intra-prediction mode transform unit 582 acquires the intra-prediction mode of the first image supplied from the intra-prediction unit 571 (intra-prediction mode extraction unit 572) of the first decoding unit 501-1. The intra-prediction mode transform unit 582 transforms the intra-prediction mode of the first image into the intra-prediction mode of the second image through a predetermined method using high correlativity between the first image and the second image.

With the above operation, it is not necessary to transmit the intra-prediction mode of the second image, and thus the image decoding device 500 can improve coding efficiency.

Note that a method for transforming the intra-prediction mode by the intra-prediction mode transform unit 582 is arbitrary, but is desirably the same as the method of the transform performed by the intra-prediction mode transform unit 412.

Note that a configuration of the intra-prediction mode transform unit 582 may be the same as the intra-prediction mode transform unit 412 (of FIG. 33).

(3) Process flow

(3-1) Plural image decoding process

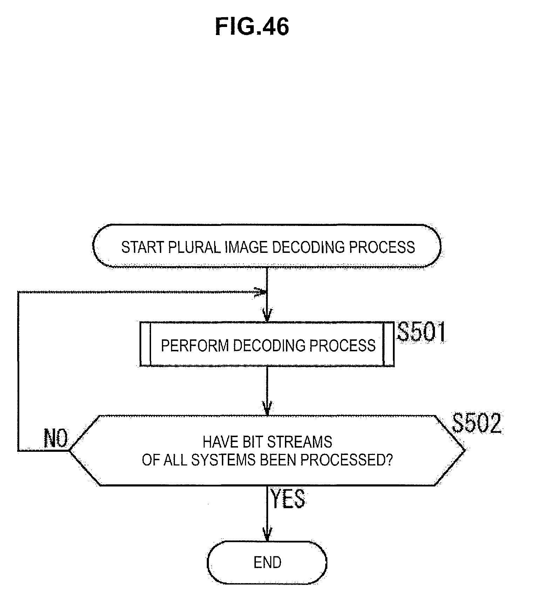

An example of the flow of a plural image decoding process will be described with reference to the flowchart of FIG. 46.

As shown in FIG. 46, the decoding unit 501 decodes bit streams of entire systems by executing the processes of Step S501 and Step S502 for the streams of each system.

(3-2) Decoding process

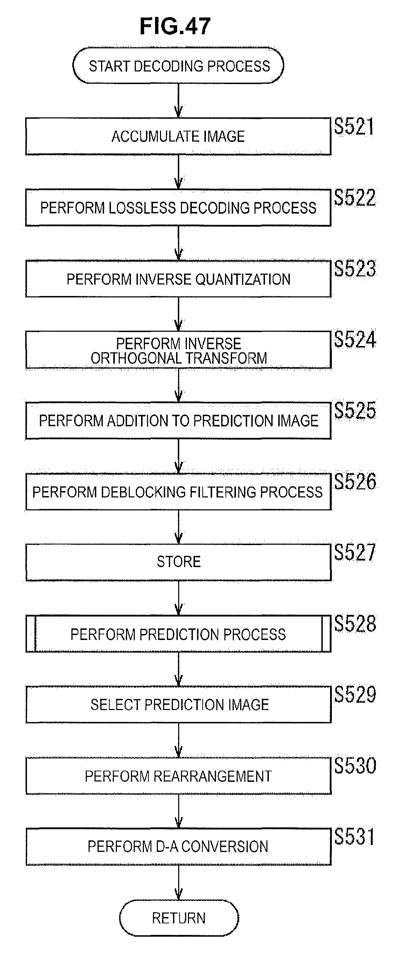

An example of the flow of the decoding process of each image executed in Step S501 of FIG. 46 will be described with reference to the flowchart of FIG. 47. This process is performed for bit streams of each system. In other words, the first decoding unit 501-1 and the second decoding unit 501-2 each execute this decoding process.

When the decoding process is started, the accumulation buffer 551 accumulates the transmitted coded data in Step S521. In Step S522, the lossless decoding unit 552 decodes the coded data supplied from the accumulation buffer 551. In other words, I-pictures, P-pictures, and B-pictures coded by the lossless coding unit 156 are decoded.

At this time, motion vector information, reference frame information, prediction mode information (intra-prediction mode or inter-prediction mode), and information of parameters relating to quantization are also decoded.

In Step S523, the inverse quantization unit 553 performs inverse quantization for the quantized orthogonal transform coefficient obtained in the process of Step S522 using a quantization parameter reconstructed in the process of Step S523.

In Step S524, the inverse orthogonal transform unit 554 performs an inverse orthogonal transform for the orthogonal transform coefficient obtained from the inverse quantization by the inverse quantization unit 553 in a method that corresponds to the orthogonal transform unit 154. Accordingly, differential information that corresponds to the input of the orthogonal transform unit 154 (output of the computation unit 153) is decoded.

In Step S525, the computation unit 555 adds the differential information obtained in the process of Step S524 to a prediction image obtained in the process of Step S528 that will be described later. Accordingly, the original image data is decoded.

In Step S526, the deblocking filter 556 appropriately performs the deblocking filtering process for the reconstructed image obtained in the process of Step S525.

In Step S527, the frame memory 559 stores the reconstructed image that has undergone the filtering process by the deblocking filter 556.

In Step S528, the intra-prediction unit 571 or the motion prediction and compensation unit 562 performs the prediction process. In Step S529, the selection unit 563 selects a prediction image.

In Step S530, the screen rearrangement buffer 557 performs rearrangement of frames of the decoded image data. In other words, the order of the frames rearranged in the image coding device 100 is rearranged in the order of original display.

In Step S531, the D-A conversion unit 558 performs D-A conversion for the decoded image data whose frames are rearranged by the screen rearrangement buffer 557. The decoded image data is output to a display that is not illustrated, and thereby an image thereof is displayed.

(3-3) Prediction process

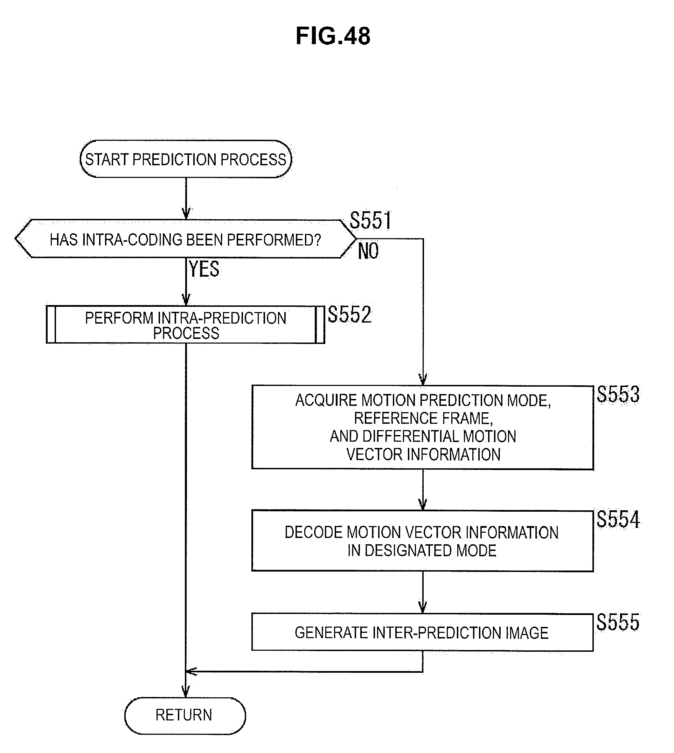

An example of the flow of the prediction process of each image executed in Step S528 of FIG. 47 will be described with reference to the flowchart of FIG. 48. This process is performed for bit streams of each system. In other words, the first decoding unit 501-1 and the second decoding unit 501-2 each execute the prediction process.
The intra-prediction unit 571 or the intra-prediction unit 581 determines whether intra-coding has been performed in Step S551, and when the intra-coding is determined to have been performed, the process proceeds to Step S552.
In Step S552, the intra-prediction unit 571 or the intra-prediction unit 581 performs the intra-prediction process. Since the intra-prediction process is the same as that on the coding side described above, description thereof is omitted.
In addition, when the intra-coding is determined not to have been performed in Step S551, the motion prediction and compensation unit 562 performs the processes of Step S553 to Step S555, and then generates an inter-prediction image.
As described above, the image decoding device 500 can also perform the same intra-prediction as the image coding device 100. Accordingly, it is not necessary to transmit the intra-prediction mode of the second image, and thus coding efficiency can be improved.
Note that it is not necessary to perform the shift of the intra-prediction mode described above for all pictures. Determining whether or not the intra-prediction mode is to be shifted, or computation of the shift amount of the case can be performed in an arbitrary unit. For example, a shift amount of the intra-prediction mode can be controlled for each macroblock. Thus, the intra-prediction mode can be shifted, for example, only for some macroblocks within a picture.

<7. Seventh embodiment>

[Supplementary note]

Note that it has been described above that a coding parameter of the first image is diverted to a coding process of another image, but selection of an image to set a coding parameter thereof as a reference source is arbitrary. For example, coding parameters of images of a plurality of systems may be set to be diverted to a coding process of other images. In addition, a system may be set to be selected to divert a coding parameter of a moving image thereof to coding of another image according to an increase or a decrease of a load, or a coding target image. Furthermore, it may be set to be switched according to a circumstance.

[Computer]

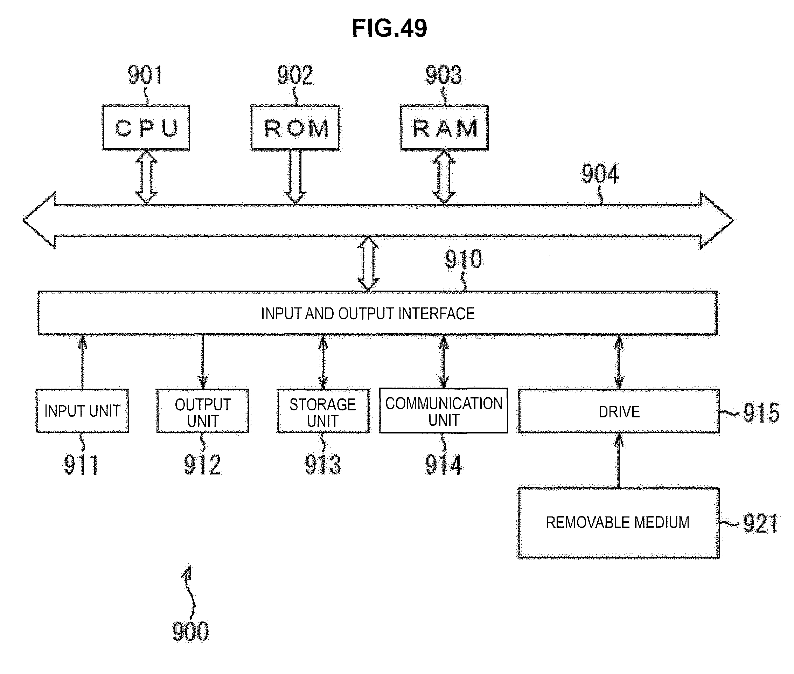

The series of processes described above may be executed by hardware, or by software. In such a case, it may be configured as the computer shown in, for example, FIG. 49.
In FIG. 49, a CPU (Central Processing Unit) 901 of the computer 900 executes various processes according to programs stored in a ROM (Read Only Memory) 902, or programs loaded from a storage unit 913 onto a RAM (Random Access Memory) 903. The RAM 903 also appropriately stores data and the like necessary for the CPU 901 to execute various processes.
The CPU 901, the ROM 902, and the RAM 903 are connected to one another via a bus 904. An input and output interface 910 is also connected to the bus 904.
An input unit 911 that includes a keyboard, a mouse, a touch panel, an input terminal, and the like, an output unit 912 that includes a display including a CRT (Cathode Ray Tube), an LCD (Liquid Crystal Display), and an OELD (Organic ElectroLuminescence Display), an arbitrary output device such as a speaker, an output terminal, and the like, a storage unit 913 constituted by an arbitrary storage medium such as a hard disk or a flash memory, a control unit that controls input and output of the storage medium, and the like, and a communication unit 914 that includes arbitrary wired or wireless communication devices such as a modem, a LAN interface, a USB (Universal Serial Bus), Bluetooth (registered trademark), and the like are connected to the input and output interface 910. The communication unit 914 performs communication processes with another communication device via a network including, for example, the Internet.
In addition, a drive 915 is connected to the input and output interface 910 as necessary. In the drive 915, a removable medium 921 such as a magnetic disk, an optical disc, a magneto-optical disc, or a semiconductor memory is appropriately loaded. The drive 915 reads a computer program, data, and the like from the removable medium 921 loaded therein under, for example, control of the CPU 901. The read data or computer program is supplied to, for example, the RAM 903. In addition, the computer program read from the removable medium 921 is installed in the storage unit 913 as necessary.
In the case where the above-described series of processes is performed based on software, the program included in the software is installed over a network or from a storage medium.

The recording medium may be configured using the removable medium 921 illustrated in FIG. 49 that is composed of a magnetic disk (including a flexible disk), an optical disc (including a CD-ROM (Compact Disc-Read Only Memory) and a DVD (Digital Versatile Disc)), a magneto-optical disc (including an MD (Mini Disc)), or a semiconductor memory, which is distributed to provide a program to a user and has a recorded program, separate from a device main body, and may be configured using a hard disk that is included in the ROM 902 provided to the user in a state embedded in the device main body in advance having a recorded program or the storage unit 913.

It should be noted that the program executed by the computer may be a program that is processed in time series according to the sequence described in this specification or a program that is processed in parallel or at a necessary timing such as upon calling.

It should be also noted that, in this specification, the steps describing the program recorded in the recording medium include not only a process performed in time series according to the sequence shown therein but also a process executed in parallel or individually, not necessarily performed in time series.

Further, in this specification, "system" refers to a whole device composed of a plurality of devices (apparatuses).

Further, an element described as a single device (or processing unit) above may be divided so as to be configured as a plurality of devices (or processing units). On the contrary, elements described as a plurality of devices (or processing units) above may be configured collectively as a single device (or processing unit). Further, an element other than those described above may be added to each device (or processing unit). Furthermore, a part of an element of a given device (or processing unit) may be included in an element of another device (or another processing unit) as long as the configuration or operation thereof as a whole system is substantially the same. In other words, an embodiment of the technology is not limited to the embodiments described above, and various changes and modifications may be made without departing from the scope of the present technology.

Additionally, the present technology may also be configured as below.

(1) An image processing device including:

a transform unit configured to transform a coding parameter used in coding of a first image into a coding parameter of a second image which is different from the first image and is of substantially the same time as the first image; and
a second-image coding unit configured to code the second image using the coding parameter of the second image obtained through the transform by the transform unit.

(2) The image processing device according to (1), wherein the coding parameter includes one or two or more of a GMV (Global Motion Vector), a rate control parameter, a motion vector, and an intra-prediction mode.

(3) The image processing device according to (2), wherein, in a case in which the coding parameter includes the rate control parameter, the rate control parameter is a target bit or a delta Q value.

(4) The image processing device according to (2) or (3), wherein, in a case in which the coding parameter is the intra-prediction mode, the transform unit shifts the intra-prediction mode.

(5) The image processing device according to any one of (2) to (4), wherein, in a case in which the coding parameter is the intra-prediction mode, the transform unit limits candidate prediction directions for an intra-prediction mode of the second image according to the intra-prediction mode of the first image.

(6) The image processing device according to any one of (2) to (5), wherein, in a case in which the coding parameter is the intra-prediction mode, the transform unit processes the intra-prediction mode only for some blocks.

(7) The image processing device according to any one of (1) to (6), wherein the coding unit codes a plurality of images in a time division scheme.

(8) The image processing device according to any one of (1) to (7), further including:

a first image coding unit configured to code the first image.

(9) The image processing device according to any one of (1) to (8), further including:

an eliciting unit configured to elicit a coding parameter of the first image,
wherein the transform unit transforms the coding parameter of the first image elicited by the eliciting unit into the coding parameter of the second image.

(10) The image processing device according to (9), wherein the transform unit transforms the coding parameter of the first image elicited by the eliciting unit into the coding parameter of the second image of the same timing as the timing at which the first image is elicited.

(11) The image processing device according to any one of (1) to (10),
wherein the transform units and the coding units are each included for a plurality of images other than the first image,
wherein each transform unit transforms the coding parameter of the first image into a coding parameter of each image corresponding to each transform unit, and
wherein each coding unit codes each image corresponding to each coding unit using the coding parameter of the image.
(12) The image processing device according to any one of (1) to (11), wherein the transform unit transforms the coding parameter using image information of the first image and image information of the second image.
(13) The image processing device according to (12),
wherein the image information is an angle of view, and
wherein the transform unit transforms the coding parameter using a ratio of the angles of view of the first image and the second image.
(14) The image processing device according to (12) or (13),
wherein the image information is an image size, and
wherein the transform unit transforms the coding parameter using a ratio of the image sizes of the first image and the second image.
(15) The image processing device according to any one of (12) to (14),
wherein the image information is a frame rate, and
wherein the transform unit transforms the coding parameter using a ratio of the frame rates of the first image and the second image.
(16) The image processing device according to any one of (12) to (15),
wherein the image information is a bit rate, and
wherein the transform unit transforms the coding parameter using a ratio of the bit rates of the first image and the second image.
(17) The image processing device according to any one of (12) to (16), further including:

a first image information acquisition unit configured to acquire the image information of the first image; and
a second image information acquisition unit configured to acquire the image information of the second image.

(18) The image processing device according to any one of (12) to (17), further including:

an image information acquisition unit configured to acquire the image information of the first image and the image information of the second image in a time division scheme.

(19) An image processing method of an image processing device, including:

transforming, by a transform unit, a coding parameter used in coding of a first image into a coding parameter of a second image which is different from the first image and is of substantially the same time as the first image; and
coding, by a second-image coding unit, the second image using the coding parameter of the second image obtained through the transforming.

(20) A computer-readable recording medium on which a program is recorded, the program for causing a computer to function as:

a transform unit configured to transform a coding parameter used in coding of a first image into a coding parameter of a second image which is different from the first image and is of substantially the same time as the first image; and
a second-image coding unit configured to code the second image using the coding parameter of the second image obtained through the transform by the transform unit.

Reference Signs List

100      image coding device,
111      image information acquisition unit
111-1    first image information acquisition unit
111-2    second image information acquisition unit

| | |
|---|---|
| 112 | coding unit |
| 112-1 | first coding unit |
| 112-2 | second coding unit |
| 121-1 | coding parameter eliciting unit |
| 121-2 | coding parameter transform unit |
| 171 | GMV eliciting unit |
| 172 | GMV transform unit |
| 202 | rate control parameter eliciting unit |
| 212 | rate control parameter transform unit |
| 302 | MV eliciting unit |
| 312 | MV transform unit |
| 351 | MV adjustment unit |
| 402 | intra-prediction mode eliciting unit |
| 412 | intra-prediction mode transform unit |
| 421 | shift amount computation unit |
| 422 | intra-prediction mode computation unit |
| 500 | image decoding device |
| 501 | decoding unit |
| 501-1 | first decoding unit |
| 501-2 | second decoding unit |
| 502-1 | coding parameter extraction unit |
| 502-2 | coding parameter transform unit |
| 572 | intra-prediction mode extraction unit |
| 582 | intra-prediction mode transform unit |

**Claims**

1. An image processing device comprising:

   a transform unit configured to transform a coding parameter used in coding of a first image into a coding parameter of a second image which is different from the first image and is of substantially the same time as the first image; and
   a second-image coding unit configured to code the second image using the coding parameter of the second image obtained through the transform by the transform unit.

2. The image processing device according to claim 1, wherein the coding parameter includes one or two or more of a GMV (Global Motion Vector), a rate control parameter, a motion vector, and an intra-prediction mode.

3. The image processing device according to claim 2, wherein, in a case in which the coding parameter includes the rate control parameter, the rate control parameter is a target bit or a delta Q value.

4. The image processing device according to claim 2, wherein, in a case in which the coding parameter is the intra-prediction mode, the transform unit shifts the intra-prediction mode.

5. The image processing device according to claim 2, wherein, in a case in which the coding parameter is the intra-prediction mode, the transform unit limits candidate prediction directions for an intra-prediction mode of the second image according to the intra-prediction mode of the first image.

6. The image processing device according to claim 2, wherein, in a case in which the coding parameter is the intra-prediction mode, the transform unit processes the intra-prediction mode only for some blocks.

7. The image processing device according to claim 1, wherein the coding unit codes a plurality of images in a time division scheme.

8. The image processing device according to claim 1, further comprising:

   a first image coding unit configured to code the first image.

9. The image processing device according to claim 1, further comprising:

an eliciting unit configured to elicit a coding parameter of the first image,
wherein the transform unit transforms the coding parameter of the first image elicited by the eliciting unit into the coding parameter of the second image.

10. The image processing device according to claim 9, wherein the transform unit transforms the coding parameter of the first image elicited by the eliciting unit into the coding parameter of the second image of the same timing as the timing at which the first image is elicited.

11. The image processing device according to claim 1,
wherein the transform units and the coding units are each included for a plurality of images other than the first image,
wherein each transform unit transforms the coding parameter of the first image into a coding parameter of each image corresponding to each transform unit, and
wherein each coding unit codes each image corresponding to each coding unit using the coding parameter of the image.

12. The image processing device according to claim 1, wherein the transform unit transforms the coding parameter using image information of the first image and image information of the second image.

13. The image processing device according to claim 12,
wherein the image information is an angle of view, and
wherein the transform unit transforms the coding parameter using a ratio of the angles of view of the first image and the second image.

14. The image processing device according to claim 12,
wherein the image information is an image size, and
wherein the transform unit transforms the coding parameter using a ratio of the image sizes of the first image and the second image.

15. The image processing device according to claim 12,
wherein the image information is a frame rate, and
wherein the transform unit transforms the coding parameter using a ratio of the frame rates of the first image and the second image.

16. The image processing device according to claim 12,
wherein the image information is a bit rate, and
wherein the transform unit transforms the coding parameter using a ratio of the bit rates of the first image and the second image.

17. The image processing device according to claim 12, further comprising:

a first image information acquisition unit configured to acquire the image information of the first image; and
a second image information acquisition unit configured to acquire the image information of the second image.

18. The image processing device according to claim 12, further comprising:

an image information acquisition unit configured to acquire the image information of the first image and the image information of the second image in a time division scheme.

19. An image processing method of an image processing device, comprising:

transforming, by a transform unit, a coding parameter used in coding of a first image into a coding parameter of a second image which is different from the first image and is of substantially the same time as the first image; and
coding, by a second-image coding unit, the second image using the coding parameter of the second image obtained through the transforming.

20. A computer-readable recording medium on which a program is recorded, the program for causing a computer to function as:

a transform unit configured to transform a coding parameter used in coding of a first image into a coding parameter of a second image which is different from the first image and is of substantially the same time as the first image; and
a second-image coding unit configured to code the second image using the coding parameter of the second image obtained through the transform by the transform unit.

# FIG.1

FIRST IMAGE → 

**FIRST CODING UNIT** (11)

CODING PARAMETER ELICITING UNIT (21)

→ FIRST STREAM

SECOND IMAGE →

**SECOND CODING UNIT** (12)

CODING PARAMETER ELICITING UNIT (22)

→ SECOND STREAM

10

EP 2 833 634 A1

# FIG.2

EP 2 833 634 A1

**FIG.3**

EP 2 833 634 A1

## FIG.4

151 A-D CONVERSION UNIT

152 SCREEN REARRANGEMENT BUFFER

153 (+ −)

154 ORTHOGONAL TRANSFORM UNIT

155 QUANTIZATION UNIT

RATE CONTROL UNIT

167

156 LOSSLESS CODING UNIT

157 ACCUMULATION BUFFER

158 INVERSE QUANTIZATION UNIT

159 INVERSE ORTHOGONAL TRANSFORM UNIT

160 (+)

161 DEBLOCKING FILTER

164 INTRA-PREDICTION UNIT

163

162 FRAME MEMORY

166 PREDICTION IMAGE SELECTION UNIT

165 MOTION PREDICTION AND COMPENSATION UNIT

171 GMV ELICITING UNIT

112-1

EP 2 833 634 A1

**FIG.5**

EP 2 833 634 A1

# FIG.6

```
    ┌─────────────────────────────────────────┐
    │   START PLURAL IMAGE CODING PROCESS      │
    └─────────────────────────────────────────┘
                        │
         ┌──────────────┼
         │              ▼
         │   ┌──────────────────────────┐
         │   │ ACQUIRE IMAGE INFORMATION│ S101
         │   └──────────────────────────┘
         │              │
         │              ▼
    NO   ╱───────────────────────────────╲ S102
    ─────   HAVE IMAGES OF ALL SYSTEMS
            BEEN PROCESSED?
         ╲───────────────────────────────╱
                        │ YES
         ┌──────────────┼
         │              ▼
         │   ┌──────────────────────────┐
         │   │  PERFORM CODING PROCESS  │ S103
         │   └──────────────────────────┘
         │              │
         │              ▼
    NO   ╱───────────────────────────────╲ S104
    ─────   HAVE IMAGES OF ALL SYSTEMS
            BEEN PROCESSED?
         ╲───────────────────────────────╱
                        │ YES
                        ▼
                 ┌────────────┐
                 │    END     │
                 └────────────┘
```

# FIG.7

START CODING PROCESS

PERFORM A-D CONVERSION — S121

PERFORM REARRANGEMENT — S122

PERFORM INTRA-PREDICTION PROCESS — S123

PERFORM INTER-MOTION PREDICTION PROCESS — S124

SELECT PREDICTION IMAGE — S125

COMPUTE DIFFERENCE BETWEEN IMAGE AND PREDICTION IMAGE — S126

PERFORM ORTHOGONAL TRANSFORM — S127

PERFORM QUANTIZATION — S128

PERFORM INVERSE QUANTIZATION — S129

PERFORM INVERSE ORTHOGONAL TRANSFORM — S130

PERFORM ADDITION TO PREDICTION IMAGE — S131

PERFORM DEBLOCKING FILTERING PROCESS — S132

STORE — S133

PERFORM LOSSLESS CODING PROCESS — S134

ACCUMULATE — S135

CONTROL RATE — S136

RETURN

# FIG.8

```
        ┌─────────────────────────────────────────┐
        │ START INTER-MOTION PREDICTION PROCESS    │
        └─────────────────────────────────────────┘
                          │
   ┌──────────────────────┤
   │                      ▼
   │      ┌──────────────────────────────┐
   │      │   PERFORM MOTION SEARCH       │  S151
   │      │      OF FIRST IMAGE           │
   │      └──────────────────────────────┘
   │                      │
   │                      ▼
   │      ┌──────────────────────────────┐
   │      │ PERFORM COMPENSATION PROCESS  │  S152
   │      │    FOR REFERENCE IMAGE        │
   │      │    USING MOTION VECTOR        │
   │      │ AND GENERATE PREDICTION IMAGE │
   │      └──────────────────────────────┘
   │                      │
   │                      ▼
   │      ┌──────────────────────────────┐
   │      │ PERFORM GMV ELICITATION PROCESS│ S153
   │      └──────────────────────────────┘
   │                      │
   │                      ▼
   │   NO ╱─────────────────────────────────────╲  S154
   └─────┤  HAVE ALL MACROBLOCKS BEEN PROCESSED? │
         ╲─────────────────────────────────────╱
                          │ YES
                          ▼
                 ┌──────────────┐
                 │    RETURN     │
                 └──────────────┘
```

# FIG.9

START GMV ELICITATION PROCESS

S161 FIRST MB WITHIN PICTURE? NO

YES

S162 INITIALIZE HISTOGRAM FOR MV COLLECTION

S163 COLLECT MV OF MB BEING PROCESSED AND UPDATE HISTOGRAM

S164 LAST MB WITHIN PICTURE? NO

YES

S165 SEARCH FOR SPOT HAVING HIGH FREQUENCY IN HISTOGRAM AND SET SPOT AS GMV

RETURN

## FIG.10

START INTER-MOTION PREDICTION PROCESS

PERFORM GMV TRANSFORM PROCESS — S171

PERFORM MOTION SEARCH
OF SECOND IMAGE USING
TRANSFORMED GMV — S172

PERFORM COMPENSATION PROCESS
FOR REFERENCE IMAGE
USING MOTION VECTOR
AND GENERATE PREDICTION IMAGE — S173

NO — HAVE ALL MACROBLOCKS BEEN PROCESSED? — S174

YES

RETURN

## FIG.11

START GMV TRANSFORM PROCESS

FIRST MACROBLOCK WITHIN PICTURE? — S181

YES / NO

TRANSFORM SUPPLIED GMV
INTO GMV OF IMAGE BEING PROCESSED — S182

RETURN

# FIG.12

# FIG.13

SUBJECT

FIRST IMAGE

SECOND IMAGE

A

SUBJECT

FIRST IMAGE

SECOND IMAGE

B

# FIG.14

APPLY

FIRST IMAGE

ELICIT GMV    ELICIT GMV

ELICIT GMV    M    M+1    M+2

APPLY

SECOND IMAGE    TRANSFORM GMV

M    M+2

A

SUBJECT

FIRST IMAGE

SECOND IMAGE

B

**FIG.15**

EP 2 833 634 A1

# FIG.16

# FIG.17

```
    ( START CODING PROCESS )
                │
┌───────────────────────────────┐
│    PERFORM A-D CONVERSION      │ S201
└───────────────────────────────┘
                │
┌───────────────────────────────┐
│    PERFORM REARRANGEMENT       │ S202
└───────────────────────────────┘
                │
┌───────────────────────────────┐
│  PERFORM INTRA-PREDICTION PROCESS │ S203
└───────────────────────────────┘
                │
┌───────────────────────────────┐
│ PERFORM INTER-MOTION PREDICTION PROCESS │ S204
└───────────────────────────────┘
                │
┌───────────────────────────────┐
│    SELECT PREDICTION IMAGE     │ S205
└───────────────────────────────┘
                │
┌───────────────────────────────┐
│ COMPUTE DIFFERENCE BETWEEN IMAGE │ S206
│       AND PREDICTION IMAGE       │
└───────────────────────────────┘
                │
┌───────────────────────────────┐
│   PERFORM ORTHOGONAL TRANSFORM  │ S207
└───────────────────────────────┘
                │
┌───────────────────────────────┐
│      PERFORM QUANTIZATION       │ S208
└───────────────────────────────┘
                │
┌───────────────────────────────┐
│  PERFORM INVERSE QUANTIZATION   │ S209
└───────────────────────────────┘
                │
┌───────────────────────────────┐
│ PERFORM INVERSE ORTHOGONAL TRANSFORM │ S210
└───────────────────────────────┘
                │
┌───────────────────────────────┐
│ PERFORM ADDITION TO PREDICTION IMAGE │ S211
└───────────────────────────────┘
                │
┌───────────────────────────────┐
│ PERFORM DEBLOCKING FILTERING PROCESS │ S212
└───────────────────────────────┘
                │
┌───────────────────────────────┐
│            STORE               │ S213
└───────────────────────────────┘
                │
┌───────────────────────────────┐
│  PERFORM LOSSLESS CODING PROCESS │ S214
└───────────────────────────────┘
                │
┌───────────────────────────────┐
│          ACCUMULATE            │ S215
└───────────────────────────────┘
                │
┌───────────────────────────────┐
│         CONTROL RATE           │ S216
└───────────────────────────────┘
                │
          (   RETURN   )
```

# FIG.18

START RATE CONTROL PROCESS

FIRST MACROBLOCK WITHIN PICTURE? — S231 — NO

YES

OBTAIN TARGET BIT OF PICTURE UNIT — S232

INITIALIZE AMOUNT OF GENERATED BITS OF PICTURE UNIT — S233

OBTAIN Q VALUE OF MACROBLOCK BEING PROCESSED — S234

ADD AMOUNT OF GENERATED BITS OF MACROBLOCK BEING PROCESSED TO AMOUNT OF GENERATED BITS OF PICTURE UNIT — S235

LAST MACROBLOCK WITHIN PICTURE? — S236 — NO

YES

OBTAIN AMOUNT OF BITS GENERATED IN PICTURE — S237

RETURN

# FIG.19

START RATE CONTROL PROCESS

FIRST MACROBLOCK WITHIN PICTURE? — S241 — NO

YES

TRANSFORM SUPPLIED TARGET BIT
INTO TARGET BIT OF IMAGE BEING PROCESSED — S242

INITIALIZE AMOUNT OF GENERATED BITS OF PICTURE UNIT — S243

OBTAIN Q VALUE OF MACROBLOCK BEING PROCESSED — S244

ADD AMOUNT OF GENERATED BITS OF MACROBLOCK
BEING PROCESSED TO AMOUNT OF GENERATED BITS
OF PICTURE UNIT — S245

LAST MACROBLOCK WITHIN PICTURE? — S246 — NO

YES

OBTAIN AMOUNT OF BITS GENERATED IN PICTURE — S247

RETURN

# FIG.20

START RATE CONTROL PROCESS

FIRST MACROBLOCK WITHIN PICTURE? — S251

NO

YES

OBTAIN TARGET BIT OF PICTURE UNIT — S252

INITIALIZE AMOUNT OF GENERATED BITS OF PICTURE UNIT — S253

TRANSFORM Q VALUE OF EACH SUPPLIED MACROBLOCK
INTO Q VALUE OF MACROBLOCK BEING PROCESSED
OF IMAGE BEING PROCESSED — S254

ADD AMOUNT OF GENERATED BITS
OF MACROBLOCK BEING PROCESSED TO AMOUNT
OF GENERATED BITS OF PICTURE UNIT — S255

LAST MACROBLOCK WITHIN PICTURE? — S256

NO

YES

OBTAIN AMOUNT OF BITS GENERATED IN PICTURE — S257

RETURN

# FIG.21

START RATE CONTROL PROCESS

FIRST MACROBLOCK WITHIN PICTURE? S261

NO

YES

TRANSFORM SUPPLIED TARGET BIT INTO TARGET BIT OF IMAGE BEING PROCESSED USING SUPPLIED AMOUNT OF GENERATED BITS S262

INITIALIZE AMOUNT OF GENERATED BITS OF PICTURE UNIT S263

OBTAIN Q VALUE OF MACROBLOCK BEING PROCESSED S264

ADD AMOUNT OF GENERATED BITS OF MACROBLOCK BEING PROCESSED TO AMOUNT OF GENERATED BITS OF PICTURE UNIT S265

LAST MACROBLOCK WITHIN PICTURE? S266

NO

YES

OBTAIN AMOUNT OF BITS GENERATED IN PICTURE S267

RETURN

# FIG.22

ELICIT RATE CONTROL PARAMETER

APPLY

FIRST IMAGE

M  M+1  M+2

ELICIT RATE CONTROL PARAMETER

APPLY

SECOND IMAGE

M  M+1  M+2

A

ELICIT RATE CONTROL          ELICIT RATE CONTROL
PARAMETER                    PARAMETER

APPLY          APPLY

FIRST IMAGE

M  M+1  M+2

TRANSFORM
RATE
CONTROL
PARAMETER

SECOND IMAGE

M  M+1  M+2

B

**FIG.23**

EP 2 833 634 A1

# FIG.24

EP 2 833 634 A1

FIG.25

**FIG.26**

EP 2 833 634 A1

# FIG.27

START INTER-MOTION PREDICTION PROCESS

PERFORM MOTION SEARCH OF FIRST IMAGE ⎮ S301

PERFORM COMPENSATION PROCESS
FOR REFERENCE IMAGE USING MOTION VECTOR
AND GENERATE PREDICTION IMAGE ⎮ S302

NO HAVE ALL MACROBLOCKS BEEN PROCESSED? S303

YES

RETURN

# FIG.28

```
START MOTION VECTOR SEARCH PROCESS
```

CREATE REDUCED IMAGE OF ORIGINAL IMAGE    S321

CREATE REDUCED IMAGE OF REFERENCE IMAGE    S322

PERFORM FIRST STAGE REDUCED IMAGE
INTEGER ACCURACY MOTION VECTOR SEARCH    S323

PERFORM SECOND STAGE NON-REDUCED IMAGE
INTEGER ACCURACY MOTION VECTOR SEARCH    S324

PERFORM FRACTION ACCURACY
MOTION VECTOR SEARCH    S325

SUPPLY FRACTION ACCURACY MOTION VECTOR    S326

```
RETURN
```

# FIG.29

START INTER-MOTION PREDICTION PROCESS

PERFORM MOTION SEARCH
OF SECOND IMAGE USING SUPPLIED MV    S341

PERFORM COMPENSATION PROCESS
FOR REFERENCE IMAGE USING MOTION VECTOR
AND GENERATE PREDICTION IMAGE    S342

NO    HAVE ALL MACROBLOCKS BEEN PROCESSED?    S343

YES

RETURN

# FIG.30

```
     ┌─────────────────────────────────────────────┐
     │    START MOTION VECTOR SEARCH PROCESS        │
     └─────────────────────────────────────────────┘
                        │
                        ▼
     ┌─────────────────────────────────────┐  S361
     │      ACQUIRE FRACTION ACCURACY       │
     │           MOTION VECTOR              │
     └─────────────────────────────────────┘
                        │
                        ▼
     ┌─────────────────────────────────────┐  S362
     │     ADJUST MOTION VECTOR BASED       │
     │      ON IMAGE INFORMATION ETC.       │
     └─────────────────────────────────────┘
                        │
                        ▼
     ┌─────────────────────────────────────┐  S363
     │        PERFORM SECOND STAGE          │
     │  NON-REDUCED IMAGE INTEGER ACCURACY  │
     │         MOTION VECTOR SEARCH         │
     └─────────────────────────────────────┘
                        │
                        ▼
     ┌─────────────────────────────────────┐  S364
     │      PERFORM FRACTION ACCURACY       │
     │           MOTION VECTOR SEARCH       │
     └─────────────────────────────────────┘
                        │
                        ▼
               ┌──────────────┐
               │    RETURN     │
               └──────────────┘
```

# FIG.31

EP 2 833 634 A1

FIG.32

# FIG.33

EP 2 833 634 A1

# FIG.34

Lch

| H | H | H | DC | DC | DC | DC |
|---|---|---|----|----|----|----|
| DC | V | DC | DC | VR | V | V |
| V | V | DC | HD | DC | DDL | H |
| VR | VR | HU | HU | HU | H | HD |
| DC | VR | VR | V | DC | H | DDR |

Rch

| H | H | DC | DC | DC | DC | H |
|---|---|----|----|----|----|---|
| V | DC | DC | VR | V | V | V |
| V | DC | HD | H | H | H | VL |
| VR | V | HU | HU | H | HD | DDR |
| VR | VR | V | DC | H | DDR | DDR |

A

B

| H | H | DC | DC | DC | DC | DC |
|---|---|----|----|----|----|----|
| V | DC | DC | VR | V | V | DC |
| V | DC | HD | DC | DDL | H | DC |
| VR | HU | HU | HU | H | HD | DC |
| VR | VR | V | DC | H | DDR | DC |

C

# FIG.35

```
START CODING PROCESS
        ↓
PERFORM A-D CONVERSION          S401
        ↓
PERFORM REARRANGEMENT           S402
        ↓
PERFORM INTRA-PREDICTION PROCESS  S403
        ↓
PERFORM INTER-MOTION            S404
PREDICTION PROCESS
        ↓
SELECT PREDICTION IMAGE         S405
        ↓
COMPUTE DIFFERENCE BETWEEN IMAGE  S406
AND PREDICTION IMAGE
        ↓
PERFORM ORTHOGONAL TRANSFORM    S407
        ↓
PERFORM QUANTIZATION            S408
        ↓
PERFORM INVERSE QUANTIZATION    S409
        ↓
PERFORM INVERSE                 S410
ORTHOGONAL TRANSFORM
        ↓
PERFORM ADDITION TO PREDICTION IMAGE  S411
        ↓
PERFORM DEBLOCKING FILTERING PROCESS  S412
        ↓
STORE                           S413
        ↓
PERFORM LOSSLESS CODING PROCESS  S414
        ↓
ACCUMULATE                      S415
        ↓
CONTROL RATE                    S416
        ↓
RETURN
```

## FIG.36

START INTRA-PREDICTION PROCESS

↓

ELICIT INTRA-PREDICTION MODE — S421

↓

GENERATE PREDICTION IMAGE IN ELICITED INTRA-PREDICTION MODE — S422

↓

SUPPLY INTRA-PREDICTION MODE — S423

↓

RETURN

## FIG.37

START INTRA-PREDICTION PROCESS

↓

ACQUIRE INTRA-PREDICTION MODE — S431

↓

PERFORM INTRA-PREDICTION MODE TRANSFORM PROCESS — S432

↓

GENERATE PREDICTION IMAGE IN TRANSFORMED INTRA-PREDICTION MODE — S433

↓

RETURN

# FIG.38

```
        ( START INTRA-TRANSFORM PROCESS )
                      │
                      ▼
        ┌─────────────────────────────┐  S441
        │   SHIFT SUPPLIED INTRA-PREDICTION │
        │   MODE BY PREDETERMINED NUMBER   │
        │   OF BLOCKS IN HORIZONTAL DIRECTION │
        └─────────────────────────────┘
                      │
                      ▼
         ╱─────────────────────────────╲  S442
        ╱  IS THERE SHIFTED INTRA-PREDICTION MODE ╲      NO
        ╲  IN MACROBLOCK BEING PROCESSED?         ╱ ─────┐
         ╲─────────────────────────────╱              │
                      │ YES                             │
                      ▼                                 │
        ┌─────────────────────────────┐  S443          │
        │   SET SHIFTED INTRA-PREDICTION │                │
        │   MODE TO BE INTRA-PREDICTION  │                │
        │   MODE OF MACROBLOCK BEING PROCESSED │          │
        └─────────────────────────────┘                │
                      │                                 ▼
                      │              ┌───────────────────────────┐ S444
                      │              │ ELICIT INTRA-PREDICTION MODE │
                      │              └───────────────────────────┘
                      │                        │
                      ▼◄───────────────────────┘
                 ( RETURN )
```

# FIG.39

```
┌─────────────────────────────────────┐
│     START INTRA-TRANSFORM PROCESS     │
└─────────────────────────────────────┘
                   │
                   ▼
┌─────────────────────────────────────┐  S451
│       ACQUIRE CAMERA INFORMATION      │
└─────────────────────────────────────┘
                   │
                   ▼
┌─────────────────────────────────────┐  S452
│          DECIDE SHIFT AMOUNT          │
└─────────────────────────────────────┘
                   │
                   ▼
┌─────────────────────────────────────┐  S453
│       SHIFT SUPPLIED INTRA-PREDICTION │
│  MODE BY SHIFT AMOUNT IN HORIZONTAL DIRECTION │
└─────────────────────────────────────┘
                   │
                   ▼
          IS THERE SHIFTED INTRA-PREDICTION    S454
     MODE IN MACROBLOCK BEING PROCESSED?   ──── NO
                   │ YES
                   ▼
┌─────────────────────────────────────┐  S455
│      SET SHIFTED INTRA-PREDICTION     │
│      MODE TO BE INTRA-PREDICTION      │
│  MODE OF MACROBLOCK BEING PROCESSED   │
└─────────────────────────────────────┘
                   │
                   │        ┌──────────────────────────┐  S456
                   │        │  ELICIT INTRA-PREDICTION MODE │
                   │        └──────────────────────────┘
                   ▼
           ┌──────────────┐
           │    RETURN     │
           └──────────────┘
```

70

# FIG.40

START INTRA-TRANSFORM PROCESS

ELICIT INTRA-PREDICTION MODE  S461

DECIDE SHIFT AMOUNT  S462

SHIFT SUPPLIED INTRA-PREDICTION MODE BY SHIFT AMOUNT IN HORIZONTAL DIRECTION  S463

IS THERE SHIFTED INTRA-PREDICTION MODE IN MACROBLOCK BEING PROCESSED?  S464

NO

YES

SET SHIFTED INTRA-PREDICTION MODE TO BE INTRA-PREDICTION MODE OF MACROBLOCK BEING PROCESSED  S465

ELICIT INTRA-PREDICTION MODE  S466

RETURN

# FIG.41

START INTRA-TRANSFORM PROCESS

LIMIT PREDICTION MODES
ACCORDING TO SUPPLIED INTRA-PREDICTION MODE

S471

ELICIT INTRA-PREDICTION
MODE FROM LIMITED PREDICTION MODES

S472

RETURN

## FIG.42

```
( START INTRA-TRANSFORM PROCESS )
              │
              ▼
         ┌─────────────┐   S481
        ◁  TO BE SHIFTED? ▷──── NO ──────────┐
         └─────────────┘                     │
              │ YES                          │
              ▼                              │
    ┌──────────────────────┐  S482           │
    │   DECIDE SHIFT AMOUNT │                 │
    └──────────────────────┘                 │
              │                              │
              ▼                              │
    ┌──────────────────────┐  S483           │
    │ SHIFT SUPPLIED INTRA-PREDICTION         │
    │   MODE BY SHIFT AMOUNT                   │
    │   IN HORIZONTAL DIRECTION │             │
    └──────────────────────┘                 │
              │                              │
              ▼                              │
        ┌──────────────────┐  S484           │
       ◁ IS THERE SHIFTED INTRA-PREDICTION   │
         MODE IN MACROBLOCK BEING PROCESSED? ▷─ NO ─┐
        └──────────────────┘                 │     │
              │ YES                          │     │
              ▼        S485                   │     ▼
    ┌──────────────────────┐           ┌──────────────────┐  S486
    │ SET SHIFTED INTRA-PREDICTION      │ ELICIT INTRA-PREDICTION │
    │ MODE TO BE INTRA-PREDICTION       │       MODE       │
    │ MODE OF MACROBLOCK BEING PROCESSED│└──────────────────┘
    └──────────────────────┘                      │
              │                                   │
              │                          ┌────────────────────┐  S487
              │                          │ LIMIT PREDICTION MODES │
              │                          │ ACCORDING TO SUPPLIED  │
              │                          │ INTRA-PREDICTION MODE  │
              │                          └────────────────────┘
              │                                   │
              │                          ┌────────────────────┐  S488
              │                          │ ELICIT INTRA-PREDICTION │
              │                          │ MODE FROM LIMITED      │
              │                          │ PREDICTION MODES       │
              │                          └────────────────────┘
              │                                   │
              ▼───────────────────────────────────┘
         ( RETURN )
```

## FIG.43

FIRST STREAM → FIRST DECODING UNIT [501-1] / CODING PARAMETER EXTRACTION UNIT [502-1] → FIRST IMAGE

SECOND STREAM → SECOND DECODING UNIT [501-2] / CODING PARAMETER TRANSFORM UNIT [502-2] → SECOND IMAGE

DECODING UNIT 501

500

EP 2 833 634 A1

# FIG.44

# FIG.45

EP 2 833 634 A1

# FIG.46

```
    ┌─────────────────────────────────────────────┐
    │   START PLURAL IMAGE DECODING PROCESS        │
    └─────────────────────────────────────────────┘
                         │
    ┌────────────────────┼───────────────────────┐
    │                    ▼                        │
    │          ┌──────────────────────┐           │
    │          │ PERFORM DECODING PROCESS │  S501  │
    │          └──────────────────────┘           │
    │                    │                        │
    │                    ▼                        │
    NO          HAVE BIT STREAMS          S502     │
    └─────── OF ALL SYSTEMS BEEN PROCESSED? ───────┘
                         │
                        YES
                         ▼
                  ┌─────────────┐
                  │     END     │
                  └─────────────┘
```

# FIG.47

```
( START DECODING PROCESS )
          │
          ▼
┌─────────────────────────────┐
│      ACCUMULATE IMAGE       │ S521
└─────────────────────────────┘
          │
          ▼
┌─────────────────────────────┐
│ PERFORM LOSSLESS DECODING PROCESS │ S522
└─────────────────────────────┘
          │
          ▼
┌─────────────────────────────┐
│  PERFORM INVERSE QUANTIZATION │ S523
└─────────────────────────────┘
          │
          ▼
┌─────────────────────────────┐
│        PERFORM INVERSE       │ S524
│     ORTHOGONAL TRANSFORM     │
└─────────────────────────────┘
          │
          ▼
┌─────────────────────────────┐
│ PERFORM ADDITION TO PREDICTION IMAGE │ S525
└─────────────────────────────┘
          │
          ▼
┌─────────────────────────────┐
│ PERFORM DEBLOCKING FILTERING PROCESS │ S526
└─────────────────────────────┘
          │
          ▼
┌─────────────────────────────┐
│            STORE            │ S527
└─────────────────────────────┘
          │
          ▼
┌─────────────────────────────┐
│   PERFORM PREDICTION PROCESS │ S528
└─────────────────────────────┘
          │
          ▼
┌─────────────────────────────┐
│    SELECT PREDICTION IMAGE   │ S529
└─────────────────────────────┘
          │
          ▼
┌─────────────────────────────┐
│    PERFORM REARRANGEMENT     │ S530
└─────────────────────────────┘
          │
          ▼
┌─────────────────────────────┐
│   PERFORM D-A CONVERSION     │ S531
└─────────────────────────────┘
          │
          ▼
       ( RETURN )
```

# FIG.48

START PREDICTION PROCESS

HAS INTRA-CODING BEEN PERFORMED? S551

NO

YES

PERFORM INTRA-PREDICTION PROCESS S552

ACQUIRE MOTION PREDICTION MODE, REFERENCE FRAME, AND DIFFERENTIAL MOTION VECTOR INFORMATION S553

DECODE MOTION VECTOR INFORMATION IN DESIGNATED MODE S554

GENERATE INTER-PREDICTION IMAGE S555

RETURN

# FIG.49

## INTERNATIONAL SEARCH REPORT

| International application No. |
| --- |
| PCT/JP2013/057993 |

| A. CLASSIFICATION OF SUBJECT MATTER |
| --- |
| *H04N7/32*(2006.01)i, *H04N13/04*(2006.01)i |

According to International Patent Classification (IPC) or to both national classification and IPC

| B. FIELDS SEARCHED |
| --- |

Minimum documentation searched (classification system followed by classification symbols)
H04N7/32, H04N13/04

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br><br>A | JP 2010-515400 A  (Samsung Electronics Co., Ltd.),<br>06 May 2010 (06.05.2010),<br>paragraphs [0031] to [0084]; fig. 1A to 10<br>& US 2008-0159638 A1    & US 2012-0201474 A1<br>& EP 002103143 A        & WO 2008/082253 A1<br>& KR 10-0823287 B1      & KR 10-2008-0064078 A<br>& CN 101578881 A | 1,2,4-6,9,<br>10,12,17,19,<br>20<br>3,7,8,11,<br>13-16,18 |
| X<br><br>A | WO 2006/073116 A1  (Nippon Telegraph and Telephone Corp.),<br>13 July 2006 (13.07.2006),<br>paragraphs [0038] to [0140]; fig. 1A to 16<br>& JP 004937741 B        & US 2007-0189396 A1<br>& EP 001835747 A1       & CN 001910931 A<br>& KR 10-2007-0052692 A  & KR 10-0946790 B<br>& TWB 00I308028 | 1-10,12,13,<br>17-20<br>11,14-16 |

| ☒ Further documents are listed in the continuation of Box C. | ☐ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 June, 2013 (10.06.13) | 18 June, 2013 (18.06.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/057993

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2012-49753 A  (Panasonic Corp.),<br>08 March 2012 (08.03.2012),<br>paragraphs [0013] to [0032]; fig. 1 to 4<br>(Family: none) | 1,2,11,19,20<br>3-10,12-18 |

Form PCT/ISA/210 (continuation of second sheet) (July 2009)

**EP 2 833 634 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011216965 A